# EUROPEAN PATENT SPECIFICATION

(11) **EP 3 566 929 B1**
(45) Date of publication and mention of the grant of the patent: **04.08.2021**
(21) Application number: 19172802.1
(22) Date of filing: 06.05.2019
(51) Int. Cl.: B62D 5/04, B62D 6/00, B62D 15/02

(54) **ANGLE COMPUTING DEVICE AND COMPUTING DEVICE**
WINKELBERECHNUNGSVORRICHTUNG UND BERECHNUNGSVORRICHTUNG
DISPOSITIF DE CALCUL D'ANGLE ET DISPOSITIF DE CALCUL

(30) Priority: 09.05.2018 JP 2018090793; 17.05.2018 JP 2018095440; 22.05.2018 JP 2018098088; 08.06.2018 JP 2018110397; 28.09.2018 JP 2018184165
(43) Date of publication of application: 13.11.2019
(73) Proprietor: JTEKT CORPORATION, Osaka-shi, Osaka 542-8502 (JP)
(72) Inventor: KOIKE, Susumu, Osaka-shi, Osaka 542-8502 (JP); ADACHI, Takehide, Osaka-shi, Osaka 542-8502 (JP)
(74) Representative: Winter, Brandl - Partnerschaft mbB

(56) References cited:
- EP-A1- 2 517 947
- EP-A1- 2 960 141
- EP-A1- 3 076 135
- US-A1- 2015 239 501

## Description

### BACKGROUND OF THE INVENTION

### 1. Field of the Invention

The invention relates to an angle computing device. The invention relates to a computing device that computes rotation information for detecting a rotation angle.

### 2. Description of Related Art

An angle computing device described in Japanese Patent No. 5389101 includes a microcomputer, and the microcomputer functions as a primary computing means and a secondary computing means. The angle computing device controls a motor using the primary computing means when an ignition switch is turned on, and stops control of the motor using the primary computing means when the ignition switch is turned off. When the ignition switch is on, the primary computing means computes a rotation angle of the motor based on a motor rotation angle signal detected by a resolver and controls the motor based on the computed rotation angle. Even when the ignition switch is off, a steering wheel may be operated to rotate. In this case, the rotation angle of the motor changes. Therefore, when the ignition switch is off, computation of the rotation angle by the primary computing means is stopped and computation of the rotation angle of the motor by the secondary computing means is continued. Accordingly, the angle computing device described in Japanese Patent No. 5389101 monitors the change of the rotation angle of the motor when the ignition switch is off.

There is demand for reducing electric power of a battery which is consumed by the angle computing device. In the angle computing device described in Japanese Patent No. 5389101, since the microcomputer operates to function as the secondary computing means such that computation of the rotation angle is continued even when the ignition switch is off, there is room for improvement in reducing power consumption of the angle computing device.

There has been a steering system such as an electric power steering system (EPS) in which an assist force for assisting steering is applied using a motor as a drive source, and which includes a rotation angle detecting device that detects a steering angle of a steering wheel as an absolute angle including a range greater than 360°. For example, a rotation angle detecting device that detects a steering angle based on a rotation angle of a motor which is detected as a relative angle in a range of 360° and the number of turns of the motor from a neutral steering position is known (for example, Japanese Unexamined Patent Application Publication No. 2016-5918 (JP 2016-5918 A)).

The rotation angle detecting device described in JP 2016-5918 A includes a computing device. The computing device detects in which of four quadrants (first to fourth quadrants) a rotation angle of the motor is located based on a detection signal from a rotation angle sensor that detects a rotation angle of the motor. A rotation range is divided into the four quadrants. The computing device detects a rotation direction of the motor based on the change of the quadrant in which the rotation angle is located, and counts a count value indicating the number of turns of the motor. A steering angle computing device (a microcomputer) detects a steering angle which is expressed in an absolute angle based on the rotation angle and the count value of the motor which are output from the computing device.

The rotation angle detecting device described in JP 2016-5918 A includes an abnormality detecting circuit that detects whether an abnormality has occurred in circuits of a computing device, for example, based on whether a difference between a count value in a latest computation cycle and an immediately preceding value thereof matches the rotation direction. Accordingly, it is possible to prevent occurrence of a situation where a steering angle is detected based on rotation information which is erroneously computed in a state in which an abnormality has occurred.

Recently, higher reliability has been required of rotation angle detecting devices. However, in the configuration according to the related art, when an abnormality has occurred in the abnormality detecting circuit, there is a possibility that an abnormality of rotation information computed by the computing device may not be detected and an accurate steering angle may not be detected.

Such a problem is not limited to a case where a steering angle is detected and can also be caused even in a case where a rotation angle of a rotation shaft which can be converted into a turning angle of turning wheels based on a rotation angle of a motor is detected as an absolute angle, for example, in a steer-by-wire steering system, the motor serving as a drive source of a turning actuator that turns the turning wheels.

The angle computing device described in Japanese Patent No. 5389101 includes a microcomputer, and the microcomputer functions as a primary computing means and a secondary computing means. The angle computing device operates using electric power supplied from a battery. The angle computing device controls a motor using the primary computing means when an ignition switch is turned on, and stops control of the motor using the primary computing means when the ignition switch is turned off. When the ignition switch is on, the primary computing means computes a rotation angle of the motor based on a motor rotation angle signal detected by a resolver and controls the motor based on the computed rotation angle.

In the microcomputer, a source voltage of electric power supplied thereto may be instantaneously interrupted or may drop instantaneously. In this regard, Japanese Patent No. 5389101 does not disclose any measure that should be taken when the source voltage for the microcomputer in the angle computing device is instantaneously interrupted or drops instantaneously.

Japanese Unexamined Patent Application Publication No. 2016-191702 (JP 2016-191702 A) discloses an angle computing device including a rotation detector that counts the number of turns of a motor based on a detection signal from a rotation angle sensor and a micro processing unit (MPU) that computes a rotation angle of multiple turns of the motor based on the number of turns computed by the rotation detector and the detection signal from the rotation angle sensor. The MPU computes the rotation angle of the motor as a relative angle based on the detection signal detected by the rotation angle sensor and acquires the number of turns which is computed based on the detection signal. The MPU acquires the relative angle and the number of turns in a predetermined computation cycle and computes the rotation angle of multiple turns of the motor using the relative angle and the number of turns acquired in the predetermined computation cycle. Accordingly, the MPU basically computes a rotation angle of multiple turns of the motor using the relative angle and the number of turns which are computed based on the detection signal in a predetermined computation cycle, that is, the detection signal at the same time.

Delay of transmission of various signals, deviation between processes using the signals, or the like may occur. For example, transmission of a detection signal from the rotation angle sensor to the MPU may be delayed or transmission of a signal indicating the number of turns from the rotation detector to the MPU may be delayed. For example, since circuit characteristics of the rotation detector and the MPU that perform a computing process on the detection signal are different, deviation between processes, such as delay of a process of computing the number of turns in the rotation detector or delay of a process of computing a relative angle in the MPU, may occur. In this case, the MPU computes a rotation angle of multiple turns of the motor based on the relative angle and the number of turns which are computed based on the detection signals at different times. Accordingly, the MPU may not appropriately compute the rotation angle of multiple turns of the motor.

Documents EP 3 076 135 A1, EP 2 960 141 A1, US 2015/239501 A1 and EP 2 517 947 A1 are further comprised in the state of the art. EP 3 076 135 A1 shows the features of the preamble of claim 1.

### SUMMARY OF THE INVENTION

A first aspect of the invention relates to an angle computing device including a first computing unit configured to compute a rotation angle of a motor based on a detection signal from a detection unit that detects the rotation angle of the motor, and a second computing unit configured to compute turn number information indicating the number of turns of the motor as information used to compute the rotation angle based on the detection signal from the detection unit. When a start switch of a vehicle is off, the first computing unit stops and the second computing unit computes the turn number information. When the start switch is on, the first computing unit computes the rotation angle using the turn number information that is computed by the second computing unit while the start switch is off.

With this configuration, the turn number information is information used by the first computing unit to compute the rotation angle of the motor when the start switch is on, and the second computing unit computes the turn number information instead of computing the rotation angle of the motor. Accordingly, a computation load for computing the turn number information on the motor by the second computing unit can be made less than a computation load for computing the rotation angle of the motor, and it is thus possible to reduce power consumption in the second computing unit. Accordingly, it is possible to reduce power consumption of the angle computing device when the start switch is off.

In the angle computing device according to the aspect, the second computing unit may be an application specific integrated circuit (ASIC) that outputs a predetermined output in response to a specific input and the first computing unit may be a microcomputer that reads a program stored in a storage unit and performs a computation based on the program.

The ASIC that outputs a predetermined output in response to a specific input operates when the start switch is off. The ASIC is implemented with a configuration which is simpler than the configuration of the microcomputer. Accordingly, when the start switch is off, it is possible to reduce power consumption of the angle computing device in comparison with a case where the microcomputer performs a computation based on a program.

In the angle computing device according to the aspect, in a case where the start switch is off, when rotation of the motor is detected, the second computing unit intermittently computes
the turn number information in a cycle that is shorter than a cycle in which the turn number information is computed when the rotation of the motor is not detected.

While the start switch is in the OFF state, it is necessary to achieve reduction of power consumption of the angle computing device and monitoring of rotation of the motor. Therefore, with this configuration, in a situation where there is a low likelihood that the turn number information on the motor changes such as a situation where rotation of the motor is not detected, it is possible to reduce power consumption of the angle computing device by intermittently performing a computation in a cycle that is longer than a cycle in a situation where there is a high likelihood that the turn number information on the motor changes such as a situation where rotation of the motor is detected. Accordingly, it is possible to achieve reduction of power consumption of the angle computing device and monitoring of rotation of the motor when the start switch is turned off.

In the angle computing device according to the aspect, the second computing unit may be configured to detect the rotation of the motor when a difference between a voltage value of a current detection signal detected by the detection unit and a voltage value of an immediately preceding detection signal detected by the detection unit is equal to or greater than a threshold value.

When the motor is rotating, the voltage value of the detection signal which is detected by the detection unit changes. Therefore, with this configuration, the second computing unit can detect the rotation of the motor by determining a change of the voltage value of the detection signal. Since the rotation of the motor is detected based on the fact that the difference in the voltage value is equal to or greater than the threshold value, it is possible to prevent occurrence of a situation where the motor is determined to rotate due to fine vibration (noise) in a state in which the motor does not rotate actually.

In the angle computing device according to the aspect, the second computing unit may be configured to intermittently compute the turn number information when the start switch is off and to intermittently compute the turn number information in a cycle that is longer than a cycle in which the turn number information is computed when the start switch is on.

With this configuration, when the start switch is off, the frequency with which the second computing unit computes the turn number information can be reduced, as compared to when the start switch is on. Accordingly, it is possible to reduce power consumption of the second computing unit when the start switch is off.

With the angle computing device according to the aspect of the invention, it is possible to reduce power consumption of the angle computing device when the start switch is off.

The invention also provides a computing device with high reliability.

A second aspect of the invention relates to a computing device including a primary circuit configured to compute rotation information indicating a rotational state of a rotation shaft based on a detection signal from a rotation angle sensor that detects, as a relative angle, a rotation angle of a motor connected to the rotation shaft, the rotation angle being converted into a turning angle of turning wheels; an abnormality detecting circuit configured to detect an abnormality of the primary circuit; and a built-in self-test (BIST) circuit configured to diagnose the abnormality detecting circuit.

With this configuration, it is possible to detect that an abnormality has occurred in the abnormality detecting circuit using the BIST circuit. Accordingly, in a case where the rotation information computed by the primary circuit is abnormal, it is possible to prevent occurrence of a situation where the abnormality detecting circuit does not detect that the rotation information computed by the primary circuit is abnormal and thus the abnormal rotation information is output. Accordingly, it is possible to improve reliability of the rotation information which is output from the primary circuit.

In the computing device according to the aspect, the built-in self-test circuit may be configured to diagnose the abnormality detecting circuit in an initial period until a control voltage supplied to a steering angle computing device is stabilized after a start switch of a vehicle is turned on, the steering angle computing device being configured to compute a rotation angle of the rotation shaft which is expressed in an absolute angle based on the rotation information output from the primary circuit.

With this configuration, since the BIST circuit diagnoses the abnormality detecting circuit before the stabilized control voltage is supplied to the steering angle computing device, that is, before the steering angle computing device starts a computation, it is possible to prevent the diagnosis performed by the BIST circuit from affecting the computation of the steering angle computing device.

In the computing device according to the aspect, the primary circuit may be configured to intermittently acquire the detection signal from the rotation angle sensor and compute the rotation information when the start switch of the vehicle is off, the abnormality detecting circuit may be configured to detect the abnormality of the primary circuit when the start switch is off and the primary circuit performs a computation, and the built-in self-test circuit may be configured to diagnose the abnormality detecting circuit when the start switch is off and the primary circuit does not compute the rotation information.

With this configuration, when the primary circuit and the abnormality detecting circuit do not perform a process of computing the rotation information based on the detection signal detected by the rotation angle sensor, the BIST circuit diagnoses the abnormality detecting circuit and thus it is possible to prevent the diagnosis performed by the BIST circuit from affecting the computation of the rotation information.

In the computing device according to the aspect, the primary circuit may include a power supply circuit that generates a control voltage that is supplied to another circuit based on a source voltage, the abnormality detecting circuit may include a voltage abnormality detecting circuit configured to detect an abnormality based on whether the control voltage is in a predetermined voltage range, and the built-in self-test circuit may include a power supply built-in self-test (BIST) circuit configured to diagnose the voltage abnormality detecting circuit based on whether the abnormality is detected by the voltage abnormality detecting circuit when an upper limit value and a lower limit value defining the predetermined voltage range are changed.

With this configuration, since the voltage abnormality detecting circuit that detects the abnormality of the power supply circuit is diagnosed by the power supply BIST circuit, it is possible to prevent the rotation information computed by the primary circuit in a state in which a normal control voltage is not supplied from being output.

In the computing device according to the aspect, the primary circuit may include a rotation direction detecting circuit configured to detect a quadrant in which the rotation angle is located among quadrants into which a rotation range of the motor is divided, based on the detection signal from the rotation angle sensor, and to detect a rotation direction of the motor based on a change of the quadrant in which the rotation angle is located, and a computation redundant circuit configured to detect the quadrant in which the rotation angle is located based on the detection signal from the rotation angle sensor and to detect the rotation direction of the motor based on the change of the quadrant in which the rotation angle is located. The abnormality detecting circuit may include a computed rotation direction comparison circuit configured to detect an abnormality based on comparison between the rotation direction detected by the rotation direction detecting circuit and the rotation direction detected by the computation redundant circuit, and the built-in self-test circuit may include a computation built-in self-test (BIST) circuit configured to diagnose the computed rotation direction comparison circuit based on whether the abnormality is detected by the computed rotation direction comparison circuit when a test signal indicting the rotation direction is transmitted to the computed rotation direction comparison circuit.

With this configuration, the rotation direction detecting circuit and the computation redundant circuit detect the rotation directions, respectively, based on the detection signal from the rotation angle sensor, and the computed rotation direction comparison circuit detects the abnormality of the rotation direction detecting circuit by comparing the rotation directions. Since the computed rotation direction comparison circuit is diagnosed by the computation BIST circuit, it is possible to prevent the rotation direction detected through an abnormal computation from being output.

In the computing device according to the aspect, the primary circuit may include a rotation direction detecting circuit configured to detect a quadrant in which the rotation angle is located among quadrants into which a rotation range of the motor is divided, based on the detection signal from the rotation angle sensor, and to detect a rotation direction of the motor based on a change of the quadrant in which the rotation angle is located, and a sensor redundant circuit configured to detect the quadrant in which the rotation angle is located based on a detection signal from a redundant rotation angle sensor that detects the rotation angle of the motor as a relative angle and that is provided separately from the rotation angle sensor and to detect the rotation direction of the motor based on the change of the quadrant in which the rotation angle is located. The abnormality detecting circuit may include a sensor rotation direction comparison circuit configured to detect an abnormality based on comparison between the rotation direction detected by the rotation direction detecting circuit and the rotation direction detected by the sensor redundant circuit, and the built-in self-test circuit may include a sensor built-in self-test (BIST) circuit configured to diagnose the sensor rotation direction comparison circuit based on whether the abnormality is detected by the sensor rotation direction comparison circuit when a test signal indicting the rotation direction is transmitted to the sensor rotation direction comparison circuit.

With this configuration, the rotation direction detecting circuit and the sensor redundant circuit detect the rotation directions, respectively, based on the detection signals from the different rotation angle sensors, and the sensor rotation direction comparison circuit detects the abnormality of the detection signal by comparing the rotation directions. Since the sensor rotation direction comparison circuit is diagnosed by the sensor BIST circuit, it is possible to prevent the rotation direction detected based on an abnormal detection signal from being output.

In the computing device according to the aspect, the primary circuit may include a rotation direction detecting circuit configured to detect a quadrant in which the rotation angle is located among quadrants into which a rotation range of the motor is divided, based on the detection signal from the rotation angle sensor, and to detect a rotation direction of the motor based on a change of the quadrant in which the rotation angle is located, a counter that counts a count value as the rotation information indicating the number of turns of the motor based on the rotation direction of the motor, and a previous output circuit configured to output an immediately preceding value of the count value output from the counter. The abnormality detecting circuit may include a counter comparison circuit configured to detect an abnormality based on comparison between the count value and the immediately preceding value in consideration of the rotation direction. The built-in self-test circuit may include a counter built-in self-test (BIST) circuit configured to diagnose the counter comparison circuit based on whether the abnormality is detected by the counter comparison circuit when a test signal indicating the rotation direction and the count value is transmitted to the counter comparison circuit.

With this configuration, the counter comparison circuit that detects the abnormality of the counter based on comparison between the count value and the immediately preceding value in consideration of the rotation direction is diagnosed by the counter BIST circuit. Accordingly, it is possible to prevent an abnormal count value (abnormal rotation information) from being output.

According to this aspect of the invention, it is possible to improve reliability of the computing device.

A third aspect of the invention relates to an angle computing device including a first computing unit configured to compute a rotation angle of a motor based on a detection signal from a detection unit, and a second computing unit configured to compute turn number information indicating the number of turns of the motor, the turn number information being information used to compute the rotation angle based on the detection signal from the detection unit. The first computing unit is configured to operate when a start switch of a vehicle is turned on and electric power is supplied to the first computing unit, and to compute the rotation angle when a source voltage of the supplied electric power reaches a voltage value at which the first computing unit is able to operate. The second computing unit is configured to operate when electric power is supplied to the second computing unit regardless of whether the start switch is turned on or off, and to compute the turn number information when the source voltage of the electric power supplied to the first computing unit in a period in which the start switch is on does not reach the voltage value at which the first computing unit is able to operate.

When instantaneous interruption or instantaneous drop has occurred in the first computing unit, the source voltage of the electric power supplied to the first computing unit may drop and the first computing unit may not operate. With the above-described configuration, when the source voltage of the electric power supplied to the first computing unit in the period in which the start switch is on does not reach the voltage value at which the first computing unit is able to operate, the second computing unit operates if the second computing unit is able to operate. In this case, the first computing unit cannot compute the rotation angle of the motor, but the second computing unit can compute the turn number information. When the source voltage of the electric power supplied to the first computing unit is restored to the voltage value at which the first computing unit is able to operate, the first computing unit can promptly compute the rotation angle using the turn number information which is computed by the second computing unit in the period in which the source voltage of the electric power supplied to the first computing unit does not reach the voltage value at which the first computing unit is able to operate. Accordingly, the angle computing device can prevent loss of the rotation angle of the motor even when the source voltage of the electric power supplied to the first computing unit in the period in which the start switch is on (i.e., the start switch is in the ON state) does not reach the voltage value at which the first computing unit is able to operate.

In the angle computing device according to the aspect, the second computing unit may be configured to intermittently compute the turn number information when the source voltage of the electric power supplied to the first computing unit in the period in which the start switch is on does not reach the voltage value at which the first computing unit is able to operate.

Since the second computing unit intermittently computes the turn number information when the source voltage of the electric power supplied to the first computing unit does not reach the voltage value at which the first computing unit is able to operate, it is possible to reduce power consumption of the angle computing device in comparison with a case where the second computing unit constantly computes the turn number information.

In the angle computing device according to the aspect, when the source voltage of the electric power supplied to the first computing unit in the period in which the start switch is on does not reach the voltage value at which the first computing unit is able to operate, the second computing unit may intermittently compute the turn number information in a cycle that is longer than a cycle in which the turn number information is computed when the source voltage of the electric power supplied to the first computing unit reaches the voltage value at which the first computing unit is able to operate.

When the source voltage of the electric power supplied to the first computing unit does not reach the voltage value at which the first computing unit is able to operate, it is necessary to reduce power consumption of the angle computing device in comparison with a case where the source voltage of the electric power supplied to the first computing unit reaches the voltage value at which the first computing unit is able to operate. Therefore, with the above-described configuration, when the source voltage of the electric power supplied to the first computing unit in the period in which the start switch is on (i.e., the start switch is in the ON state) does not reach the voltage value at which the first computing unit is able to operate, the second computing unit can reduce the frequency with which the second computing unit computes the turn number information in comparison with a case where the source voltage of the electric power supplied to the first computing unit reaches the voltage value at which the first computing unit is able to operate. Accordingly, when the source voltage of the electric power supplied to the first computing unit in the period in which the start switch is on does not reach the voltage value at which the first computing unit is able to operate, it is possible to reduce power consumption in the second computing unit.

In the angle computing device according to the aspect, the second computing unit may be configured to intermittently compute the turn number information in a period in which the start switch is off. When rotation of the motor is detected, the second computing unit may intermittently compute the turn number information in a cycle that is shorter than a cycle in which the turn number information is computed when the rotation of the motor is not detected.

When the start switch is off (i.e., the start switch is in the OFF state), it is necessary to achieve reduction of power consumption of the angle computing device and prevention of loss of the rotation angle of the motor. Therefore, with this configuration, when the rotation of the motor is detected, the second computing unit intermittently computes the turn number information in a cycle that is shorter than a cycle in which the turn number information is computed when the rotation of the motor is not detected. Thus, it is possible to improve computation accuracy for the rotation angle of the motor. Accordingly, it is possible to achieve reduction of power consumption of the angle computing device and prevention of loss of the rotation angle of the motor in the period in which the start switch is off.

In the angle computing device according to the aspect, the second computing unit may be configured to detect the rotation of the motor when a difference between a value of a current detection signal detected by the detection unit and a value of an immediately preceding detection signal detected by the detection unit is equal to or greater than a threshold value in the period in which the start switch is off.

With this configuration, the second computing unit can detect the rotation of the motor by determining a change of the value of the detection signal. Since the rotation of the motor is detected based on the fact that the difference in the value of the detection signal is equal to or greater than the threshold value, it is possible to prevent occurrence of a situation where the motor is determined to rotate due to fine vibration (noise) in a state in which the motor does not rotate actually.

In the angle computing device according to the aspect, the second computing unit may be configured to intermittently compute the turn number information in a period in which the start switch is off. In the period in which the start switch is on, the second computing unit may intermittently compute the turn number information in a cycle that is shorter than a cycle in which the turn number information is computed in the period in which the start switch is off.

The period in which the start switch is on (i.e., the start switch is in the ON state) is a period in which there is a high likelihood that the turn number information on the motor changes, for example, a period in which rotation of the motor is detected, as compared to the period in which the start switch is off (i.e., the start switch is in the OFF state). Therefore, with this configuration, in the period in which the start switch is on, the frequency with which the second computing unit computes the turn number information is set to be greater than that in the period in which the start switch is off. Accordingly, it is possible to improve computation accuracy for the rotation angle of the motor in the period in which the start switch is on.

With the angle computing device according to the aspect of the invention, it is possible to prevent loss of the rotation angle of the motor even when the source voltage of the electric power supplied to the first computing unit in the period in which the start switch is on does not reach the voltage value at which the first computing unit is able to operate.

A fourth aspect of the invention relates to an angle computing device including a first computing unit configured to compute a rotation angle of multiple turns of a motor based on a detection signal from a detection unit, and a second computing unit configured to compute turn number information indicating the number of turns of the motor, the turn number information being information used to compute the rotation angle based on the detection signal from the detection unit. The second computing unit is configured to store a second determination area including three or more angle areas, and to compute the turn number information and quadrant information indicating an angle area in which a rotational position of the motor is located in the second determination area, based on the detection signal. The first computing unit is configured to store a first determination area that is deviated by a predetermined value from the second determination area, and includes three or more angle areas, and to determine whether the turn number information is abnormal based on the quadrant information acquired from the second computing unit and the angle area in which the rotational position of the motor is located in the first determination area based on the detection signal.

There may be a difference between the number of turns indicated by the turn number information and the actual number of turns due to delay of transmission of various signals or deviation between processes using various signals. With the above-described configuration, the first computing unit determines whether the turn number information is abnormal using the first determination area that is deviated by a predetermined value from the second determination area for computing the turn number information. Since it can be determined whether the turn number information is abnormal using the first determination area and the second determination area, the first computing unit can prevent occurrence of a situation where the rotation angle of multiple turns of the motor is computed using the abnormal turn number information.

In the angle computing device according to the aspect, the first computing unit may be configured to change the turn number information acquired from the second computing unit based on the detection signal when the first computing unit determines that the turn number information is not abnormal.

In the angle computing device according to the aspect, the first computing unit may be configured to change the turn number information stored in the second computing unit based on the detection signal when the first computing unit determines that the turn number information is not abnormal.

When the first computing unit determines that the turn number information is not abnormal, mismatch which is determined to be abnormal does not occur between the number of turns indicated by the turn number information and the actual number of turns. However, details of information stored in the first computing unit and details of information stored in the second computing unit may not match each other. With the above-described configuration, the first computing unit changes the turn number information computed by the second computing unit based on the detection signal from the detection unit, the detection signal being used by the first computing unit to compute the rotation angle. Accordingly, details of the turn number information computed by the second computing unit and details of the detection signal used by the first computing unit to compute the rotation angle can be matched with each other.

In the angle computing device according to the aspect, the first computing unit may be configured to store the second determination area and to change the turn number information such that the angle area in which the rotational position of the motor is located in the second determination area based on the quadrant information matches the angle area in which the rotational position of the motor is located in the second determination area based on the detection signal.

With this configuration, by changing the turn number information, it is possible to match the angle area in which the rotational position of the motor is located in the second determination area based on the changed turn number information with the angle area in which the rotational position of the motor is located in the second determination area based on the detection signal. Accordingly, it is possible to match details of the turn number information acquired by the first computing unit with details of the detection signal.

In the angle computing device according to the aspect, the number of angle areas in the first determination area may be the same as the number of angle areas in the second determination area, and the predetermined amount by which the first determination area is deviated from the second determination area may be a half of one angle area of the second determination area.

With this configuration, each of the angle areas of the first determination area is configured to correspond to the angle area in which the rotational position of the motor is located in the second determination area based on the turn number information, and an angle area adjacent to the angle area in which the rotational position of the motor is located in the second determination area. Accordingly, when the rotational position of the motor is located in a certain angle area of the first determination area based on the detection signal, the rotational position of the motor is located in one of two angle areas of the second determination area corresponding to the certain angle area of the first determination area if the turn number information is not abnormal. By setting the numbers of angle areas in the first determination area and the second determination area to the same number, and equalizing the correspondence relationship between the angle areas based on the deviation between the angle areas, it is possible to appropriately set the first determination area and the second determination area.

In the angle computing device according to the aspect, the rotation angle and the turn number information may be computed in a predetermined computation cycle, and the first computing unit may be configured to determine that the turn number information is not abnormal when an amount of change from an immediately preceding value of the rotation angle to a current value of the rotation angle is not greater than a predetermined amount of change at which the turn number information is normally computed, and to determine that the turn number information is abnormal when the amount of change from the immediately preceding value of the rotation angle to the current value of the rotation angle is greater than the predetermined amount of change at which the turn number information is normally computed.

The rotation shaft of the motor may rotate at a high speed due to a large reverse input caused by running over a curb stone or the like. In this case, the turn number information may not be appropriately transmitted to the first computing unit. Therefore, with the above-described configuration, the first computing unit does not employ, for example, the current value of the turn number information or the immediately preceding value of the turn number information in some cases as regular (formal) turn number information by determining that the turn number information is abnormal when the amount of change of the rotation angle is greater than the predetermined amount of change. On the other hand, the first computing unit employs, for example, the current value of the turn number information or the immediately preceding value of the turn number information in some cases as regular turn number information by determining that the turn number information is not abnormal when the amount of change of the rotation angle is not greater than the predetermined amount of change. Accordingly, it is possible to further enhance accuracy of the turn number information that is used to compute the rotation angle of multiple turns of the motor.

In the angle computing device according to the aspect, the first computing unit may be configured to determine whether the quadrant information is abnormal based on a relationship between a change from an immediately preceding value of the turn number information to a current value of the turn number information and a change from an immediately preceding value of the quadrant information to a current value of the quadrant information.

When the turn number information changes from the immediately preceding value to the current value, the quadrant information should change from the immediately preceding value to the current value in accordance with a predetermined relationship based on the change of the turn number information. Therefore, with the above-described configuration, the first computing unit can determine that the quadrant information is not abnormal when the quadrant information changes in accordance with the predetermined relationship with respect to the change of the turn number information, and determine that the quadrant information is abnormal when the quadrant information does not change with the predetermined relationship with respect to the change of the turn number information. Accordingly, it is possible to enhance accuracy of the quadrant information.

With the angle computing device according to the aspect of the invention, it is possible to determine whether the turn number information is abnormal.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a block diagram schematically illustrating a configuration of a steering system;
FIG. 2 is a block diagram illustrating an electrical configuration of an angle computing device according to a first embodiment;
FIG. 3 is a graph illustrating a specific example in which quadrants are defined in a quadrant determining unit;
FIG. 4 is a diagram illustrating an operating state of the angle computing device;
FIG. 5 is a diagram schematically illustrating a configuration of an electric power steering system;
FIG. 6 is a block diagram of a steering controller according to a second embodiment;
FIG. 7 is a timing chart illustrating a relationship among ON/OFF states of a start switch, a control voltage for a microcomputer, and an operating time of a primary circuit;
FIG. 8 is a block diagram schematically illustrating a configuration of a steering system;
FIG. 9 is a block diagram illustrating an electrical configuration of an angle computing device according to a third embodiment;
FIG. 10 is a graph illustrating a specific example in which quadrants are defined in a quadrant determining unit;
FIG. 11 is a diagram illustrating an operating state of the angle computing device;
FIG. 12 is a block diagram schematically illustrating a configuration of a steering system;
FIG. 13 is a block diagram illustrating an electrical configuration of an angle computing device according to a fourth embodiment;
FIG. 14 is a graph illustrating a specific example of a second determination area;
FIG. 15 is a graph illustrating a specific example of a first determination area;
FIG. 16 is a diagram illustrating a relationship between an angle area in which a rotational position of a rotation shaft of a motor is located in a first determination area based on a detection signal and a quadrant in which the rotational position of the rotation shaft of the motor is located in a second determination area based on quadrant information;
FIG. 17 is a diagram illustrating a relationship among a relative angle of the motor which is computed based on a detection signal, a quadrant in which the rotational position of the rotation shaft of the motor is located based on quadrant information, and a count correction value which is a correction value for a count value;
FIG. 18 is a diagram illustrating a relationship between a count value and quadrant information;
FIG. 19 is a diagram illustrating a relationship among a count value, quadrant information, and a relative angle;
FIG. 20 is a diagram illustrating a relationship between an angle area in which the rotational position of the rotation shaft of the motor is located in the first determination area and a quadrant in which the rotational position of the rotation shaft of the motor is located in the second determination area based on a count value when the relative angle is 20 degrees;
FIG. 21 is a block diagram illustrating an electrical configuration of an angle computing device according to a fifth embodiment;
FIG. 22 is a graph illustrating a specific example of a second determination area in another embodiment;
FIG. 23 is a graph illustrating a specific example of a first determination area in another embodiment;
FIG. 24 is a diagram illustrating a relationship between an angle area in which a rotational position of a rotation shaft of a motor is located in a first determination area based on a detection signal and a quadrant in which the rotational position of the rotation shaft of the motor is located in a second determination area based on quadrant information in another embodiment;
FIG. 25 is a diagram illustrating a relationship among a relative angle of the motor which is computed based on a detection signal, a quadrant in which the rotational position of the rotation shaft of the motor is located based on quadrant information, and a count correction value which is a correction value for a count value in another embodiment;
FIG. 26 is a graph illustrating a specific example of a second determination area in another embodiment;
FIG. 27 is a diagram illustrating a relationship between an angle area in which a rotational position of a rotation shaft of a motor is located in a first determination area based on a detection signal and a quadrant in which the rotational position of the rotation shaft of the motor is located in a second determination area based on quadrant information in another embodiment;
FIG. 28 is a diagram illustrating a relationship among a relative angle of the motor which is computed based on a detection signal, a quadrant in which the rotational position of the rotation shaft of the motor is located based on quadrant information, and a count correction value which is a correction value for a count value in another embodiment; and
FIG. 29 is a block diagram illustrating an electrical configuration of an angle computing device according to another embodiment.

### DETAILED DESCRIPTION OF EMBODIMENTS

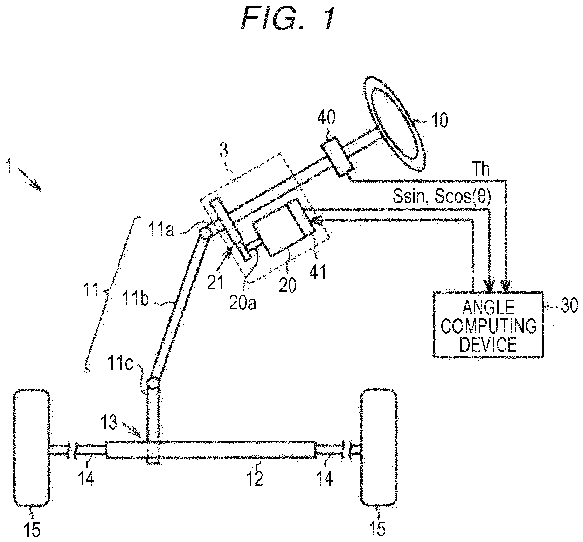

Hereinafter, an angle computing device according to a first embodiment which is provided in an electric power steering system (hereinafter referred to as an "EPS") will be described below. As illustrated in FIG. 1, the EPS includes a steering mechanism 1 that turns turning wheels 15 based on a driver's operation for a steering wheel 10, an actuator 3 including a motor 20 that generates an assist force for assisting the steering operation in the steering mechanism 1, and an angle computing device 30 that detects a rotation angle θ of the motor 20 and controls the motor 20.

The steering mechanism 1 includes a steering shaft 11 that is connected to the steering wheel 10 and a rack shaft 12 serving as a turning shaft that reciprocates in an axial direction in accordance with rotation of the steering shaft 11. The steering shaft 11 includes a column shaft 11a that is connected to the steering wheel 10, an intermediate shaft 11b that is connected to the lower end of the column shaft 11a, and a pinion shaft 11c that is connected to the lower end of the intermediate shaft 11b. The rack shaft 12 and the pinion shaft 11c are arranged to have a predetermined crossing angle, and rack teeth formed in the rack shaft 12 engage with pinion teeth formed in the pinion shaft 11c to constitute a rack and pinion mechanism 13. Tie rods 14 are respectively connected to both ends of the rack shaft 12, and tips of the tie rods 14 are connected to knuckles (not illustrated) to which the turning wheels 15 are fitted. Accordingly, in the EPS, a rotational motion of the steering shaft 11 based on a steering operation is converted to a reciprocating straight motion of the rack shaft 12 in the axial direction via the rack and pinion mechanism 13. The reciprocating straight motion in the axial direction is transmitted to the knuckles via the tie rods 14 and thus a turning angle of the turning wheels 15, that is, a traveling direction of a vehicle, is changed.

The actuator 3 includes a motor 20 and a reduction mechanism 21. A rotation shaft 20a of the motor 20 is connected to the column shaft 11a via the reduction mechanism 21. The rotation shaft 20a of the motor 20 can rotate by multiple turns. The reduction mechanism 21 reduces a rotational speed (a rotational force) of the motor 20 and transmits the reduced rotational force to the column shaft 11a. That is, a driver's steering operation is assisted by applying a torque of the motor 20 as an assist force to the steering shaft 11.

The angle computing device 30 controls the motor 20 based on detection results from various sensors which are provided in a vehicle. For example, a torque sensor 40 and a rotation angle sensor 41 are provided as various sensors. The torque sensor 40 is provided on the column shaft 11a. The rotation angle sensor 41 is provided in the motor 20. The torque sensor 40 detects a steering torque Th which is applied to the steering shaft 11 in accordance with a driver's steering operation. The rotation angle sensor 41 generates a detection signal for computing an actual rotation angle θ of the rotation shaft 20a of the motor 20. The angle computing device 30 computes the actual rotation angle θ of the motor 20 based on the detection signal which is generated by the rotation angle sensor 41. A magnetic sensor that generates a detection signal by detecting magnetism varying in accordance with rotation of the rotation shaft 20a of the motor 20 and outputs the detection signal as a voltage value is employed as the rotation angle sensor 41. For example, a magnetoresistance effect (MR) sensor is employed as the magnetic sensor. The rotation angle sensor 41 includes a bridge circuit including two magnetic sensor elements, and generates electrical signals (voltages) using the magnetic sensor elements. A phase of the electrical signal which is generated by one magnetic sensor element is deviated by 90 degrees from a phase of the electrical signal which is generated by the other magnetic sensor element. Therefore, in this embodiment, the electrical signal which is generated by one magnetic sensor element is regarded as a sine wave signal Ssin and the electrical signal which is generated by the other magnetic sensor element is regarded as a cosine wave signal Scos. The sine wave signal Ssin and the cosine wave signal Scos are detection signals of the rotation angle sensor 41. The angle computing device 30 computes the rotation angle θ of the motor 20 based on the detection signals (the sine wave signal Ssin and the cosine wave signal Scos) detected by the rotation angle sensor 41. The angle computing device 30 sets a target torque to be applied to the steering mechanism 1 based on output values of the sensors and controls electric power which is supplied to the motor 20 such that the actual torque of the motor 20 reaches the target torque.

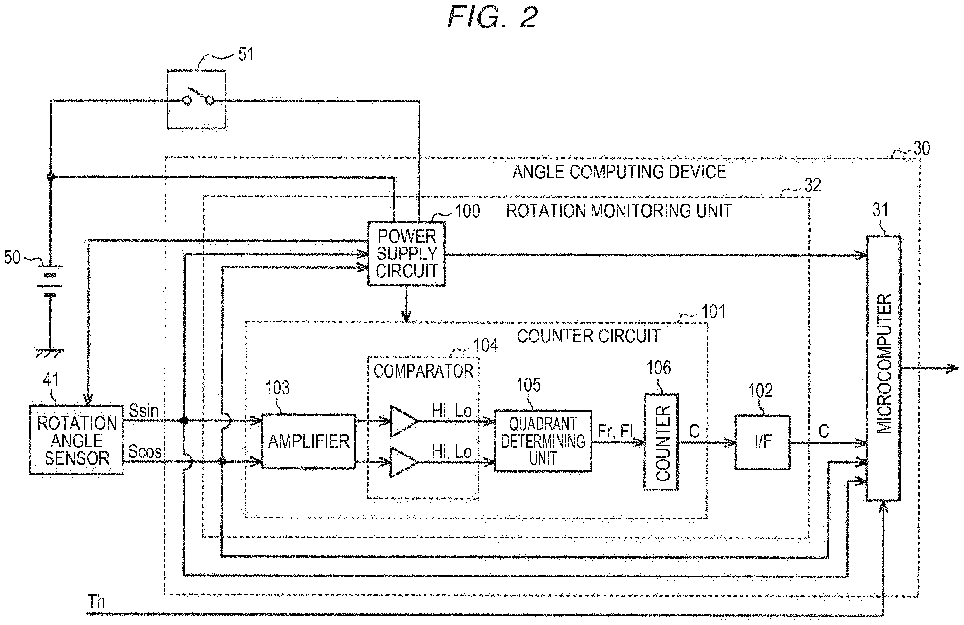

The configuration of the angle computing device 30 will be described below. As illustrated in FIG. 2, the angle computing device 30 includes a microcomputer 31 and a rotation monitoring unit 32. The microcomputer 31 is an example of a first computing unit and the rotation monitoring unit 32 is an example of a second computing unit. The rotation angle sensor 41 is an example of a detection unit.

The microcomputer 31 computes the rotation angle θ of the motor 20 and controls electric power which is supplied to the motor 20 when an ignition switch 51 is on (i.e., when the ignition switch 51 is in the ON state). The microcomputer 31 computes the rotation angle θ of the motor 20 in a predetermined computation cycle. The computation cycle of the microcomputer 31 is set to a short cycle that makes it possible to promptly detect rotation of the rotation shaft 20a of the motor 20. A power source of electric power which is supplied to the motor 20 is a battery 50. The microcomputer 31 includes, for example, a micro processing unit. The rotation monitoring unit 32 is connected to the microcomputer 31. The rotation monitoring unit 32 is formed by packaging a logic circuit in which electronic circuits or flip-flops are combined. The rotation monitoring unit 32 is a so-called application specific integrated circuit (ASIC). The microcomputer 31 reads a program stored in a storage unit thereof and performs a computation based on the program. The rotation monitoring unit 32 outputs a predetermined output in response to a specific input (the detection signal from the rotation angle sensor 41 herein).

A power supply circuit 100 that steps down a supply voltage of electric power supplied from the battery 50 and supplies a constant voltage is provided in the rotation monitoring unit 32. An ignition switch 51 serving as a start switch that switches between supply and interruption of electric power from the battery 50 is provided between the battery 50 and the power supply circuit 100. When a driver operates a switch which is provided in a vehicle, the ignition switch 51 is switched between ON and OFF states. When the ignition switch 51 is on, an ON signal is input to the power supply circuit 100 and electric power is supplied between the battery 50 and the power supply circuit 100 via the ignition switch 51. When the ignition switch 51 is off, an OFF signal is input to the power supply circuit 100 and the supply of electric power between the battery 50 and the power supply circuit 100 is interrupted by the ignition switch 51.

When electric power is supplied between the battery 50 and the power supply circuit 100 via the ignition switch 51, electric power is supplied to the microcomputer 31. That is, when the ignition switch 51 is on, electric power is supplied to the microcomputer 31 and the microcomputer 31 operates. On the other hand, when supply of electric power between the battery 50 and the power supply circuit 100 is interrupted by the ignition switch 51, electric power is not supplied to the microcomputer 31. That is, when the ignition switch 51 is off, electric power is not supplied to the microcomputer 31 and the microcomputer 31 stops its operation.

The battery 50 is directly connected to the power supply circuit 100. That is, the rotation monitoring unit 32 is constantly supplied with electric power from the battery 50 regardless of whether the ignition switch 51 is in the ON or OFF state. The rotation angle sensor 41 is connected to the rotation monitoring unit 32. The rotation angle sensor 41 is also connected to the microcomputer 31.

The rotation monitoring unit 32 includes a counter circuit 101 and a communication interface 102. The counter circuit 101 is supplied with electric power from the battery 50 regardless of whether the ignition switch 51 is in the ON or OFF state. The communication interface 102 is supplied with electric power from the battery 50 when the ignition switch 51 is in the ON state.

The counter circuit 101 acquires the detection signals (the sine wave signal Ssin and the cosine wave signal Scos) which are generated by the rotation angle sensor 41. The counter circuit 101 computes a count value C which is used to compute the rotation angle θ of the motor 20 based on the detection signals. The count value C is turn number information indicating the number of turns of the motor 20. In this embodiment, the count value C is information indicating by how many turns the rotational position of the rotation shaft 20a of the motor 20 rotates with respect to a reference position thereof (a neutral position).

The counter circuit 101 includes an amplifier 103, a comparator 104, a quadrant determining unit 105, and a counter 106. The amplifier 103 acquires the detection signals (the sine wave signal Ssin and the cosine wave signal Scos) which are generated by the rotation angle sensor 41 as voltage values. The amplifier 103 amplifies the detection signals acquired from the rotation angle sensor 41 and outputs the amplified detection signals to the comparator 104.

The comparator 104 generates a signal of a Hi level when the voltage value (the voltage value amplified by the amplifier 103) generated by the rotation angle sensor 41 is higher than a preset threshold value and generates a signal of a Lo level when the voltage value is lower than the preset threshold value. The threshold value is set to, for example, "0." That is, the comparator 104 generates a signal of a Hi level when the voltage value (the voltage value amplified by the amplifier 103) is positive and generates a signal of a Lo level when the voltage value is negative.

The quadrant determining unit 105 determines in which quadrant of four possible quadrants a rotational position of the rotation shaft 20a of the motor 20 is located based on a combination of the signals of the Hi level and/or the Lo level which are generated by the comparator 104. The reference position of the rotation shaft 20a of the motor 20 is a rotational position of the rotation shaft 20a of the motor 20, for example, when the steering wheel 10 is located at a neutral position, and the rotation angle θ at this time is, for example, "0" degrees.

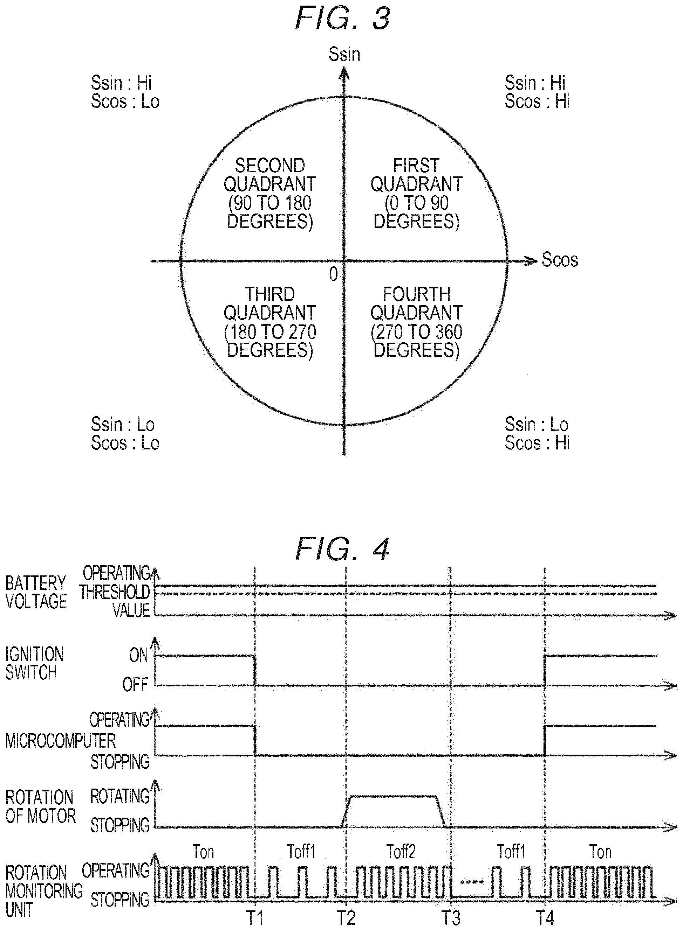

As illustrated in FIG. 3, one turn of the rotation shaft 20a of the motor 20 is divided into four quadrants at intervals of 90 degrees based on the combinations of the signals of the Hi level and the Lo level, that is, the combinations of the positive and negative signs of the detection signals. The four quadrants are specifically as follows.

A first quadrant is a quadrant in which both the sine wave signal Ssin and the cosine wave signal Scos are at the Hi level. When the rotational position of the rotation shaft 20a of the motor 20 is in the first quadrant, the rotation angle θ of the motor 20 is in a range of 0 to 90 degrees.

A second quadrant is a quadrant in which the sine wave signal Ssin is at the Hi level and the cosine wave signal Scos is at the Lo level. When the rotational position of the rotation shaft 20a of the motor 20 is in the second quadrant, the rotation angle θ of the motor 20 is in a range of 90 to 180 degrees.

A third quadrant is a quadrant in which both the sine wave signal Ssin and the cosine wave signal Scos are at the Lo level. When the rotational position of the rotation shaft 20a of the motor 20 is in the third quadrant, the rotation angle θ of the motor 20 is in a range of 180 to 270 degrees.

A fourth quadrant is a quadrant in which the sine wave signal Ssin is at the Lo level and the cosine wave signal Scos is at the Hi level. When the rotational position of the rotation shaft 20a of the motor 20 is in the fourth quadrant, the rotation angle θ of the motor 20 is in a range of 270 to 360 degrees.

As illustrated in FIG. 2, the quadrant determining unit 105 sets up a left turn flag F1 or a right turn flag Fr based on the signal of the Hi level and the signal of the Lo level which are generated by the comparator 104. The quadrant determining unit 105 determines that rotation by a unit rotation angle (90 degrees) is performed each time the quadrant in which the rotational position of the rotation shaft 20a of the motor 20 is located changes to an adjacent quadrant. The rotation direction of the rotation shaft 20a of the motor 20 is determined based on a relationship between a quadrant in which the rotational position of the rotation shaft 20a of the motor 20 is located before the motor 20 rotates and a quadrant in which the rotational position is located after the motor 20 rotates. The quadrant determining unit 105 sets up the left turn flag F1 when the quadrant in which the rotational position of the rotation shaft 20a of the motor 20 is located changes in the counterclockwise direction, for example, when the quadrant changes from the first quadrant to the second quadrant. The quadrant determining unit 105 sets up the right turn flag Fr when the quadrant in which the rotational position of the rotation shaft 20a of the motor 20 is located changes in the clockwise direction, for example, when the quadrant changes from the first quadrant to the fourth quadrant.

The counter 106 computes a count value C based on the left turn flag F1 or the right turn flag Fr which is acquired by the quadrant determining unit 105. The counter 106 is a logical circuit in which flip-flops or the like are combined. The count value C indicates the number of times of rotation of the rotational position of the rotation shaft 20a of the motor 20 by a unit rotation angle (90 degrees) with respect to a reference position thereof. The counter 106 increases the count value C (1 is added to the count value C) each time the left turn flag F1 is acquired from the quadrant determining unit 105, and decreases the count value C (1 is subtracted from the count value C) each time the right turn flag Fr is acquired from the quadrant determining unit 105. In this way, the counter 106 computes the count value C and stores the count value C each time a detection signal is generated by the rotation angle sensor 41.

The communication interface 102 outputs the count value C stored in the counter 106 to the microcomputer 31 when the ignition switch 51 is in the ON state. On the other hand, the communication interface 102 does not operate when the ignition switch 51 is in the OFF state.

The power supply circuit 100 determines that the ignition switch 51 is in the ON state or in the OFF state, based on an ON signal or an OFF signal which is input thereto. The power supply circuit 100 stores a plurality of cycles (a cycle Toff and a cycle Ton). The power supply circuit 100 includes an electrification unit that intermittently supplies electric power to the rotation angle sensor 41 and the counter circuit 101 in the selected cycle.

When the ignition switch 51 is in the ON state, the power supply circuit 100 intermittently supplies electric power to the rotation angle sensor 41 and the counter circuit 101 in the cycle Ton using electric power which is constantly supplied from the battery 50. Accordingly, the power supply circuit 100 causes the rotation angle sensor 41 and the counter circuit 101 to operate intermittently in the cycle Ton.

On the other hand, when the ignition switch 51 is in the OFF state, the power supply circuit 100 intermittently supplies electric power to the rotation angle sensor 41 and the counter circuit 101 in the cycle Toff which is longer than the cycle Ton using the electric power which is constantly supplied from the battery 50. Accordingly, the power supply circuit 100 causes the rotation angle sensor 41 and the counter circuit 101 to operate intermittently in the cycle Toff such that the count value C is intermittently computed.

The power supply circuit 100 acquires a detection signal which is detected by the rotation angle sensor 41. When a difference between the voltage value of the current detection signal and the voltage value of the previous detection signal (i.e., the immediately preceding detection signal) (detected in the previous computation cycle (i.e., in the immediately preceding computation cycle)) is equal to or greater than a threshold value, the power supply circuit 100 detects rotation of the motor 20. The threshold value is set to a value which is considered to be a difference in voltage value due to rotation of the motor 20, instead of a difference in voltage value due to an influence of noise or the like. The power supply circuit 100 changes the cycle Toff in which electric power is intermittently supplied to the rotation angle sensor 41 and the counter circuit 101 with the change in voltage value of the detection signal detected by the rotation angle sensor 41 serving as a trigger. The power supply circuit 100 intermittently supplies electric power to the rotation angle sensor 41 and the counter circuit 101 in a first cycle Toff1 when rotation of the motor 20 is not detected and in a second cycle Toff2 which is shorter than the first cycle Toff1 when rotation of the motor 20 is detected. The first cycle Toff1 and the second cycle Toff2 are set to be longer than the cycle Ton. The computation cycle of the microcomputer 31 is set to be equal to or longer than the cycle Ton. The power supply circuit 100 includes a time measuring unit that measures a time after rotation of the motor 20 is detected. The power supply circuit 100 determines that rotation of the motor 20 is not detected when the difference between the voltage value of the current detection signal and the voltage value of the previous detection signal is less than the threshold value. When rotation of the motor 20 is not detected in a predetermined time after the first cycle Toff1 is switched to the second cycle Toff2, the power supply circuit 100 switches the second cycle Toff2 to the first cycle Toff1 and intermittently supplies electric power to the rotation angle sensor 41 and the counter circuit 101 in the first cycle Toff1. Accordingly, when the ignition switch 51 is in the OFF state, the rotation angle sensor 41 and the counter circuit 101 operate intermittently in the first cycle Toff1 or the second cycle Toff2 and intermittently compute the count value C in the first cycle Toff1 or the second cycle Toff2. The cycle Ton, the first cycle Toff1, and the second cycle Toff2 are set to cycles in which rotation of the rotation shaft 20a of the motor 20 by the unit rotation angle (90 degrees) is not missed. The reason why the second cycle Toff2 is set to be shorter than the first cycle Toff1 is that the rotation shaft 20a of the motor 20 is likely to rotate at a higher speed when rotation of the motor 20 is detected than when rotation of the motor 20 is not detected.

When the ignition switch 51 is in the ON state, the microcomputer 31 computes the rotation angle θ of the motor 20 based on the count value C acquired by the rotation monitoring unit 32 and the detection signal generated by the rotation angle sensor 41. Specifically, the microcomputer 31 computes the rotation angle θ by computing an arctangent function from two detection signals generated by the rotation angle sensor 41. The microcomputer 31 determines by how many turns the rotation shaft 20a of the motor 20 rotates based on the count value C acquired by the rotation monitoring unit 32. One turn corresponds to 360 degrees. The microcomputer 31 computes an absolute rotation angle of the motor 20 by adding a value, which is obtained by multiplying the number of turns of the rotation shaft 20a of the motor 20 based on the count value C by 360 degrees, to the rotation angle θ. In addition, the microcomputer 31 may compute an absolute steering rotation angle from the absolute rotation angle of the motor 20 in consideration of a reduction ratio of the reduction mechanism 21 interposed between the motor 20 and the steering shaft 11 or the like. The angle computing device 30 controls electric power which is supplied to the motor 20 using the absolute rotation angle of the motor 20 which is computed in this way.

An operating state of the angle computing device 30 will be described below. As illustrated in FIG. 4, when the ignition switch 51 is in the ON state, the microcomputer 31 is supplied with electric power from the battery 50. Accordingly, the microcomputer 31 operates and computes the rotation angle θ of the motor 20. In the case where the ignition switch 51 is in the ON state, when electric power is intermittently supplied to the rotation angle sensor 41 and the counter circuit 101 from the battery 50, the counter circuit 101 intermittently computes the count value C in the cycle Ton. A battery voltage which is a voltage value of electric power from the battery 50 is greater than an operating threshold value at which the microcomputer 31 can operate.

As illustrated at time T1, when the ignition switch 51 is turned off, supply of electric power from the battery 50 to the microcomputer 31 is stopped. Accordingly, the microcomputer 31 does not compute the rotation angle θ of the motor 20. On the other hand, the counter circuit 101 is continuously supplied with electric power even when the ignition switch 51 is in the OFF state. The rotation monitoring unit 32 switches the cycle Ton to the first cycle Toff1 at a time at which the microcomputer 31 stops its operation, and intermittently computes the count value C in the first cycle Toff1.

As illustrated at time T2, the motor 20 may rotate even when the ignition switch 51 is in the OFF state. For example, when the steering wheel 10 is operated, the motor 20 may rotate. When the difference between the voltage value of the current detection signal and the voltage value of the previous detection signal is equal to or greater than the threshold value, the power supply circuit 100 of the rotation monitoring unit 32 detects rotation of the motor 20. When the ignition switch 51 is in the OFF state and rotation of the motor 20 is detected, the rotation monitoring unit 32 switches the first cycle Toff1 to the second cycle Toff2 and intermittently computes the count value C in the second cycle Toff2. In this case, when it is determined that the quadrant in which the rotational position of the rotation shaft 20a of the motor 20 is located changes based on the detection signal generated by the rotation angle sensor 41, the count value C stored in the counter 106 is increased or decreased.

As illustrated at time T3, when rotation of the motor 20 is not detected in a predetermined time after the first cycle Toff1 is switched to the second cycle Toff2, the rotation monitoring unit 32 switches the second cycle Toff2 to the first cycle Toff1 and intermittently computes the count value C in the first cycle Toff1.

As illustrated at time T4, when the ignition switch 51 is turned on, supply of electric power from the battery 50 to the communication interface 102 and the microcomputer 31 is started. The microcomputer 31 acquires the count value C which is computed by the rotation monitoring unit 32 (the counter circuit 101) in the period in which the ignition switch 51 is in the OFF state. The microcomputer 31 computes the rotation angle θ of the motor 20 using the count value C. The rotation monitoring unit 32 switches the first cycle Toff1 (or the second cycle Toff2) to the cycle Ton and intermittently computes the count value C in the cycle Ton.

Operations and advantages in this embodiment will be described below.
(1) The count value C is information which is used by the microcomputer 31 to compute the rotation angle θ of the motor 20 when the ignition switch 51 is on. The rotation monitoring unit 32 (the counter circuit 101) does not compute the rotation angle θ of the motor 20. The rotation monitoring unit 32 (the counter circuit 101) computes the count value C. Accordingly, since a computation load for computing the count value C in the rotation monitoring unit 32 is less than a computation load for computing the rotation angle θ of the motor 20, it is possible to reduce power consumption of the angle computing device 30 when the ignition switch 51 is in the OFF state.
(2) The rotation monitoring unit 32 outputs a predetermined output in response to a specific input. The rotation monitoring unit 32 operates when the ignition switch 51 is in the OFF state. The rotation monitoring unit 32 is an ASIC which is embodied with a simpler configuration than the configuration of the microcomputer 31. The microcomputer 31 reads an operation expression (i.e., a computing expression) or the like from a storage medium such as a read only memory (ROM) or a random access memory (RAM) and performs various computing operations. The ASIC performs only the operation expression which is determined at the time of design. Accordingly, when the ignition switch 51 is in the OFF state, it is possible to reduce power consumption of the angle computing device 30, as compared to the case where a computing operation based on a program is performed by the microcomputer 31.
(3) When the ignition switch 51 is in the OFF state, it is necessary to achieve reduction of power consumption in the angle computing device 30 and monitoring of rotation of the motor 20. Therefore, in this embodiment, in a situation where there is a low likelihood that the quadrant in which the rotational position of the rotation shaft 20a of the motor 20 is located changes such as a situation where rotation of the motor 20 is not detected, the rotation monitoring unit 32 intermittently computes the count value C in the first cycle Toff1 which is longer than the second cycle Toff2, and thus, it is possible to reduce power consumption in the angle computing device 30. Accordingly, when the ignition switch 51 is in the OFF state, it is possible to achieve reduction of power consumption in the angle computing device 30 and monitoring of rotation of the motor 20 together.
(4) When the motor 20 is rotating, the voltage value of the detection signal detected by the rotation angle sensor 41 changes. Therefore, in this embodiment, the power supply circuit 100 of the rotation monitoring unit 32 can detect rotation of the motor 20 by determining the change of the voltage value of the detection signal based on the difference between the voltage value of the current detection signal and the voltage value of the previous detection signal (i.e., the immediately preceding detection signal). Since rotation of the motor 20 is detected based on the fact that the difference in voltage value is equal to or greater than the threshold value, it is possible to prevent occurrence of a situation where the motor 20 is determined to rotate due to fine vibration (noise) when the motor 20 is not actually rotating.
(5) Since the rotation speed of the motor 20 increases gradually after the rotation shaft 20a of the motor 20 starts its rotation, the quadrant of the rotational position in which the rotation shaft 20a of the motor 20 is located is likely to change when rotation of the motor 20 is detected. Therefore, in a situation where there is a high likelihood that the quadrant in which the rotational position of the rotation shaft 20a of the motor 20 is located changes such as a situation where rotation of the motor 20 is detected, the rotation monitoring unit 32 intermittently computes the count value C in the second cycle Toff2 which is shorter than the first cycle Toff1. Accordingly, the rotation monitoring unit 32 can reduce power consumption of the rotation monitoring unit 32 and can compute the count value C without missing rotation of the rotation shaft 20a of the motor 20 by the unit rotation angle.
(6) When the ignition switch 51 is in the OFF state, the power supply circuit 100 intermittently supplies electric power to the rotation angle sensor 41 and the counter circuit 101 in the cycle Toff which is longer than the cycle Ton. Accordingly, when the ignition switch 51 is in the OFF state, the frequency of computation of the count value C by the rotation monitoring unit 32 can be reduced in comparison with the case where the ignition switch 51 is in the ON state. As a result, it is possible to reduce power consumption in the rotation monitoring unit 32 when the ignition switch 51 is in the OFF state.

This embodiment may be modified as follows. The following other embodiments may be combined with each other as long as they are not technically contradictory to each other. In this embodiment, the power supply circuit 100 detects rotation of the motor 20 based on the difference between the voltage value of the current detection signal and the voltage value of the previous detection signal, but the invention is not limited thereto. For example, the power supply circuit 100 may acquire the right turn flag Fr or the left turn flag F1 which is set up by the quadrant determining unit 105. When the ignition switch 51 is in the OFF state, the power supply circuit 100 may detect rotation of the motor 20 with input of the right turn flag Fr or the left turn flag F1 serving as a trigger.

The power supply circuit 100 intermittently supplies electric power to the rotation angle sensor 41 and the counter circuit 101 in the first cycle Toff1 when rotation of the motor 20 is not detected and in the second cycle Toff2 which is shorter than the first cycle Toff1 when rotation of the motor 20 is detected, but the invention is not limited thereto. The power supply circuit 100 may intermittently supply electric power to the rotation angle sensor 41 and the counter circuit 101 in the same cycle (for example, the cycle Toff2) when rotation of the motor 20 is not detected and when rotation of the motor 20 is detected. In this case, the power supply circuit 100 does not need to detect whether the motor 20 is rotating.

The power supply circuit 100 intermittently supplies electric power to the rotation angle sensor 41 and the counter circuit 101 in the cycle Toff which is longer than the cycle Ton when the ignition switch 51 is in the OFF state, but the invention is not limited thereto. For example, the power supply circuit 100 may intermittently supply electric power to the rotation angle sensor 41 and the counter circuit 101 in the same cycle (for example, the cycle Toff2) when the ignition switch 51 is in the OFF state and when the ignition switch 51 is in the ON state.

In this embodiment, the rotation monitoring unit 32 is an ASIC that performs a predetermined operation in response to a specific input, but the invention is not limited thereto. For example, the rotation monitoring unit 32 may be embodied by a microcomputer such as a micro processing unit. The rotation monitoring unit 32 may read a program stored in a storage unit thereof and perform an operation based on the program. In this case, since the count value C is computed with a computation load less than the computation load for computing the rotation angle θ, the configuration of the rotation monitoring unit 32 can be made simpler than the configuration of the microcomputer 31.

The rotation angle sensor 41 is an MR sensor, but may be, for example, a sensor using a Hall element or may be a sensor using a resolver. The rotation angle sensor 41 may detect, for example, a rotation angle of the steering shaft 11. The rotation angle of the steering shaft 11 can be converted into the rotation angle θ of the motor 20 in consideration of, for example, the reduction ratio of the reduction mechanism 21 interposed between the motor 20 and the steering shaft 11.

The rotation monitoring unit 32 includes the power supply circuit 100, but is not limited thereto. The power supply circuit 100 may be provided inside the angle computing device 30 and outside the rotation monitoring unit 32. The rotation monitoring unit 32 intermittently computes the count value C even when the ignition switch 51 is in the ON state, but may not compute the count value C when the ignition switch 51 is in the ON state. In this case, when the ignition switch 51 is switched from the ON state to the OFF state, for example, the microcomputer 31 may store the current rotation angle θ and the rotation monitoring unit 32 may intermittently compute and store the count value C after the operation of the rotation monitoring unit 32 is started. Then, when the ignition switch 51 is switched from the OFF state to the ON state, the microcomputer 31 may read the count value C computed by the rotation monitoring unit 32 in the period in which the ignition switch 51 is in the OFF state and the stored rotation angle θ and may compute the rotation angle θ of the motor 20.

The microcomputer 31 may receive a detection signal from the rotation angle sensor 41 via the rotation monitoring unit 32 (the counter circuit 101 and the communication interface 102). In this case, the rotation angle sensor 41 is constantly supplied with electric power similarly to the microcomputer 31 when the ignition switch 51 is in the ON state.

The EPS in this embodiment may be embodied as an EPS in which the rotation shaft 20a of the motor 20 is parallel to the axis of the rack shaft 12 or may be applied to an EPS in which the rotation shaft 20a and the rack shaft 12 are coaxial. The invention is not limited to the EPS but may be applied to, for example, a steer-by-wire steering system.

A vehicle in which the EPS according to this embodiment is mounted may be a so-called vehicle with an internal combustion engine employing an engine as a drive source or may be a so-called electric vehicle employing a motor as a drive source. In the case of an electric vehicle, the ignition switch is a switch that starts the motor as a drive source.

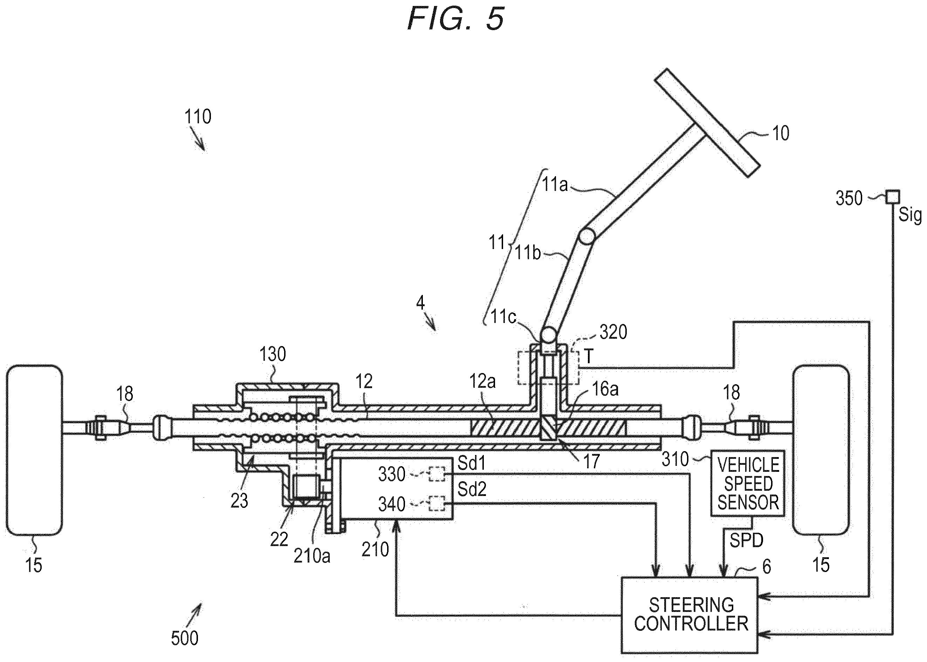

Hereinafter, a computing device according to a second embodiment will be described with reference to the accompanying drawings. As illustrated in FIG. 5, an electric power steering system (EPS) 110 serving as a steering system includes a steering mechanism 4 that turns turning wheels 15 based on a driver's operation for a steering wheel 10. The EPS 110 includes an EPS actuator 500 that applies an assist force for assisting a steering operation to the steering mechanism 4 and a steering controller 6 serving as a rotation angle detecting device that controls the operation of the EPS actuator 500.

The steering mechanism 4 includes a steering shaft 11 to which the steering wheel 10 is fixed, a rack shaft 12 that reciprocates in an axial direction in accordance with rotation of the steering shaft 11, and a rack housing 130 having a substantially cylindrical shape into which the rack shaft 12 is inserted such that the rack shaft 12 reciprocates. The steering shaft 11 has a configuration in which a column shaft 11a, an intermediate shaft 11b, and a pinion shaft 11c are sequentially connected from the steering wheel 10-side.

The rack shaft 12 and the pinion shaft 11c are arranged to have a predetermined crossing angle in the rack housing 130, and rack teeth 12a formed in the rack shaft 12 engage with pinion teeth 16a formed in the pinion shaft 11c to constitute a rack and pinion mechanism 17. Knuckles (not illustrated), to which the turning wheels 15 are fitted, are respectively connected to both ends of the rack shaft 12 via tie rods 18. Accordingly, in the EPS 110, a rotational motion of the steering shaft 11 based on a steering operation is converted to a reciprocating straight motion of the rack shaft 12 in the axial direction via the rack and pinion mechanism 17. The reciprocating straight motion in the axial direction is transmitted to the knuckles via the tie rods 18, whereby a turning angle of the turning wheels 15, that is, a traveling direction of a vehicle, is changed.

The EPS actuator 500 includes a motor 210 serving as a drive source, a transmission mechanism 22 that transmits rotational motion of the motor 210, and a conversion mechanism 23 that converts the rotational motion transmitted via the transmission mechanism 22 into a reciprocating straight motion of the rack shaft 12. The EPS actuator 500 applies an assist force to the steering mechanism 4 by transmitting the rotational motion of the motor 210 to the conversion mechanism 23 via the transmission mechanism 22 and converting the rotational motion into a reciprocating straight motion of the rack shaft 12 via the conversion mechanism 23. For example, a three-phase brushless motor is employed as the motor 210 in this embodiment, for example, a belt mechanism is employed as the transmission mechanism 22 and, for example, a ball screw mechanism is employed as the conversion mechanism 23.

A vehicle speed sensor 310 that detects a vehicle speed SPD of the vehicle and a torque sensor 320 that detects a steering torque T which is applied to the steering shaft 11 by a driver's steering are connected to the steering controller 6. A first rotation angle sensor 330 serving as a rotation angle sensor that detects a rotation angle of the motor 210 as a relative angle in a range of 360° and a second rotation angle sensor 340 serving as a redundant rotation angle sensor that detects the rotation angle of the motor 210 as a relative angle are connected to the steering controller 6. Detection signals Sd1 and Sd2 are output from the first and second rotation angle sensors 330 and 340, respectively. Each of the detection signals Sd1 and Sd2 includes a sin signal and a cos signal. As described above, the motor 210 is mechanically connected to the rack shaft 12 via the transmission mechanism 22 and the conversion mechanism 23, and the rotation angle of the rotation shaft 210a of the motor 210 is a value associated with the steering angle of the steering shaft 11 which is a rotation shaft. The steering angle of the steering shaft 11 can be converted into a turning angle of the turning wheels 15. A start switch 350 (for example, an operation position of an ignition key or a start switch) for starting the drive source of the vehicle is connected to the steering controller 6, and a start signal Sig indicating ON/OFF states thereof is input to the steering controller 6.

The steering controller 6 controls the operation of the EPS actuator 500 by supplying drive power to the motor 210 based on various state quantities which are detected by various sensors. That is, the steering controller 6 executes assist control for applying an assist force to the steering mechanism 4 by controlling the EPS actuator 500.

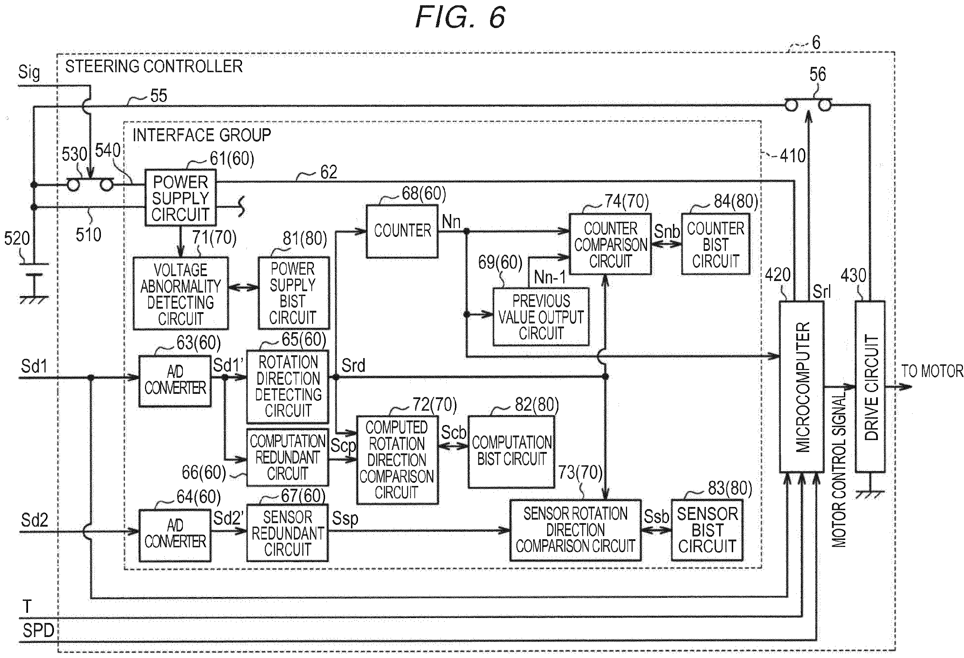

As illustrated in FIG. 6, the steering controller 6 includes an interface group 410 serving as a computing device, a microcomputer 420 serving as a steering angle computing device that outputs a motor control signal, and a drive circuit 430 that supplies drive power to the motor 210 based on the motor control signal.

The interface group 410 has a configuration in which a plurality of electronic circuits are integrated into a single chip. The interface group 410 is constantly connected to an onboard power supply 520 mounted in the vehicle via a first connection line 510 and is connected to the onboard power supply 520 via a second connection line 540 in which a power supply relay 530 is provided. The power supply relay 530 includes a mechanical relay, a field effect transistor (FET), or the like and is opened or closed in accordance with ON or OFF of the start signal Sig. Since the interface group 410 is constantly connected to the onboard power supply 520 via the first connection line 510, the interface group 410 is supplied with electric power and is able to operate even when the start switch 350 is in the OFF state. Detection signals Sd1 and Sd2 are input to the interface group 410. The interface group 410 outputs a count value Nn as rotation information indicating the number of turns of the motor 210 (the rotation shaft 210a) to the microcomputer 420 based on the detection signals Sd1 and Sd2 as will be described later.

The drive circuit 430 is connected to the onboard power supply 520 via a power supply line 55 and a drive relay 56 which includes a mechanical relay, a field effect transistor (FET), or the like is provided in the power supply line 55. Accordingly, when the drive relay 56 is turned on and the power supply line 55 is electrified, the drive circuit 430 can supply drive power to the motor 210 based on a source voltage of the onboard power supply 520.

The microcomputer 420 is connected to the onboard power supply 520 via the interface group 410, and operates when the microcomputer 420 is supplied with a control voltage Vco in a predetermined voltage range from the interface group 410 in the case where the start signal Sig is in the ON state. When the control voltage Vco is supplied to the microcomputer 420 from the interface group 410 and the operation of the microcomputer 420 is started, the microcomputer 420 outputs a relay signal Srl to the drive relay 56 to electrify the power supply line 55. Accordingly, when a driver operates the start switch 350 to the ON state, the microcomputer 420 is supplied with the control voltage Vco from the interface group 410 and operates and the drive relay 56 is switched to the ON state, and thus, drive power can be supplied to the motor 210.

The detection signal Sd1 and the count value Nn are input to the microcomputer 420. The microcomputer 420 computes the rotation angle of the motor 210 as a relative angle from the detection signal Sd1 using an arctangent function. A relationship among the rotation angle, the count value Nn of the motor 210, and the steering angle is set in advance in the microcomputer 420 based on a gear ratio of the rack and pinion mechanism 17 and a conversion coefficient which is determined by lead of the conversion mechanism 23 and the reduction ratio of the transmission mechanism 22, and the microcomputer 420 computes the steering angle as an absolute angle including a range greater than 360° based on the computed rotation angle and the computed count value Nn of the motor 210. The vehicle speed SPD and the steering torque T are input to the microcomputer 420. The microcomputer 420 generates a motor control signal based on the steering angle, the vehicle speed SPD, and the steering torque T and outputs the generated motor control signal to the drive circuit 430. Accordingly, driving power corresponding to state quantities detected by the sensors is supplied to the motor 210 and thus, the operation of the motor 210 is controlled.

The configuration of the interface group 410 will be described below. The interface group 410 includes a primary circuit 60 that computes the count value Nn as rotation information indicating the rotational state of the motor 210 based on the detection signals Sd1 and Sd2. The primary circuit 60 includes a power supply circuit 61 that steps down a source voltage of the onboard power supply 520 to a control voltage Vco in a predetermined voltage range. The first and second connection lines 510 and 540 are connected to an input side of the power supply circuit 61. An output side of the power supply circuit 61 is connected to the microcomputer 420 via a microcomputer connection line 62 and is connected to circuits constituting the interface group 410. In FIG. 6, for the purpose of convenience of description, connection lines connecting the power supply circuit 61 to the circuits constituting the interface group 410 are not illustrated. The power supply circuit 61 supplies the control voltage Vco to the microcomputer 420 only when the start switch 350 is in the ON state and constantly supplies the control voltage Vco to the circuits constituting the interface group 410 regardless of whether the start switch 350 is in the ON or OFF state. Accordingly, the circuits constituting the interface group 410 operate when the start switch 350 is in the OFF state as well as when the start switch 350 is in the ON state. The primary circuit 60 in this embodiment intermittently acquires the detection signals Sd1 and Sd2 and computes the count value Nn in a predetermined intermittent cycle when the start switch 350 is in the OFF state, and constantly acquires the detection signals Sd1 and Sd2 and computes the count value Nn in a predetermined computation cycle when the start switch 350 is in the ON state. The predetermined intermittent cycle is set to a cycle in which a quadrant of a rotation angle does not changed from a certain quadrant to a quadrant next to a quadrant adjacent to the certain quadrant even when the steering angle changes due to various factors at the time of detecting in which of first to fourth quadrants the rotation angle of the motor 210 (the rotation shaft 210a) is located. A rotation range of the motor 210 (the rotation shaft 210a) is divided into the first to fourth quadrants.

The primary circuit 60 includes an A/D converter 63 that converts the detection signal Sd1 in an A/D conversion manner and an A/D converter 64 that converts the detection signal Sd2 in an A/D conversion manner. The primary circuit 60 includes a rotation direction detecting circuit 65 that detects in which of the first to fourth quadrants the rotation angle of the motor 210 (the rotation shaft 210a) is located based on the detection signal Sd1' subjected to the A/D conversion and detects a rotation direction of the motor 210 based on the change of the quadrant in which the rotation angle is located. The primary circuit 60 includes a computation redundant circuit 66 that detects the rotation direction of the motor 210 based on the detection signal Sd1' and a sensor redundant circuit 67 that detects the rotation direction of the motor 210 based on the detection signal Sd2'. The primary circuit 60 includes a counter 68 that counts the count value Nn indicating the number of turns of the motor 210 based on the rotation direction of the motor 210 and a previous value output circuit 69 that outputs a previous value (i.e., an immediately preceding value) Nn-1 of the count value Nn output from the counter 68.

Specifically, the rotation direction detecting circuit 65 binarizes the input detection signal Sd1' (the sin signal and the cos signal) into a Hi level and a Lo level depending on a signal level thereof, and detects in which of the first to fourth quadrants the rotation angle of the motor 210 is located depending on combinations (total four sets) of the signal level of the sin signal and the signal level of the cos signal. When the quadrant in which the rotation angle of the motor 210 is located in the latest computation cycle is different from the quadrant in which the rotation angle of the motor 210 is located in the previous computation cycle (i.e., the immediately preceding cycle), in other words, when the quadrant in which the rotation angle of the motor 210 is located in the previous computation cycle changes to the quadrant in which the rotation angle of the motor 210 is located in the latest computation cycle, the rotation direction detecting circuit 65 determines that the motor 210 is rotated to right or left depending on the change. The rotation direction detecting circuit 65 determines that the motor 210 is not rotated when the quadrant in which the rotation angle of the motor 210 is located does not change. That is, the rotation direction detecting circuit 65 detects the rotation direction of the motor 210 based on the change of the quadrant in which the rotation angle of the motor 210 is located. A rotation direction signal Srd indicating the detected rotation direction of the motor 210 is output to a computed rotation direction comparison circuit 72, a sensor rotation direction comparison circuit 73, and a counter comparison circuit 74 which will be described later in addition to the counter 68.

The computation redundant circuit 66 detects the rotation direction of the motor 210 by performing the same computing process as in the rotation direction detecting circuit 65 based on the input detection signal Sd1'. A computation redundant signal Scp indicating the detected rotation direction of the motor 210 is output to the computed rotation direction comparison circuit 72.

The sensor redundant circuit 67 detects the rotation direction of the motor 210 by performing the same computing process as in the rotation direction detecting circuit 65 based on the input detection signal Sd2'. A sensor redundant signal Ssp indicating the detected rotation direction of the motor 210 is output to the sensor rotation direction comparison circuit 73.

The counter 68 computes the count value Nn indicating the number of turns of the motor 210 based on the rotation direction signal Srd. The counter 68 in this embodiment sets the number of turns at a neutral steering position at which the vehicle travels ahead to zero, sets the number of turns when the motor 210 rotates to right from the neutral steering position to be positive, and sets the number of turns when the motor 210 rotates to left from the neutral steering position to be negative. The relationship between the rotation direction of the motor 210 and the sign of the count value Nn may be reversed. The counter 68 increases the count value Nn (Nn=Nn-1+1) when the rotation direction of the motor 210 indicated by the input rotation direction signal Srd is a rightward direction and decreases the count value Nn (Nn=Nn-1-1) when the rotation direction of the motor 210 is a leftward direction. The counter 68 maintains the count value Nn when the motor 210 does not rotate. The count value Nn which is computed in this way is output to the previous value output circuit 69, the counter comparison circuit 74, and the microcomputer 420.

The previous value output circuit 69 stores the input count value Nn in at least two computation cycles. The previous value output circuit 69 outputs the previous value Nn-1 to the counter comparison circuit 74 each time the count value Nn is input.

The interface group 410 includes an abnormality detecting circuit 70 that detects an abnormality of the primary circuit 60. The abnormality detecting circuit 70 includes a voltage abnormality detecting circuit 71 that detects an abnormality of the power supply circuit 61, a computed rotation direction comparison circuit 72 that detects an abnormality of the rotation direction detecting circuit 65, a sensor rotation direction comparison circuit 73 that detects an abnormality of the detection signals Sd1' and Sd2', and a counter comparison circuit 74 that detects an abnormality of the counter 68.

Specifically, the voltage abnormality detecting circuit 71 detects an abnormality of the power supply circuit 61 based on whether the control voltage Vco output from the power supply circuit 61 is in a predetermined voltage range. Specifically, the voltage abnormality detecting circuit 71 detects the control voltage Vco output from the power supply circuit 61 and sets a voltage abnormality flag (not illustrated) indicating that an abnormality has occurred in the power supply circuit 61 when the control voltage Vco is greater than an upper limit value Vup of the predetermined voltage range or less than a lower limit value Vlo of the predetermined voltage range. On the other hand, the voltage abnormality detecting circuit 71 does not set the voltage abnormality flag when the control voltage Vco is equal to or less than the upper limit value Vup or equal to or greater than the lower limit value Vlo.

The computed rotation direction comparison circuit 72 detects an abnormality of the rotation direction detecting circuit 65 based on the rotation direction signal Srd and the computation redundant signal Scp. Specifically, the computed rotation direction comparison circuit 72 sets a computation abnormality flag (not illustrated) indicating that an abnormality has occurred in the rotation direction detecting circuit 65 when the rotation direction of the motor 210 indicated by the rotation direction signal Srd and the rotation direction of the motor 210 indicated by the computation redundant signal Scp are different from each other. On the other hand, the computed rotation direction comparison circuit 72 does not set the computation abnormality flag when the rotation direction of the motor 210 indicated by the rotation direction signal Srd and the rotation direction of the motor 210 indicated by the computation redundant signal Scp coincide with each other.

The sensor rotation direction comparison circuit 73 detects an abnormality of the detection signals Sd1' and Sd2' based on the rotation direction signal Srd and the sensor redundant signal Ssp. Specifically, the sensor rotation direction comparison circuit 73 sets a sensor abnormality flag (not illustrated) indicating that an abnormality has occurred in the detection signals Sd1' and Sd2' when the rotation direction of the motor 210 indicated by the rotation direction signal Srd and the rotation direction of the motor 210 indicated by the sensor redundant signal Ssp are different from each other. On the other hand, the sensor rotation direction comparison circuit 73 does not set the sensor abnormality flag when the rotation direction of the motor 210 indicated by the rotation direction signal Srd and the rotation direction of the motor 210 indicated by the sensor redundant signal Ssp coincide with each other.

The counter comparison circuit 74 detects an abnormality of the counter 68 based on the rotation direction signal Srd, the count value Nn, and the previous value Nn-1. Specifically, the counter comparison circuit 74 sets a counter abnormality flag (not illustrated) indicating that an abnormality has occurred in the counter 68 when a difference between the count value Nn and the previous value Nn-1 does not match the rotation direction of the motor 210 indicated by the rotation direction signal Srd, for example, when the motor 210 does not rotate but the count value Nn and the previous value Nn-1 are different from each other. On the other hand, the counter comparison circuit 74 does not set the counter abnormality flag when the difference between the count value Nn and the previous value Nn-1 matches the rotation direction of the motor 210 indicated by the rotation direction signal Srd.

When at least one of the above-mentioned abnormality flags is set, the microcomputer 420 notifies the situation via a warning lamp (not illustrated) or the like and stops computation of a steering angle. Here, when an abnormality has occurred in the abnormality detecting circuit, an abnormality of the count value Nn computed by the primary circuit 60 may not be detected. In consideration thereof, the interface group 410 in this embodiment includes a built-in self-test (BIST) circuit 80 that diagnoses the abnormality detecting circuit 70 (i.e., that determines whether an abnormality has occurred in the abnormality detecting circuit 70). The BIST circuit 80 includes a power supply BIST circuit 81 that diagnoses the voltage abnormality detecting circuit 71 (i.e., that determines whether an abnormality has occurred in the voltage abnormality detecting circuit 71), a computation BIST circuit 82 that diagnoses the computed rotation direction comparison circuit 72 (i.e., that determines whether an abnormality has occurred in the computed rotation direction comparison circuit 72), a sensor BIST circuit 83 that diagnoses the sensor rotation direction comparison circuit 73 (i.e., that determines whether an abnormality has occurred in the sensor rotation direction comparison circuit 73), and a counter BIST circuit 84 that diagnoses the counter comparison circuit 74 (i.e., that determines whether an abnormality has occurred in the counter comparison circuit 74).

Specifically, when at least one of the upper limit value Vup and the lower limit value Vlo is changed at the time of diagnosis of the voltage abnormality detecting circuit 71, the power supply BIST circuit 81 diagnoses the voltage abnormality detecting circuit 71 based on whether the voltage abnormality detecting circuit 71 sets the voltage abnormality flag. Specifically, for example, when the control voltage Vco is outside the predetermined voltage range but the voltage abnormality detecting circuit 71 does not set the voltage abnormality flag, the power supply BIST circuit 81 sets a power supply BIST abnormality flag (not illustrated) indicating that an abnormality has occurred in the voltage abnormality detecting circuit 71. On the other hand, for example, when the control voltage Vco is outside the predetermined voltage range and thus the voltage abnormality detecting circuit 71 sets the voltage abnormality flag, the power supply BIST circuit 81 does not set the power supply BIST abnormality flag.

When a test signal Scb indicating the rotation directions of the motor 210 is transmitted at the time of diagnosis of the computed rotation direction comparison circuit 72, the computation BIST circuit 82 diagnoses the computed rotation direction comparison circuit 72 based on whether the computed rotation direction comparison circuit 72 sets the computation abnormality flag. Specifically, for example, when the test signal Scb indicating different rotation directions is transmitted but the computed rotation direction comparison circuit 72 does not set the computation abnormality flag, the computation BIST circuit 82 sets a computation BIST abnormality flag (not illustrated) indicating that an abnormality has occurred in the computed rotation direction comparison circuit 72. On the other hand, for example, when the test signal Scb indicating different rotation directions is transmitted and thus the computed rotation direction comparison circuit 72 sets the computation abnormality flag, the computation BIST circuit 82 does not set the computation BIST abnormality flag.

When a test signal Ssb indicating the rotation directions of the motor 210 is transmitted at the time of diagnosis of the sensor rotation direction comparison circuit 73, the sensor BIST circuit 83 diagnoses the sensor rotation direction comparison circuit 73 based on whether the sensor rotation direction comparison circuit 73 sets the sensor abnormality flag. Specifically, for example, when the test signal Ssb indicating different rotation directions is transmitted but the sensor rotation direction comparison circuit 73 does not set the sensor abnormality flag, the sensor BIST circuit 83 sets a sensor BIST abnormality flag (not illustrated) indicating that an abnormality has occurred in the sensor rotation direction comparison circuit 73. On the other hand, for example, when the test signal Ssb indicating different rotation directions is transmitted and thus the sensor rotation direction comparison circuit 73 sets the sensor abnormality flag, the sensor BIST circuit 83 does not set the sensor BIST abnormality flag.

When a test signal Snb indicating the rotation direction and the count value Nn of the motor 210 is transmitted at the time of diagnosis of the counter comparison circuit 74, the counter BIST circuit 84 diagnoses the counter comparison circuit 74 based on whether the counter comparison circuit 74 sets the counter abnormality flag. Specifically, for example, when the test signal Snb in which a difference between the count value Nn and the previous value Nn-1 does not match the rotation direction of the motor 210 is transmitted but the counter comparison circuit 74 does not set the counter abnormality flag, the counter BIST circuit 84 sets a counter BIST abnormality flag (not illustrated) indicating that an abnormality has occurred in the counter comparison circuit 74. On the other hand, for example, when the test signal Snb in which the difference between the count value Nn and the pervious value Nn-1 does not match the rotation direction of the motor 210 is transmitted and thus the counter comparison circuit 74 sets the counter abnormality flag, the counter BIST circuit 84 does not set the counter BIST abnormality flag.

When at least one of the above-mentioned BIST abnormality flags is set, the microcomputer 420 notifies the situation via a warning lamp (not illustrated) or the like and stops computation of a steering angle. The operation of the steering controller 6 will be described below.

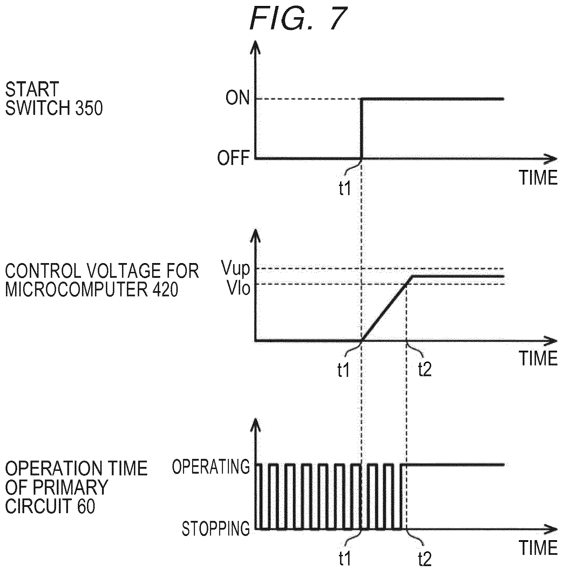

As illustrated in FIG. 7, when the start switch 350 is turned off, the control voltage Vco is not supplied from the interface group 410 (the power supply circuit 61) to the microcomputer 420 and thus the microcomputer 420 stops. At this time, the primary circuit 60 intermittently acquires the detection signals Sd1 and Sd2 in a predetermined intermittent cycle and detects the rotation direction and the count value Nn of the motor 210, and the abnormality detecting circuit 70 detects an abnormality of the primary circuit 60. Accordingly, when the start switch 350 is in the OFF state but, for example, the steering wheel 10 is steered, the count value Nn increases or decreases through the computing process in the interface group 410.

Here, when the start switch 350 is turned on at time t1, the control voltage Vco which is supplied to the microcomputer 420 increases, the control voltage Vco enters a predetermined voltage range and is stabilized at time t2, and the computing process in the microcomputer 420 is started. At this time, the microcomputer 420 detects a steering angle based on the count value Nn which continues to be increased or decreased by the interface group 410 even when the start switch 350 is turned off. Accordingly, the steering angle computed by the microcomputer 420 includes the change in angle which occurs when the start switch 350 is in the OFF state.

In an initial period until the control voltage Vco supplied to the microcomputer 420 is stabilized, that is, in a period from time t1 to time t2, the primary circuit 60 and the abnormality detecting circuit 70 intermittently operate in the same manner as when the start switch 350 is in the OFF state. After time t2, the primary circuit 60 continuously acquires the detection signals Sd1 and Sd2 and detects the rotation direction and the count value Nn, and the abnormality detecting circuit 70 detects an abnormality in the primary circuit 60. Then, in the interface group 410, diagnosis is performed by the power supply BIST circuit 81, the computation BIST circuit 82, the sensor BIST circuit 83, and the counter BIST circuit 84 in the initial period immediately before or after the primary circuit 60 and the abnormality detecting circuit 70 intermittently operate.

Operations and advantages in this embodiment will be described below.
(1) Since the interface group 410 includes the BIST circuit 80 that diagnoses the abnormality detecting circuit 70, the BIST circuit 80 can detect that an abnormality has occurred in the abnormality detecting circuit 70. Accordingly, when an abnormality has occurred in the count value Nn which is computed by the primary circuit 60, it is possible to prevent occurrence of a situation where the abnormality is not detected by the abnormality detecting circuit 70 and thus the count value Nn in which the abnormality has occurred (i.e., the abnormal count value Nn) is output. As a result, it is possible to improve reliability of the count value Nn which is output from the interface group 410 (the primary circuit 60).
(2) Since the BIST circuit 80 diagnoses the abnormality detecting circuit 70 in the initial period until the control voltage Vco is stabilized after the start switch 350 is turned on, that is, before the microcomputer 420 starts the process of computing the steering angle and the like, it is possible to prevent the diagnosis performed by the BIST circuit 80 from affecting the computation process in the microcomputer 420.
(3) The BIST circuit 80 diagnoses the abnormality detecting circuit 70 when the primary circuit 60 and the abnormality detecting circuit 70 do not perform the process of computing the count value Nn based on the detection signals Sd1 and Sd2 which are detected by the first and second rotation angle sensors 330 and 340. Accordingly, it is possible to prevent the diagnosis performed by the BIST circuit 80 from affecting computation of the count value Nn or detection of an abnormality.
(4) Since the voltage abnormality detecting circuit 71 that detects an abnormality of the power supply circuit 61 is diagnosed by the power supply BIST circuit 81, it is possible to prevent the count value Nn computed in a state in which a normal control voltage is not supplied from being output.
(5) Since the computed rotation direction comparison circuit 72 that detects an abnormality of the rotation direction detecting circuit 65 based on the rotation direction signal Srd and the computation redundant signal Scp is diagnosed by the computation BIST circuit 82, it is possible to prevent the rotation direction which is detected through a computation having an abnormality (i.e., an abnormal computation) from being output to the counter 68.
(6) Since the sensor rotation direction comparison circuit 73 that detects an abnormality of the detection signals Sd1' and Sd2' based on the rotation direction signal Srd and the sensor redundant signal Ssp is diagnosed by the sensor BIST circuit 83, it is possible to prevent the rotation direction which is detected based on the detection signal Sd1' having an abnormality (i.e., the abnormal detection signal Sd1') from being output to the counter 68.
(7) Since the counter comparison circuit 74 that detects an abnormality of the counter 68 based on the result of comparison between a count value Nn and a previous value Nn-1 thereof in consideration of the rotation direction is diagnosed by the counter BIST circuit 84, it is possible to prevent the count value Nn having an abnormality from being output to the microcomputer 420.

This embodiment may be modified as follows. This embodiment and the following modified examples may be combined with each other as long as they are not technically contradictory to each other. In this embodiment, the interface group 410 may be stopped after the microcomputer 420 starts its computation process. In this case, the microcomputer 420 can continuously compute a steering angle by increasing or decreasing the steering angle based on the count value Nn acquired at the time of start of the computation process in accordance with the rotation angle of the motor 210 which is acquired based on the detection signal Sd1.

In the embodiment, a detection signal Sd1 is input to the microcomputer 420, but the invention is not limited thereto and, for example, a detection signal Sd1' subjected to A/D conversion may be input. That is, the interface group 410 may output the count value Nn and the detection signal Sd1' as rotation information to the microcomputer 420.

In the embodiment, the rotation direction detecting circuit 65 detects in which of the first to fourth quadrants the rotation angle of the motor 210 is located based on the binarized detection signal Sdl', but the invention is not limited thereto. For example, the rotation angle of the motor 210 may be computed from the detection signal Sd1' using an arctangent function, and the quadrant in which the computed rotation angle is located among the first to fourth quadrants may be detected. In this case, the rotation direction of the motor 210 may be detected based on the change (differential value) of the computed rotation angle. The computation redundant circuit 66 and the sensor redundant circuit 67 may detect the rotation direction of the motor 210 similarly using a different method.

In the embodiment, the primary circuit 60 may not include, for example, the computation redundant circuit 66 as long as the primary circuit 60 includes at least the power supply circuit 61, the A/D converter 63, the rotation direction detecting circuit 65, and the counter 68. The configuration of the primary circuit 60 may be appropriately modified.

In the embodiment, the abnormality detecting circuit 70 includes the voltage abnormality detecting circuit 71, the computed rotation direction comparison circuit 72, the sensor rotation direction comparison circuit 73, and the counter comparison circuit 74, but the invention is not limited thereto. As long as the abnormality detecting circuit 70 includes at least one of the circuits, other circuits may not be excluded and the configuration of the abnormality detecting circuit 70 may be appropriately modified.

In the embodiment, the power supply BIST circuit 81 diagnoses the voltage abnormality detecting circuit 71 based on whether the voltage abnormality detecting circuit 71 sets the voltage abnormality flag when at least one of the upper limit value Vup and the lower limit value Vlo is changed. However, the invention is not limited thereto and, for example, when a test signal indicating a voltage is transmitted to the voltage abnormality detecting circuit 71, the power supply BIST circuit 81 may diagnose the voltage abnormality detecting circuit 71 based on whether the voltage abnormality detecting circuit 71 sets the voltage abnormality flag. The diagnosis methods in the computation BIST circuit 82, the sensor BIST circuit 83, and the counter BIST circuit 84 may be appropriately modified.

In the embodiment, the BIST circuit 80 includes the power supply BIST circuit 81, the computation BIST circuit 82, the sensor BIST circuit 83, and the counter BIST circuit 84, but the invention is not limited thereto. As long as the BIST circuit 80 includes at least one of the circuits, other circuits may be excluded and the configuration of the BIST circuit 80 may be appropriately modified.

In the embodiment, the computing device includes the interface group 410, but the invention is not limited thereto, and the computing device may be, for example, an application specific integrated circuit (ASIC) that is dedicated hardware or a microcomputer that performs the same or similar process in accordance with a program.

In the embodiment, the EPS 110 is employed as a steering system which is to be controlled by the steering controller 6 and the microcomputer 420 computes the steering angle of the steering wheel 10 (the steering shaft 11), but the invention is not limited thereto. For example, a steer-by-wire (SBW) steering system may be employed and the microcomputer 420 may compute a rotation angle of a pinion shaft which is a rotation shaft, as an absolute angle. The rotation angle of the pinion shaft can be converted into a turning angle of the turning wheels 15.

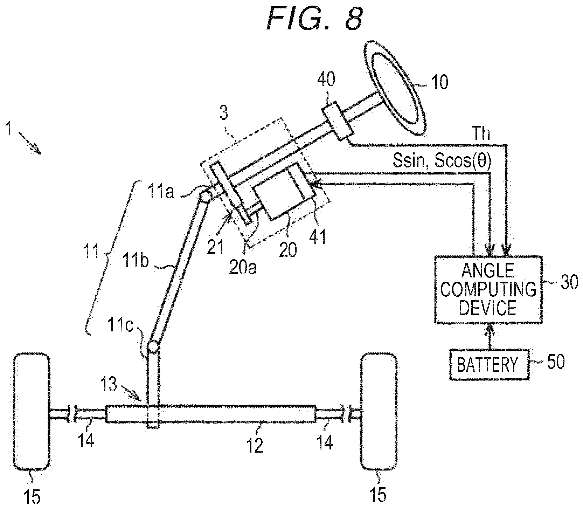

Hereinafter, an angle computing device according to a third embodiment which is provided in an electric power steering system (hereinafter referred to as an "EPS") will be described below. As illustrated in FIG. 8, the EPS includes a steering mechanism 1 that turns turning wheels 15 based on a driver's operation for a steering wheel 10, an actuator 3 including a motor 20 that generates an assist force for assisting the steering operation in the steering mechanism 1, and an angle computing device 30 that detects a rotation angle θ of the motor 20 and controls the motor 20.

The steering mechanism 1 includes a steering shaft 11 that is connected to the steering wheel 10 and a rack shaft 12 serving as a turning shaft that reciprocates in the axial direction thereof in accordance with rotation of the steering shaft 11. The steering shaft 11 includes a column shaft 11a that is connected to the steering wheel 10, an intermediate shaft 11b that is connected to the lower end of the column shaft 11a, and a pinion shaft 11c that is connected to the lower end of the intermediate shaft 11b. The rack shaft 12 and the pinion shaft 11c are arranged to have a predetermined crossing angle, and rack teeth formed in the rack shaft 12 engage with pinion teeth formed in the pinion shaft 11c to constitute a rack and pinion mechanism 13. Tie rods 14 are respectively connected to both ends of the rack shaft 12, and tips of the tie rods 14 are respectively connected to knuckles (not illustrated) to which the turning wheels 15 are fitted. Accordingly, in the EPS, a rotational motion of the steering shaft 11 based on a steering operation is converted to a reciprocating straight motion of the rack shaft 12 in the axial direction via the rack and pinion mechanism 13. The reciprocating straight motion in the axial direction is transmitted to the knuckles via the tie rods 14 and thus a turning angle of the turning wheels 15, that is, a traveling direction of a vehicle, is changed.

The actuator 3 includes a motor 20 and a reduction mechanism 21. A rotation shaft 20a of the motor 20 is connected to the column shaft 11a via the reduction mechanism 21. The rotation shaft 20a of the motor 20 can rotate by multiple turns. The reduction mechanism 21 reduces a rotational speed (a rotational force) of the motor 20 and transmits the reduced rotational force to the column shaft 11a. That is, a driver's steering operation is assisted by applying a torque of the motor 20 as an assist force to the steering shaft 11.

The angle computing device 30 controls the motor 20 based on detection results from various sensors which are provided in a vehicle. For example, a torque sensor 40 and a rotation angle sensor 41 are provided as various sensors. The torque sensor 40 is provided on the column shaft 11a. The torque sensor 40 detects a steering torque Th which is applied to the steering shaft 11 in accordance with a driver's steering operation. The rotation angle sensor 41 is provided in the motor 20. The rotation angle sensor 41 generates a detection signal for computing an actual rotation angle θ of the rotation shaft 20a of the motor 20 and outputs the generated detection signal as a voltage value. The angle computing device 30 computes the actual rotation angle θ of the motor 20 based on the detection signal which is generated by the rotation angle sensor 41. A magnetic sensor that generates a detection signal by detecting magnetism varying in accordance with rotation of the rotation shaft 20a of the motor 20 is employed as the rotation angle sensor 41. For example, a magnetoresistance effect (MR) sensor is employed as the magnetic sensor. The rotation angle sensor 41 includes a bridge circuit including two magnetic sensor elements, and generates electrical signals (voltages) using the magnetic sensor elements. A phase of the electrical signal which is generated by one magnetic sensor element is deviated by 90 degrees from a phase of the electrical signal which is generated by the other magnetic sensor element. Therefore, in this embodiment, the electrical signal which is generated by one magnetic sensor element is regarded as a sine wave signal Ssin and the electrical signal which is generated by the other magnetic sensor element is regarded as a cosine wave signal Scos. The sine wave signal Ssin and the cosine wave signal Scos are detection signals of the rotation angle sensor 41. The angle computing device 30 computes the rotation angle θ of the motor 20 based on the detection signals (the sine wave signal Ssin and the cosine wave signal Scos) detected by the rotation angle sensor 41. The angle computing device 30 sets a target torque to be applied to the steering mechanism 1 based on output values of the sensors and controls electric power which is supplied to the motor 20 such that the actual torque of the motor 20 reaches the target torque.

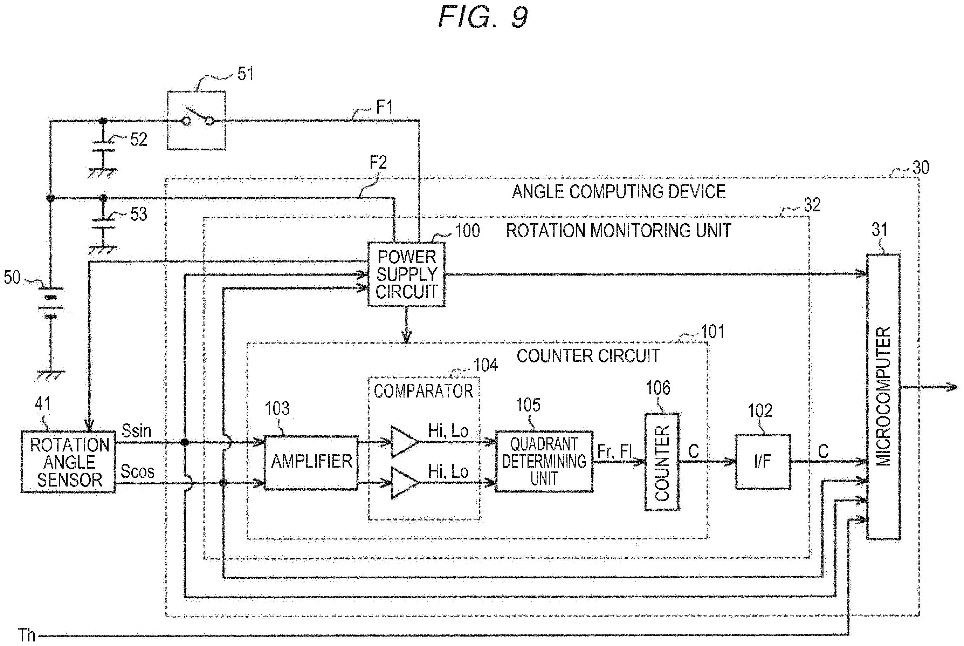

The configuration of the angle computing device 30 will be described below. As illustrated in FIG. 9, the angle computing device 30 includes a microcomputer 31 and a rotation monitoring unit 32. The microcomputer 31 is an example of a first computing unit and the rotation monitoring unit 32 is an example of a second computing unit. The rotation angle sensor 41 is an example of a detection unit.

The microcomputer 31 computes a rotation angle θ of the motor 20 and controls electric power which is supplied to the motor 20 when an ignition switch 51 is in an ON state. The microcomputer 31 computes the rotation angle θ of the motor 20 in a predetermined computation cycle. The computation cycle of the microcomputer 31 is set to a short cycle that makes it possible to promptly detect rotation of the rotation shaft 20a of the motor 20. A power source of electric power which is supplied to the motor 20 is a battery 50. The microcomputer 31 includes, for example, a micro processing unit. The rotation monitoring unit 32 is connected to the microcomputer 31. The rotation monitoring unit 32 is formed by packaging a logic circuit in which electronic circuits or flip-flops are combined. The rotation monitoring unit 32 is a so-called application specific integrated circuit (ASIC). The microcomputer 31 reads a program stored in a storage unit thereof and performs a computation based on the program. The rotation monitoring unit 32 performs a predetermined computation in response to a specific input (a detection signal from the rotation angle sensor 41 herein).

A power supply circuit 100 that steps down a voltage of electric power supplied from the battery 50 and supplies a constant voltage is provided in the rotation monitoring unit 32. An ignition switch 51 serving as a start switch that switches between supply and interruption of electric power from the battery 50 is provided in a first power supply line F1 between the battery 50 and the power supply circuit 100. When a driver operates a switch which is provided in a vehicle, the ignition switch 51 is switched between ON and OFF states. When the ignition switch 51 is in the ON state, electric power is supplied between the battery 50 and the power supply circuit 100 via the ignition switch 51. When the ignition switch 51 is in the OFF state, the supply of electric power between the battery 50 and the power supply circuit 100 is interrupted by the ignition switch 51.

When electric power is supplied between the battery 50 and the power supply circuit 100 via the ignition switch 51, electric power is supplied to the microcomputer 31. That is, when the ignition switch 51 is on, electric power is supplied to the microcomputer 31 via the first power supply line F1 and the microcomputer 31 operates. On the other hand, when supply of electric power between the battery 50 and the power supply circuit 100 is interrupted by the ignition switch 51, electric power is not supplied to the microcomputer 31. That is, when the ignition switch 51 is in the OFF state, electric power is not supplied to the microcomputer 31 and the microcomputer 31 stops its operation.

The battery 50 is connected to the power supply circuit 100 via a second power supply line F2. That is, the rotation monitoring unit 32 is constantly supplied with electric power from the battery 50 regardless of whether the ignition switch 51 is in the ON or OFF state. The rotation angle sensor 41 is connected to the rotation monitoring unit 32. The rotation angle sensor 41 is also connected to the microcomputer 31.

A first capacitor 52 and a second capacitor 53 are provided in the power supply lines (the first power supply line F1 and the second power supply line F2) between the battery 50 and the power supply circuit 100. The first capacitor 52 is provided closer to the battery 50 than the ignition switch 51 in the first power supply line F1. The second capacitor 53 is provided in the second power supply line F2. The first capacitor 52 and the second capacitor 53 are grounded. The first capacitor 52 smooths a voltage of electric power which is supplied to the first power supply line F1. The second capacitor 53 smooths a voltage of electric power which is supplied to the second power supply line F2. When electric power supplied to at least one of the first power supply line F1 and the second power supply line F2 is interrupted, for example, instantaneous interruption or instantaneous drop has occurred in the microcomputer 31. The instantaneous interruption means that electric power supplied to the microcomputer 31 is instantaneously interrupted. The instantaneous drop means that electric power supplied to the microcomputer 31 instantaneously becomes less than a predetermined value (for example, a voltage value at which the microcomputer 31 can operate). When the instantaneous interruption or the instantaneous drop occurs, electric power supplied to the microcomputer 31 becomes less than a voltage value at which the microcomputer 31 can operate in any case. The instantaneous interruption and the instantaneous drop occurs, for example, when a connector for connecting the battery 50 to the angle computing device 30 is almost detached due to vibration or when a positive-side voltage of the battery 50 decreases temporarily. The case where the connector is almost detached due to vibration includes a case where a connector on the first power supply line F1-side is almost detached, a case where a connector on the second power supply line F2-side is almost detached, and a case where connectors on both sides are almost detached. The instantaneous interruption or the instantaneous drop occurs, for example, in a time of several tens of milliseconds to several hundreds of milliseconds.

The rotation monitoring unit 32 includes a counter circuit 101 and a communication interface 102. The counter circuit 101 is supplied with electric power from the battery 50 regardless of whether the ignition switch 51 is in the ON or OFF state. The communication interface 102 is supplied with electric power from the battery 50 when the ignition switch 51 is in the ON state.

The counter circuit 101 acquires detection signals (a sine wave signal Ssin and a cosine wave signal Scos) which are generated by the rotation angle sensor 41. The counter circuit 101 computes a count value C which is used to compute the rotation angle θ of the motor 20 based on the detection signals. The count value C is turn number information indicating the number of turns of the motor 20. In this embodiment, the count value C is information indicating by how many turns a rotational position of the rotation shaft 20a of the motor 20 rotates with respect to a reference position thereof (a neutral position).

The counter circuit 101 includes an amplifier 103, a comparator 104, a quadrant determining unit 105, and a counter 106. The amplifier 103 acquires voltage values (the sine wave signal Ssin and the cosine wave signal Scos) which are generated by the rotation angle sensor 41. The amplifier 103 amplifies the voltage values acquired from the rotation angle sensor 41 and outputs the amplified voltage values to the comparator 104.

The comparator 104 generates a signal of a Hi level when the voltage values (the voltage values amplified by the amplifier 103) generated by the rotation angle sensor 41 are higher than a preset threshold value and generates a signal of a Lo level when the voltage values are lower than the preset threshold value. The threshold value is set to, for example, "0." That is, the comparator 104 generates a signal of a Hi level when the voltage value (the voltage value amplified by the amplifier 103) is positive and generates a signal of a Lo level when the voltage value is negative.

The quadrant determining unit 105 determines in which quadrant of four possible quadrants the rotational position of the rotation shaft 20a of the motor 20 is located based on a combination of the signals of the Hi level and/or the Lo level which are generated by the comparator 104. The reference position of the rotation shaft 20a of the motor 20 is a rotational position of the rotation shaft 20a of the motor 20, for example, when the steering wheel 10 is located at a neutral position and the rotation angle θ at this time is, for example, "0" degrees.

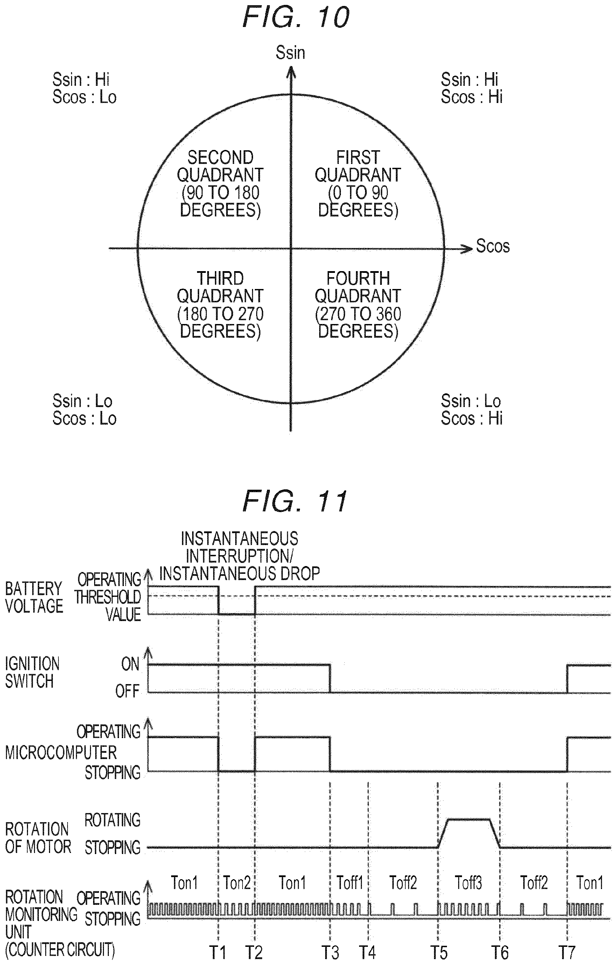

As illustrated in FIG. 10, one turn of the rotation shaft 20a of the motor 20 is divided into four quadrants at intervals of 90 degrees based on the combinations of the signals of the Hi level and the Lo level, that is, the combinations of the positive and negative signs of the detection signals. The four quadrants are specifically as follows.

A first quadrant is a quadrant in which both the sine wave signal Ssin and the cosine wave signal Scos are at the Hi level. When the rotational position of the rotation shaft 20a of the motor 20 is in the first quadrant, the rotation angle θ of the motor 20 is in a range of 0 to 90 degrees.

A second quadrant is a quadrant in which the sine wave signal Ssin is at the Hi level and the cosine wave signal Scos is at the Lo level. When the rotational position of the rotation shaft 20a of the motor 20 is in the second quadrant, the rotation angle θ of the motor 20 is in a range of 90 to 180 degrees.

A third quadrant is a quadrant in which both the sine wave signal Ssin and the cosine wave signal Scos are at the Lo level. When the rotational position of the rotation shaft 20a of the motor 20 is in the third quadrant, the rotation angle θ of the motor 20 is in a range of 180 to 270 degrees.

A fourth quadrant is a quadrant in which the sine wave signal Ssin is at the Lo level and the cosine wave signal Scos is at the Hi level. When the rotational position of the rotation shaft 20a of the motor 20 is in the fourth quadrant, the rotation angle θ of the motor 20 is in a range of 270 to 360 degrees.

As illustrated in FIG. 9, the quadrant determining unit 105 sets up a left turn flag Fl or a right turn flag Fr based on the signal of the Hi level and the signal of the Lo level which are generated by the comparator 104. The quadrant determining unit 105 determines that rotation by a unit rotation angle (90 degrees) is performed each time the quadrant in which the rotational position of the rotation shaft 20a of the motor 20 is located changes to an adjacent quadrant. The rotation direction of the rotation shaft 20a of the motor 20 is determined based on a relationship between a quadrant in which the rotational position of the rotation shaft 20a of the motor 20 is located before the motor 20 rotates and a quadrant in which the rotational position is located after the motor 20 rotates. The quadrant determining unit 105 sets up the left turn flag Fl when the quadrant in which the rotational position of the rotation shaft 20a of the motor 20 is located changes in the counterclockwise direction, for example, when the quadrant changes from the first quadrant to the second quadrant. The quadrant determining unit 105 sets up the right turn flag Fr when the quadrant in which the rotational position of the rotation shaft 20a of the motor 20 is located changes in the clockwise direction, for example, when the quadrant changes from the first quadrant to the fourth quadrant.

The counter 106 computes a count value C based on the left turn flag Fl or the right turn flag Fr which is acquired by the quadrant determining unit 105. The counter 106 is a logical circuit in which flip-flops or the like are combined. The count value C indicates the number of times of rotation of the rotational position of the rotation shaft 20a of the motor 20 by a unit rotation angle (90 degrees) with respect to a reference position thereof. The counter 106 increases the count value C (1 is added to the count value C) each time the left turn flag Fl is acquired from the quadrant determining unit 105, and decreases the count value C (1 is subtracted from the count value C) each time the right turn flag Fr is acquired from the quadrant determining unit 105. In this way, the counter 106 computes the count value C and stores the count value C each time a detection signal is generated by the rotation angle sensor 41.

The communication interface 102 outputs the count value C stored in the counter 106 to the microcomputer 31 when the ignition switch 51 is in the ON state. On the other hand, the communication interface 102 does not operate when the ignition switch 51 is in the OFF state.

The power supply circuit 100 determines that the ignition switch 51 is in the ON state or OFF state, based on an ON signal or an OFF signal which is input thereto. The power supply circuit 100 stores a plurality of cycles. The power supply circuit 100 includes an electrification unit that intermittently supplies electric power to the rotation angle sensor 41 and the counter circuit 101 in the selected cycle. The power supply circuit 100 monitors a source voltage that is the voltage of electric power which is supplied to the microcomputer 31. Since electric power which is supplied from the battery 50 to the first power supply line F1 is supplied to the microcomputer 31, the source voltage of the microcomputer 31 can be determined based on the voltage of electric power supplied to the first power supply line F1. The power supply circuit 100 determines whether the source voltage of the electric power which is supplied to the microcomputer 31 is equal to or greater than a voltage value at which the microcomputer 31 can operate. The voltage value at which the microcomputer 31 can operate is set with respect to a minimum voltage value at which the microcomputer 31 can operate. When the ignition switch 51 is in the ON state but the source voltage of electric power supplied to the microcomputer 31 is less than the voltage value at which the microcomputer 31 can operate, the power supply circuit 100 can determine, for example, that instantaneous interruption or instantaneous drop has occurred in the microcomputer 31.

When the ignition switch 51 is in the ON state and the source voltage of the electric power supplied to the microcomputer 31 is equal to or greater than the voltage value at which the microcomputer 31 can operate, the power supply circuit 100 intermittently supplies electric power to the rotation angle sensor 41 and the counter circuit 101 in a cycle Ton1 using electric power which is constantly supplied from the battery 50 via the second power supply line F2. Accordingly, the power supply circuit 100 causes the rotation angle sensor 41 and the counter circuit 101 to operate intermittently in the cycle Ton1.

On the other hand, when the ignition switch 51 is in the OFF state, the power supply circuit 100 intermittently supplies electric power to the rotation angle sensor 41 and the counter circuit 101 in a cycle Ton2 which is longer than the cycle Ton1 using the electric power which is constantly supplied from the battery 50 via the second power supply line F2.

The power supply circuit 100 intermittently supplies electric power to the rotation angle sensor 41 and the counter circuit 101 in a cycle Toff1 which is longer than the cycle Ton1 until a predetermined time elapses after the ignition switch 51 is switched from the ON state to the OFF state. Accordingly, the power supply circuit 100 causes the rotation angle sensor 41 and the counter circuit 101 to operate intermittently in the cycle Toff1 such that the count value C is intermittently computed in the cycle Toff1. The power supply circuit 100 includes a time measuring unit that measures a time after the ignition switch 51 is switched from the ON state to the OFF state. The power supply circuit 100 determines whether the predetermined time elapses after the ignition switch 51 is switched from the ON state to the OFF state based on the time measured by the time measuring unit. In this embodiment, the cycle Ton2 is substantially the same as the cycle Toff1.

When the predetermined time elapses after the ignition switch 51 is switched from the ON state to the OFF state, the power supply circuit 100 changes the cycle in which electric power is intermittently supplied to the rotation angle sensor 41 and the counter circuit 101. When the predetermined time elapses after the ignition switch 51 is switched from the ON state to the OFF state, the power supply circuit 100 intermittently supplies electric power to the rotation angle sensor 41 and the counter circuit 101 in a cycle Toff2. The cycle Toff2 is longer than the cycle Toff1.

The power supply circuit 100 acquires a detection signal which is detected by the rotation angle sensor 41. When a difference between the voltage value of the current detection signal and the voltage value of the previous detection signal (i.e., the immediately preceding detection signal) (detected in the previous computation cycle (i.e., detected in the immediately preceding computation cycle)) is equal to or greater than a threshold value, the power supply circuit 100 detects rotation of the motor 20. The threshold value is set to a value which is considered to be a difference in voltage value due to rotation of the motor 20, instead of a difference in voltage value due to an influence of noise or the like. The power supply circuit 100 changes the cycle in which electric power is intermittently supplied to the rotation angle sensor 41 and the counter circuit 101 with the change in voltage value of the detection signal detected by the rotation angle sensor 41 serving as a trigger. The power supply circuit 100 intermittently supplies electric power to the rotation angle sensor 41 and the counter circuit 101 in a cycle Toff3 when rotation of the motor 20 is detected in a period in which the ignition switch 51 is in the OFF state. The cycle Toff3 is longer than the cycle Ton1. The cycle Toff3 is shorter than the cycle Toff2. In this embodiment, the cycle Toff3 is substantially the same as the cycle Toff1 and the cycle Ton2. The computation cycle of the microcomputer 31 is set to be equal to the cycle Ton1 or shorter than the cycle Ton1. The time measuring unit of the power supply circuit 100 measures a time after rotation of the motor 20 is detected. The power supply circuit 100 does not detect rotation of the motor 20 when the difference between the voltage value of the current detection signal and the voltage value of the previous detection signal is less than the threshold value. When rotation of the motor 20 is not detected in a predetermined time after the computation cycle is switched to the cycle Toff3, the power supply circuit 100 switches the cycle Toff3 to the cycle Toff2 and intermittently supplies electric power to the rotation angle sensor 41 and the counter circuit 101 in the cycle Toff2.

When the ignition switch 51 is in the ON state, the microcomputer 31 computes the rotation angle θ of the motor 20 based on the count value C acquired by the rotation monitoring unit 32 and the detection signal generated by the rotation angle sensor 41. Specifically, the microcomputer 31 computes the rotation angle θ by computing an arctangent function from two detection signals generated by the rotation angle sensor 41. The microcomputer 31 determines by how many turns the rotation shaft 20a of the motor 20 rotates based on the count value C acquired by the rotation monitoring unit 32. One turn corresponds to 360 degrees. The microcomputer 31 computes an absolute rotation angle of the motor 20 by adding a value, which is obtained by multiplying the number of turns of the rotation shaft 20a of the motor 20 based on the count value C by 360 degrees, to the rotation angle θ. In addition, the microcomputer 31 may compute an absolute steering rotation angle from the absolute rotation angle of the motor 20 in consideration of, for example, a reduction ratio of the reduction mechanism 21 interposed between the motor 20 and the steering shaft 11. The angle computing device 30 controls electric power which is supplied to the motor 20 using the absolute rotation angle of the motor 20 which is computed in this way.

When the ignition switch 51 is in the ON state, instantaneous interruption or instantaneous drop may occur in the microcomputer 31. In this case, the source voltage of electric power which is supplied to the microcomputer 31 may be less than the voltage value at which the microcomputer 31 can operate. When instantaneous interruption or instantaneous drop has occurred in the microcomputer 31, the rotation angle θ cannot be computed by the microcomputer 31 but there is demand for prevention of loss of the rotation angle θ in the microcomputer 31.

In this regard, in this embodiment, when instantaneous interruption or instantaneous drop has occurred in the microcomputer 31, that is, when the source voltage of the electric power supplied to the microcomputer 31 is less than the voltage value at which the microcomputer 31 can operate, the rotation monitoring unit 32 computes the count value C if the rotation monitoring unit 32 can operate. An example of the case where the source voltage of the electric power supplied to the microcomputer 31 is less than the voltage value at which the microcomputer 31 can operate is a case where the source voltage of the electric power supplied to the microcomputer 31 does not reach the voltage value at which the microcomputer 31 can operate.

When the ignition switch 51 is in the ON state and the source voltage of the electric power supplied to the microcomputer 31 is less than the voltage value at which the microcomputer 31 can operate, the power supply circuit 100 intermittently supplies electric power to the rotation angle sensor 41 and the counter circuit 101 in a cycle Ton2 if the rotation monitoring unit 32 can operate. When instantaneous interruption or instantaneous drop of the battery 50 serves as a reason, the power supply circuit 100 supplies electric power to the rotation angle sensor 41 and the counter circuit 101 using electric charge stored in the second capacitor 53. The cycle Ton2 may be substantially equal to, shorter than, or longer than the cycle Toff1 and the cycle Toff3. The cycle Ton2 is an example of a first cycle.

The cycle Ton1, the cycle Ton2, the cycle Toff1, the cycle Toff2, and the cycle Toff3 are respectively set to cycles in which rotation of the rotation shaft 20a of the motor 20 by the unit rotation angle (90 degrees) is not missed in situations in which they are applied. The reason why the cycle Toff3 is set to be shorter than the cycle Toff2 is that the rotation shaft 20a of the motor 20 is likely to rotate at a higher speed when rotation of the motor 20 is detected than when rotation of the motor 20 is not detected. The cycle Toff2 is set to a cycle in which rotation of the rotation shaft 20a of the motor 20 at a low speed is not missed, and the cycle Toff3 is set to a cycle in which rotation of the rotation shaft 20a of the motor 20 at a high speed is not missed. The reason why the cycle Ton2 is set to be shorter than the cycle Toff2 is that since the ignition switch 51 is in the ON state, there is a high likelihood that the steering wheel 10 is operated by a driver. The reason why the cycle Toff1 is set to be shorter than the cycle Toff2 is that since the ignition switch 51 has been just switched from the ON state to the OFF state, there is a high likelihood that the steering wheel 10 is still operated by a driver.

The operating state of the angle computing device 30 will be described below. As illustrated in FIG. 11, when the ignition switch 51 is on (i.e., in the ON state) and the source voltage of electric power which is supplied to the microcomputer 31 is equal to or greater than a voltage value at which the microcomputer 31 can operate, the microcomputer 31 operates and computes the rotation angle θ of the motor 20. When the ignition switch 51 is in the ON state and the source voltage of electric power which is supplied to the microcomputer 31 is equal to or greater than the voltage value (an operating threshold value) at which the microcomputer 31 can operate, the rotation angle sensor 41 and the counter circuit 101 are intermittently supplied with electric power from the battery 50 and thus the counter circuit 101 intermittently computes the count value C in the cycle Ton1. The microcomputer 31 acquires the count value C via the communication interface 102 and computes the rotation angle θ of the motor 20 using the acquired count value C and the detection signal generated by the rotation angle sensor 41.

As illustrated at time T1, when the ignition switch 51 is in the ON state and the source voltage of electric power which is supplied to the microcomputer 31 is less than the voltage value at which the microcomputer 31 can operate, the microcomputer 31 stops its operation. In this case, the microcomputer 31 cannot operate due to insufficient electric power supplied thereto and cannot compute the rotation angle θ of the motor 20. On the other hand, when the ignition switch 51 is in the ON state and the source voltage of electric power which is supplied to the microcomputer 31 is less than the voltage value at which the microcomputer 31 can operate, supply of electric power to the rotation angle sensor 41 and the counter circuit 101 is maintained if the supply of electric power is possible using electric charges stored in the second capacitor 53 or the like. When the supply of electric power to the rotation angle sensor 41 and the counter circuit 101 is possible, the rotation monitoring unit 32 (the power supply circuit 100) switches the cycle Ton1 to the cycle Ton2 at a time at which the source voltage of electric power which is supplied to the microcomputer 31 becomes less than the voltage value at which the microcomputer 31 can operate, and intermittently computes the count value C in the cycle Ton2.

As illustrated at time T2, when the ignition switch 51 is in the ON state and the source voltage of electric power which is supplied to the microcomputer 31 is restored to be equal or greater than the voltage value at which the microcomputer 31 can operate from the state in which the source voltage of electric power which is supplied to the microcomputer 31 is less than the voltage value at which the microcomputer 31 can operate, the microcomputer 31 restarts computation of the rotation angle θ. The microcomputer 31 acquires the count value C which is computed by the rotation monitoring unit 32 in the period in which the ignition switch 51 is in the ON state and the source voltage of electric power which is supplied to the microcomputer 31 is less than the voltage value at which the microcomputer 31 can operate. The microcomputer 31 computes the rotation angle θ of the motor 20 using the acquired count value C and the detection signal generated by the rotation angle sensor 41. In this case, the rotation monitoring unit 32 (the power supply circuit 100) switches the cycle Ton2 to the cycle Ton1, and intermittently computes the count value C in the cycle Ton1.

As illustrated at time T3, when the ignition switch 51 is turned off, supply of electric power from the battery 50 to the microcomputer 31 is stopped. Accordingly, the microcomputer 31 stops its operation and thus stops computation of the rotation angle θ of the motor 20. On the other hand, even when the ignition switch 51 is in the OFF state, the counter circuit 101 is continuously supplied with electric power. Until a predetermined time elapses after the ignition switch 51 is switched from the ON state to the OFF state, the rotation monitoring unit 32 (the power supply circuit 100) switches the cycle Ton1 to the cycle Toff1 and intermittently computes the count value C in the cycle Toff1. When the ignition switch 51 is turned off in the period in which the source voltage of electric power which is supplied to the microcomputer 31 is less than the voltage value at which the microcomputer 31 can operate, the rotation monitoring unit 32 (the power supply circuit 100) switches the cycle Ton2 to the cycle Toff1 and intermittently computes the count value C in the cycle Toff1 until a predetermined time elapses after the ignition switch 51 is switched from the ON state to the OFF state.

As illustrated at time T4, when the predetermined time elapses after the ignition switch 51 is switched from the ON state to the OFF state, the rotation monitoring unit 32 (the power supply circuit 100) switches the cycle Toff1 to the cycle Toff2 and intermittently computes the count value C in the cycle Toff2.

As illustrated at time T5, even when the ignition switch 51 is in the OFF state, the motor 20 may rotate. For example, when the steering wheel 10 is operated, the motor 20 rotates. When a difference between the voltage value of the current detection signal and the voltage value of the previous detection signal (i.e., the immediately preceding detection signal) is equal to or greater than a threshold value, the rotation monitoring unit 32 (the power supply circuit 100) detects rotation of the motor 20. When the ignition switch 51 is in the OFF state and rotation of the motor 20 is detected, the rotation monitoring unit 32 (the power supply circuit 100) switches the cycle Toff2 to the cycle Toff3 and intermittently computes the count value C in the cycle Toff3. In this case, when the quadrant determining unit 105 determines that the quadrant, in which the rotational position of the rotation shaft 20a of the motor 20 is located, changes based on the detection signal generated by the rotation angle sensor 41, the count value C stored in the counter 106 is increased or decreased.

As illustrated at time T6, when rotation of the motor 20 has not been detected in a predetermined time after the cycle Toff2 has been switched to the cycle Toff3, the rotation monitoring unit 32 (the power supply circuit 100) switches the cycle Toff3 to the cycle Toff2 and intermittently computes the count value C in the cycle Toff2.

As illustrated at time T7, when the ignition switch 51 is turned on, supply of electric power from the battery 50 to the communication interface 102 and the microcomputer 31 is started. The microcomputer 31 acquires the count value C which is computed by the rotation monitoring unit 32 (the counter circuit 101) in the period in which the ignition switch 51 is in the OFF state via the communication interface 102. The microcomputer 31 computes the rotation angle θ of the motor 20 using the count value C and the detection signal generated by the rotation angle sensor 41. The rotation monitoring unit 32 (the power supply circuit 100) switches the cycle Toff2 (or the cycle Toff3) to the cycle Ton1 and intermittently computes the count value C in the cycle Ton1.

Operations and advantages in this embodiment will be described below.
(1) Due to instantaneous interruption or instantaneous drop in the microcomputer 31, the source voltage of electric power which is supplied to the microcomputer 31 may decrease and the microcomputer 31 may not operate. In this case, the microcomputer 31 cannot compute the rotation angle θ of the motor 20. In this embodiment, even when the source voltage of electric power which is supplied to the microcomputer 31 is less than the voltage value at which the microcomputer 31 can operate, that is, even when the source voltage of electric power which is supplied to the microcomputer 31 has not reached the voltage value at which the microcomputer 31 can operate, the rotation monitoring unit 32 operates if the rotation monitoring unit 32 can operate. In this case, the microcomputer 31 cannot compute the rotation angle θ of the motor 20, but the counter circuit 101 of the rotation monitoring unit 32 can compute the count value C. When the source voltage of electric power which is supplied to the microcomputer 31 is restored to be equal to or greater than the voltage value at which the microcomputer 31 can operate, the microcomputer 31 can promptly compute the rotation angle θ using the count value C which is computed by the counter circuit 101 in the period in which the source voltage of electric power which is supplied to the microcomputer 31 is less than the voltage value at which the microcomputer 31 can operate. Accordingly, the angle computing device 30 can prevent loss of the rotation angle θ of the motor 20 even in the period in which the source voltage of electric power which is supplied to the microcomputer 31 is less than the voltage value at which the microcomputer 31 can operate.
(2) When the rotation monitoring unit 32 operates to compute the count value C in the period in which the source voltage of electric power which is supplied to the microcomputer 31 is less than the voltage value at which the microcomputer 31 can operate, power consumption of the angle computing device 30 is reduced in comparison with a case where the microcomputer 31 computes the rotation angle θ.
(3) When the source voltage of electric power which is supplied to the microcomputer 31 is less than the operable voltage value, the counter circuit 101 of the rotation monitoring unit 32 intermittently computes the count value C in the cycle Ton2. Accordingly, it is possible to reduce power consumption of the angle computing device 30 in comparison with a case where the counter circuit 101 constantly computes the count value C.
(4) When the source voltage of electric power which is supplied to the microcomputer 31 is less than the operable voltage value, it is necessary to reduce power consumption of the angle computing device 30 in comparison with a case where the source voltage of electric power which is supplied to the microcomputer 31 is equal to or greater than the operable voltage value. Therefore, in this embodiment, the power supply circuit 100 intermittently supplies electric power to the rotation angle sensor 41 and the counter circuit 101 in the cycle Ton2 when the ignition switch 51 is in the ON state and the source voltage of electric power which is supplied to the microcomputer 31 is less than the voltage value at which the microcomputer 31 can operate. Since the counter circuit 101 intermittently computes the count value C in the cycle Ton2 which is longer than the cycle Ton1, it is possible to reduce a frequency of computation of the count value C performed by the counter circuit 101. Accordingly, when the source voltage of electric power which is supplied to the microcomputer 31 is less than the voltage value at which the microcomputer 31 can operate in the period in which the ignition switch 51 is in the ON state, it is possible to reduce the power consumption of the rotation monitoring unit 32 (the counter circuit 101).
(5) When the ignition switch 51 is in the OFF state, it is necessary to achieve reduction of power consumption in the angle computing device 30 and prevention of loss of the rotation angle θ of the motor 20. In this regard, since the rotation speed of the motor 20 increases gradually after the rotation shaft 20a of the motor 20 starts its rotation, the quadrant in which the rotational position of the rotation shaft 20a of the motor 20 is located is likely to change when rotation of the motor 20 is detected. Therefore, in this embodiment, in a situation where rotation of the motor 20 is likely to be detected, the counter circuit 101 of the rotation monitoring unit 32 intermittently computes the count value C in the cycle Toff3 which is shorter than the cycle Toff2 that is employed in the situation where rotation of the motor 20 is not detected. Accordingly, when the ignition switch 51 is in the OFF state, the rotation monitoring unit 32 can compute the count value C without missing rotation of the rotation shaft 20a of the motor 20 by a unit rotation angle while power consumption in the rotation monitoring unit 32 is reduced. Thus, it is possible to improve computation accuracy for the count value C. Accordingly, in the period in which the ignition switch 51 is in the OFF state, it is possible to achieve reduction of power consumption in the angle computing device 30 and prevention of loss of the rotation angle θ of the motor 20 together.
(6) In a situation where rotation of the motor 20 is not detected, the rotation monitoring unit 32 can intermittently compute the count value C in the cycle Toff2 which is longer than the cycle Toff3 employed in the situation where rotation of the motor 20 is detected. Thus, it is possible to reduce power consumption in the angle computing device 30.
(7) When the motor 20 is rotating, the voltage value of the detection signal detected by the rotation angle sensor 41 changes. Therefore, in this embodiment, the power supply circuit 100 of the rotation monitoring unit 32 can detect rotation of the motor 20 by determining the change of the voltage value of the detection signal based on the difference between the voltage value of the current detection signal and the voltage value of the previous detection signal (i.e., the immediately preceding detection signal). Since rotation of the motor 20 is detected based on whether the difference in voltage value is equal to or greater than the threshold value, it is possible to prevent occurrence of a situation where the motor 20 is determined to rotate due to fine vibration (noise) when the motor 20 does not rotate actually.
(8) In the period in which the ignition switch 51 is in the ON state, there is a higher likelihood that the count value C changes than that in the period in which the ignition switch 51 is in the OFF state. Therefore, in this embodiment, the frequency of computation of the count value C by the counter circuit 101 of the rotation monitoring unit 32 is set to be higher in the period in which the ignition switch 51 is in the ON state than in the period in which the ignition switch 51 is in the OFF state. Accordingly, it is possible to improve computation accuracy for the rotation angle θ of the motor 20 in the period in which the ignition switch 51 is in the ON state.

This embodiment may be modified as follows. The following other embodiments may be combined with each other they are not technically contradictory to each other. The power supply circuit 100 may intermittently supply electric power to the rotation angle sensor 41 and the counter circuit 101 in the same cycle (for example, the cycle Toff3) when the ignition switch 51 is in the OFF state and when the ignition switch 51 is in the ON state.

The cycle Toff3 may be shorter than the cycle Toff1 or may be longer than the cycle Toff1. The cycle Toff3 may be shorter than the cycle Toff2 or may be longer than the cycle Toff2.

The cycle Toff3 may be shorter than the cycles Toffl and Toff2 or may be longer than the cycles Toff1 and Toff2. The power supply circuit 100 may detect rotation of the motor 20 with input of the right turn flag Fr or the left turn flag Fl which is generated by the quadrant determining unit 105 serving as a trigger.

The power supply circuit 100 may intermittently supply electric power to the rotation angle sensor 41 and the counter circuit 101 in the same cycle (for example, the cycle Toff3) when rotation of the motor 20 is not detected and when rotation of the motor 20 is detected. In this case, the power supply circuit 100 does not need to detect whether the motor 20 is rotating.

In this embodiment, the rotation monitoring unit 32 may be embodied by a microcomputer including a micro processing unit. The rotation monitoring unit 32 may read a program stored in a storage unit thereof and perform a computation based on the read program. In this case, since the count value C is computed with a computation load less than the computation load for computing the rotation angle θ, the configuration of the rotation monitoring unit 32 can be made simpler than the configuration of the microcomputer 31.

For example, the rotation angle sensor 41 may be a sensor using a Hall element or may be a sensor using a resolver. The rotation angle sensor 41 may detect, for example, a rotation angle of the steering shaft 11. The rotation angle of the steering shaft 11 can be converted into the rotation angle θ of the motor 20 in consideration of, for example, a reduction ratio of the reduction mechanism 21 which is interposed between the motor 20 and the steering shaft 11.

When the ignition switch 51 is in the ON state, the rotation monitoring unit 32 may not compute the count value C. In this case, when the ignition switch 51 is switched from the ON state to the OFF state, for example, the microcomputer 31 stores the current rotation angle θ and the rotation monitoring unit 32 intermittently computes and stores the count value C after starting its operation. Then, when the ignition witch 51 is switched from the OFF state to the ON state, the microcomputer 31 reads the count value C computed by the rotation monitoring unit 32 in the period in which the ignition switch 51 is in the OFF state and the stored rotation angle θ, and computes the rotation angle θ of the motor 20.

When the source voltage of electric power which is supplied to the microcomputer 31 is less than the voltage value at which the microcomputer 31 can operate in the period in which the ignition switch 51 is in the ON state, the power supply circuit 100 may intermittently supply electric power to the rotation angle sensor 41 and the counter circuit 101 in any cycle as long as the cycle is a cycle in which rotation of the rotation shaft 20a of the motor 20 by a unit rotation angle is not missed. Accordingly, the counter circuit 101 intermittently computes the count value C.

When the source voltage of electric power which is supplied to the microcomputer 31 is less than the voltage value at which the microcomputer 31 can operate in the period in which the ignition switch 51 is in the ON state, the power supply circuit 100 may constantly supply electric power to the rotation angle sensor 41 and the counter circuit 101. In this case, the counter circuit 101 constantly computes the count value C.

The microcomputer 31 may receive the detection signal of the rotation angle sensor 41 via the rotation monitoring unit 32 (the counter circuit 101 and the communication interface 102). In this case, the rotation angle sensor 41 is supplied with electric power similarly to the microcomputer 31 when the ignition switch 51 is in the ON state.

The EPS in this embodiment may be embodied as an EPS in which the rotation shaft 20a of the motor 20 is parallel to the axis of the rack shaft 12 or may be applied to an EPS in which the rotation shaft 20a and the rack shaft 12 are coaxial. The invention is not limited to the EPS, and may be applied to a steer-by-wire steering system.

A vehicle in which the EPS according to this embodiment is mounted may be a so-called vehicle with an internal combustion engine employing an engine as a drive source or may be a so-called electric vehicle employing a motor as a drive source. In the case of an electric vehicle, the ignition switch is a switch that starts the motor as a vehicle drive source.

Hereinafter, an angle computing device according to a fourth embodiment which is provided in an electric power steering system (hereinafter referred to as an "EPS") will be described.

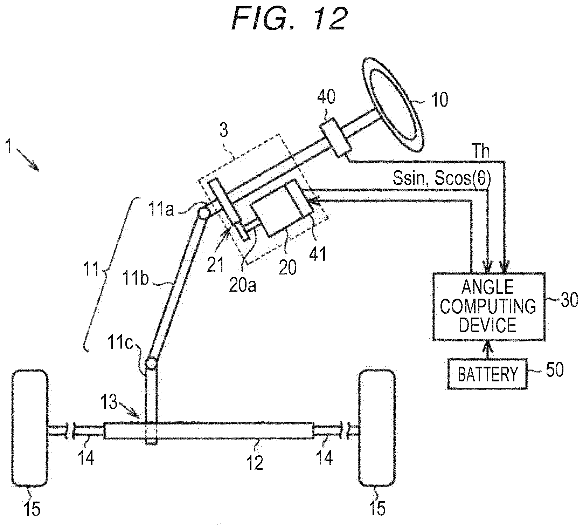

As illustrated in FIG. 12, an EPS includes a steering mechanism 1 that turns turning wheels 15 based on a driver's operation for a steering wheel 10, an actuator 3 including a motor 20 that generates an assist force for assisting a steering operation in the steering mechanism 1, and an angle computing device 30 that detects a rotation angle θ of the motor 20 and controls the motor 20.

The steering mechanism 1 includes a steering shaft 11 that is connected to the steering wheel 10 and a rack shaft 12 that reciprocates in an axial direction in accordance with rotation of the steering shaft 11. The steering shaft 11 includes a column shaft 11a that is connected to the steering wheel 10, an intermediate shaft 11b that is connected to the lower end of the column shaft 11a, and a pinion shaft 11c that is connected to the lower end of the intermediate shaft 11b. The rack shaft 12 and the pinion shaft 11c are arranged to have a predetermined crossing angle, and rack teeth formed in the rack shaft 12 engage with pinion teeth formed in the pinion shaft 11c to constitute a rack and pinion mechanism 13. Tie rods 14 are respectively connected to both ends of the rack shaft 12, and tips of the tie rods 14 are connected to knuckles (not illustrated) to which the turning wheels 15 are fitted. Accordingly, in the EPS, a rotational motion of the steering shaft 11 based on a steering operation is converted into a reciprocating straight motion of the rack shaft 12 in the axial direction via the rack and pinion mechanism 13. The reciprocating straight motion in the axial direction is transmitted to the knuckles via the tie rods 14 and thus a turning angle of the turning wheels 15, that is, a traveling direction of a vehicle, is changed.

The actuator 3 includes a motor 20 and a reduction mechanism 21. A rotation shaft 20a of the motor 20 is connected to the column shaft 11a via the reduction mechanism 21. The rotation shaft 20a of the motor 20 can rotate by multiple turns. The reduction mechanism 21 reduces a rotational speed (a rotational force) of the motor 20 and transmits the reduced rotational force to the column shaft 11a. That is, a driver's steering operation is assisted by applying a torque of the motor 20 as an assist force to the steering shaft 11.

The angle computing device 30 controls the motor 20 based on detection results from various sensors which are provided in a vehicle. For example, a torque sensor 40 and a rotation angle sensor 41 are provided as the sensors. The torque sensor 40 is provided on the column shaft 11a. The torque sensor 40 detects a steering torque Th which is applied to the steering shaft 11 in accordance with a driver's steering operation. The rotation angle sensor 41 is provided in the motor 20. The rotation angle sensor 41 generates a detection signal for computing an actual rotation angle θ of the rotation shaft 20a of the motor 20 and outputs the detection signal as a voltage value. The battery 50 that serves as a power source of electric power which is supplied to the motor 20 is connected to the angle computing device 30. The angle computing device 30 computes the actual rotation angle θ of the motor 20 based on the detection signal which is generated by the rotation angle sensor 41. A magnetic sensor that generates a detection signal by detecting magnetism varying in accordance with rotation of the rotation shaft 20a of the motor 20 is employed as the rotation angle sensor 41. For example, a magnetoresistance effect (MR) sensor is employed as the magnetic sensor. The rotation angle sensor 41 includes a bridge circuit including two magnetic sensor elements, and generates electrical signals (voltages) using the magnetic sensor elements. A phase of the electrical signal which is generated by one magnetic sensor element is deviated by 90 degrees from a phase of the electrical signal which is generated by the other magnetic sensor element. Therefore, in the fourth embodiment, the electrical signal which is generated by one magnetic sensor element is regarded as a sine wave signal Ssin and the electrical signal which is generated by the other magnetic sensor element is regarded as a cosine wave signal Scos. The sine wave signal Ssin and the cosine wave signal Scos are detection signals of the rotation angle sensor 41. The angle computing device 30 computes the rotation angle θ of multiple turns of the motor 20 based on the detection signals (the sine wave signal Ssin and the cosine wave signal Scos) detected by the rotation angle sensor 41. The angle computing device 30 sets a target torque to be applied to the steering mechanism 1 based on output values of the sensors and controls electric power which is supplied to the motor 20 such that the actual torque of the motor 20 reaches the target torque.

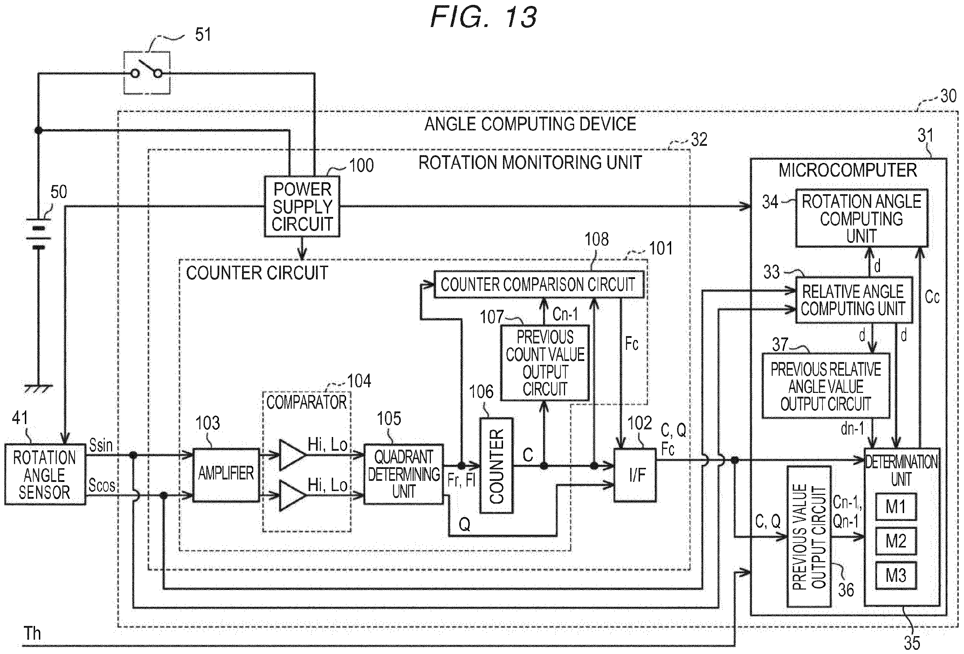

The configuration of the angle computing device 30 will be described below. As illustrated in FIG. 13, the angle computing device 30 includes a microcomputer 31 and a rotation monitoring unit 32. The microcomputer 31 is an example of a first computing unit and the rotation monitoring unit 32 is an example of a second computing unit. The rotation angle sensor 41 is an example of a detection unit.

The microcomputer 31 computes a rotation angle θ of multiple turns of the motor 20 and controls electric power which is supplied to the motor 20 when an ignition switch 51 is in an ON state. The microcomputer 31 computes the rotation angle θ of the motor 20 in a predetermined computation cycle. The computation cycle of the microcomputer 31 is set to a short cycle that makes it possible to promptly detect rotation of the rotation shaft 20a of the motor 20. The microcomputer 31 includes, for example, a micro processing unit. The rotation monitoring unit 32 is connected to the microcomputer 31. The rotation monitoring unit 32 is formed by packaging a logic circuit in which electronic circuits, flip-flops, or the like are combined. The rotation monitoring unit 32 is a so-called application specific integrated circuit (ASIC). The microcomputer 31 reads a program stored in a storage unit thereof and performs a computation based on the program. The rotation monitoring unit 32 outputs a predetermined output in response to a specific input (a detection signal from the rotation angle sensor 41 herein).

A power supply circuit 100 that steps down a voltage of electric power supplied from the battery 50 and supplies a constant voltage is provided in the rotation monitoring unit 32. An ignition switch 51 that switches between supply and interruption of electric power from the battery 50 is provided between the battery 50 and the power supply circuit 100. When a driver operates a switch which is provided in a vehicle, the ignition switch 51 is switched between ON and OFF states. When the ignition switch 51 is in the ON state, an ON signal is input to the power supply circuit 100 and electric power is supplied between the battery 50 and the power supply circuit 100 via the ignition switch 51. When the ignition switch 51 is in the OFF state, an OFF signal is input to the power supply circuit 100 and the supply of electric power between the battery 50 and the power supply circuit 100 is interrupted by the ignition switch 51.

When electric power is supplied between the battery 50 and the power supply circuit 100 via the ignition switch 51, electric power is supplied to the microcomputer 31. That is, when the ignition switch 51 is in the ON state, electric power is supplied to the microcomputer 31 and the microcomputer 31 operates. On the other hand, when supply of electric power between the battery 50 and the power supply circuit 100 is interrupted by the ignition switch 51, electric power is not supplied to the microcomputer 31. That is, when the ignition switch 51 is in the OFF state, electric power is not supplied to the microcomputer 31 and the microcomputer 31 stops its operation.

The battery 50 is directly connected to the power supply circuit 100. That is, the rotation monitoring unit 32 is constantly supplied with electric power from the battery 50 regardless of whether the ignition switch 51 is in the ON or OFF state. The rotation angle sensor 41 is connected to the rotation monitoring unit 32. The rotation angle sensor 41 is also connected to the microcomputer 31.

The rotation monitoring unit 32 includes a counter circuit 101 and a communication interface 102. The counter circuit 101 is constantly supplied with electric power from the battery 50 regardless of whether the ignition switch 51 is in the ON or OFF state. The communication interface 102 is supplied with electric power from the battery 50 when the ignition switch 51 is in the ON state.

The counter circuit 101 acquires detection signals (a sine wave signal Ssin and a cosine wave signal Scos) which are generated by the rotation angle sensor 41 as voltage values. The counter circuit 101 computes a count value C which is used to compute the rotation angle θ of multiple turns of the motor 20 based on the detection signals. The count value C is turn number information indicating the number of turns of the motor 20. In this embodiment, the count value C is information indicating by how many turns a rotational position of the rotation shaft 20a of the motor 20 rotates with respect to a reference position thereof (a neutral position).

The counter circuit 101 includes an amplifier 103, a comparator 104, a quadrant determining unit 105, a counter 106, a previous count value output circuit 107, and a counter comparison circuit 108.

The amplifier 103 acquires detection signals (the sine wave signal Ssin and the cosine wave signal Scos) which are generated by the rotation angle sensor 41 as voltage values. The amplifier 103 amplifies the voltage values acquired from the rotation angle sensor 41 and outputs the amplified voltage values to the comparator 104.

The comparator 104 generates a signal of a Hi level when the voltage values (the voltage values amplified by the amplifier 103) generated by the rotation angle sensor 41 are higher than a preset threshold value and generates a signal of a Lo level when the voltage values are lower than the preset threshold value. The threshold value is set to, for example, "0." That is, the comparator 104 generates a signal of a Hi level when the voltage value (the voltage value amplified by the amplifier 103) is positive and generates a signal of a Lo level when the voltage value is negative.

The quadrant determining unit 105 determines in which quadrant of four quadrants the rotational position of the rotation shaft 20a of the motor 20 is located based on a combination of the signals of the Hi level and/or the Lo level which are generated by the comparator 104. The reference position of the rotation shaft 20a of the motor 20 is a rotational position of the rotation shaft 20a of the motor 20, for example, when the steering wheel 10 is located at a neutral position and the rotation angle θ at this time is, for example, "0" degrees.

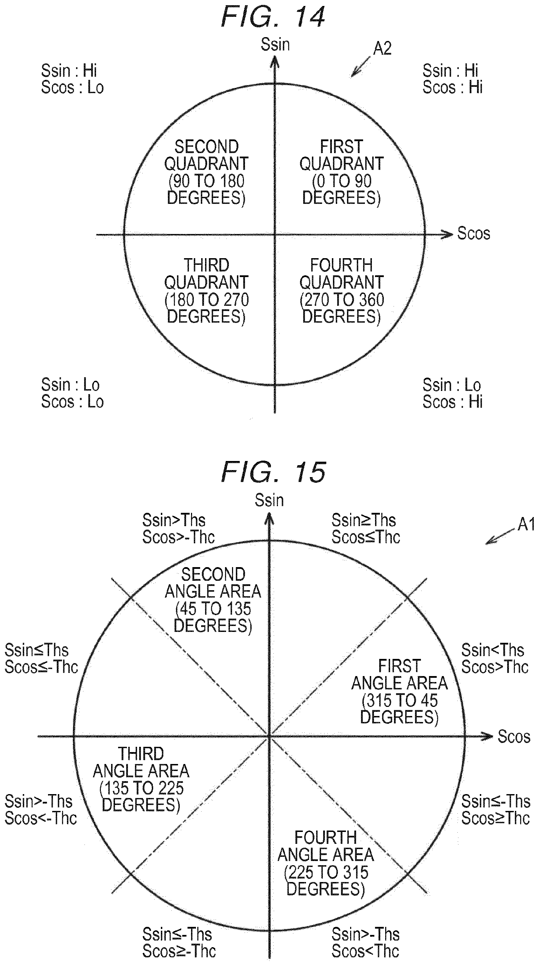

As illustrated in FIG. 14, one turn (360 degrees) of the rotation shaft 20a of the motor 20 is divided into four quadrants at intervals of 90 degrees based on the combinations of the signals of the Hi level and the Lo level, that is, the combinations of the positive and negative signs of the detection signals. The rotation monitoring unit 32 stores a second determination area A2 including the four quadrants. The second determination area A2 is specifically as follows.

A first quadrant is a quadrant in which both the sine wave signal Ssin and the cosine wave signal Scos are at the Hi level. When the rotational position of the rotation shaft 20a of the motor 20 is in the first quadrant, the rotation angle θ of the motor 20 is in a range of 0 to 90 degrees.

A second quadrant is a quadrant in which the sine wave signal Ssin is at the Hi level and the cosine wave signal Scos is at the Lo level. When the rotational position of the rotation shaft 20a of the motor 20 is in the second quadrant, the rotation angle θ of the motor 20 is in a range of 90 to 180 degrees.

A third quadrant is a quadrant in which both the sine wave signal Ssin and the cosine wave signal Scos are at the Lo level. When the rotational position of the rotation shaft 20a of the motor 20 is in the third quadrant, the rotation angle θ of the motor 20 is in a range of 180 to 270 degrees.

A fourth quadrant is a quadrant in which the sine wave signal Ssin is at the Lo level and the cosine wave signal Scos is at the Hi level. When the rotational position of the rotation shaft 20a of the motor 20 is in the fourth quadrant, the rotation angle θ of the motor 20 is in a range of 270 to 360 degrees.

As illustrated in FIG. 13, the quadrant determining unit 105 generates quadrant information Q indicating a quadrant in which the rotational position of the rotation shaft 20a of the motor 20 is located based on the signal of the Hi level and the signal of the Lo level which are generated by the comparator 104. The quadrant determining unit 105 sets up a left turn flag Fl or a right turn flag Fr based on the change of the quadrant in which the rotational position of the rotation shaft 20a of the motor 20 is located and which is indicated by the quadrant information Q. The quadrant determining unit 105 determines that rotation by a unit rotation angle (90 degrees) is performed each time the quadrant in which the rotational position of the rotation shaft 20a of the motor 20 is located changes to an adjacent quadrant. The rotation direction of the rotation shaft 20a of the motor 20 is determined based on a relationship between a quadrant in which the rotational position of the rotation shaft 20a of the motor 20 is located before the motor 20 rotates and a quadrant in which the rotational position is located after the motor 20 rotates. The quadrant determining unit 105 sets up the left turn flag Fl when the quadrant in which the rotational position of the rotation shaft 20a of the motor 20 is located changes in the counterclockwise direction, for example, when the quadrant changes from the first quadrant to the second quadrant. The quadrant determining unit 105 sets up the right turn flag Fr when the quadrant in which the rotational position of the rotation shaft 20a of the motor 20 is located changes in the clockwise direction, for example, when the quadrant changes from the first quadrant to the fourth quadrant.

The counter 106 computes a count value C based on the left turn flag Fl or the right turn flag Fr which is acquired by the quadrant determining unit 105. The counter 106 is a logical circuit in which flip-flops or the like are combined. The count value C indicates the number of times of rotation of the rotational position of the rotation shaft 20a of the motor 20 by a unit rotation angle (90 degrees) with respect to a reference position thereof. The counter 106 increases the count value C (1 is added to the count value C) when the left turn flag Fl is acquired from the quadrant determining unit 105, and decreases the count value C (1 is subtracted from the count value C) when the right turn flag Fr is acquired from the quadrant determining unit 105. In this way, the counter 106 computes the count value C and stores the computed count value C each time a detection signal is generated by the rotation angle sensor 41. The count value C computed by the counter 106 is output to the previous count value output circuit 107, the counter comparison circuit 108, and the communication interface 102.

The previous count value output circuit 107 stores the input count value C in at least two computation cycles. That is, the previous count value output circuit 107 stores a previous count value (i.e., an immediately preceding count value) Cn-1 which is the count value C in a previous computation cycle (i.e., an immediately preceding computation cycle) in addition to a current count value Cn which is the count value C in a current computation cycle. Then, the previous count value output circuit 107 outputs the previous count value Cn-1 which is the count value in the previous computation cycle to the counter comparison circuit 108 each time the count value C in the current computation cycle is input thereto.

The counter comparison circuit 108 determines whether an abnormality has occurred in the counter 106 based on the left turn flag Fl or the right turn flag Fr which is acquired by the quadrant determining unit 105, the count value C (the current count value Cn) which is computed by the counter 106, and the previous count value Cn-1 which is output by the previous count value output circuit 107. Specifically, the counter comparison circuit 108 sets up a counter abnormality flag Fc indicating that an abnormality has occurred in the counter 106 when a difference between the current count value Cn and the previous count value Cn-1 does not match the rotation direction of the motor 20 indicated by the left turn flag Fl or the right turn flag Fr which is acquired by the quadrant determining unit 105. For example, when the motor 20 is not rotating but there is a difference between the current count value Cn and the previous count value Cn-1, the counter comparison circuit 108 sets up the counter abnormality flag Fc. On the other hand, when the difference between the current count value Cn and the previous count value Cn-1 matches the rotation direction of the motor 20 indicated by the left turn flag Fl or the right turn flag Fr, the counter comparison circuit 108 does not set up the counter abnormality flag Fc.

The communication interface 102 outputs the count value C stored in the counter 106, the quadrant information Q generated by the quadrant determining unit 105, and the counter abnormality flag Fc to the microcomputer 31 each time the ignition switch 51 is turned on. On the other hand, the communication interface 102 does not operate when the ignition switch 51 is in the OFF state.

The power supply circuit 100 determines that the ignition switch 51 is in the ON state or OFF state, based on the ON signal or the OFF signal which is input thereto. When the ignition switch 51 is in the ON state, the power supply circuit 100 intermittently supplies electric power to the rotation angle sensor 41 and the counter circuit 101 using electric power which is constantly supplied from the battery 50. The power supply circuit 100 intermittently supplies electric power to the rotation angle sensor 41 and the counter circuit 101 using electric power which is constantly supplied from the battery 50 in a shorter cycle when the ignition switch 51 is in the ON state than when the ignition switch 51 is in the OFF state. Accordingly, the power supply circuit 100 causes the rotation angle sensor 41 and the counter circuit 101 to operate intermittently in a predetermined cycle and to intermittently compute the count value C. The predetermined cycle is set to a cycle in which rotation of the rotation shaft 20a of the motor 20 by a unit rotation angle (90 degrees) is not missed.

The microcomputer 31 acquires the count value C which is computed by the rotation monitoring unit 32 each time the ignition switch 51 is turned on. The microcomputer 31 itself updates the count value C which is acquired when the ignition switch 51 is turned on in a predetermined computation cycle based on the change of the detection signal which is generated by the rotation angle sensor 41 in the period until the ignition switch 51 is turned off. The microcomputer 31 performs an update to increase the count value C (add 1 to the count value C) each time a relative angle d which is computed using the detection signal changes by a unit rotation angle (90 degrees) in the counterclockwise direction, and performs an update to decrease the count value C (subtract 1 from the count value C) each time the relative angle d changes by a unit rotation angle (90 degrees) in the clockwise direction. That is, in this embodiment, the microcomputer 31 and the rotation monitoring unit 32 individually (separately) update the count value C in the period in which the ignition switch 51 is in the ON state. The microcomputer 31 acquires the detection signal which is generated by the rotation angle sensor 41 in a predetermined computation cycle. The microcomputer 31 computes the rotation angle θ of multiple turns of the motor 20 based on the acquired count value C and the acquired detection signal. Specifically, the microcomputer 31 includes a relative angle computing unit 33 that computes the rotation angle of the motor 20 as a relative angle d by computing an arctangent function from two detection signals which are generated by the rotation angle sensor 41. The relative angle d expresses the rotation angle of the motor 20 in a range of 0 to 360 degrees. The microcomputer 31 includes a rotation angle computing unit 34 that compute the rotation angle θ of multiple turns of the motor 20 based on the count value C (specifically a changed count value Cc which will be described later) which is computed by the rotation monitoring unit 32 and the relative angle d which is computed by the relative angle computing unit 33. The rotation angle computing unit 34 determines by how many turns the rotation shaft 20a of the motor 20 rotates based on the count value C (specifically the changed count value Cc which will be described later). One turn corresponds to 360 degrees. The rotation angle computing unit 34 computes the rotation angle θ (an absolute angle) of multiple turns of the motor 20 by adding a value, which is obtained by multiplying the number of turns of the rotation shaft 20a of the motor 20 based on the count value C (the changed count value Cc) by 360 degrees, to the relative angle d. The microcomputer 31 may compute the absolute steering rotation angle from the rotation angle θ of multiple turns of the motor 20 in consideration of, for example, a reduction ratio of the reduction mechanism 21 which is interposed between the motor 20 and the steering shaft 11. The angle computing device 30 controls electric power which is supplied to the motor 20 using the computed rotation angle θ of multiple turns of the motor 20.

Delay of transmission of various signals, deviation between processes using the signals, or the like may occur. For example, transmission of a detection signal from the rotation angle sensor 41 to the microcomputer 31 may be delayed or transmission of the count value C from the rotation monitoring unit 32 to the microcomputer 31 may be delayed. Circuit characteristics of the microcomputer 31 and the rotation monitoring unit 32 are different from each other, that is, hardware characteristics are different from each other. Accordingly, deviation between processes, such as delay of the process of computing the count value C in the rotation monitoring unit 32 or delay of the process of computing the relative angle d in the microcomputer 31, may occur. In this case, the count value C in a computation cycle different from a computation cycle in which the detection signal is generated by the rotation angle sensor 41 may be input to the microcomputer 31 and the microcomputer 31 may compute the rotation angle θ of multiple turns of the motor 20 based on the erroneous count value C. Therefore, the microcomputer 31 includes a determination unit 35 that determines an abnormality of a count value C (i.e., determines whether the count value C is abnormal) each time the count value C is acquired and changes the count value C based on the relative angle d which is computed using the detection signal.

The determination unit 35 acquires the relative angle d which is computed by the relative angle computing unit 33, the quadrant information Q which is computed by the quadrant determining unit 105, the count value C which is computed by the counter circuit 101, and the counter abnormality flag Fc. The times at which the determination unit 35 of the microcomputer 31 acquires the quadrant information Q and the count value C from the rotation monitoring unit 32 are the same. The determination unit 35 determines an abnormality of the count value C based on the relative angle d and the quadrant information Q. Specifically, the determination unit 35 determines an abnormality of the current count value Cn in the current computation cycle (i.e., determines whether the current count value Cn in the current computation cycle is abnormal) based on a current relative angle value dn and a current quadrant information value Qn in the current computation cycle. The determination unit 35 stores a first map M1 indicating a first determination area A1 including four angle areas.

FIG. 15 illustrates the first determination area A1. In the first determination area A1, one turn (360 degrees) of the rotation shaft 20a of the motor 20 is divided into four angle areas at intervals of 90 degrees based on a combination of a sine wave signal Ssin and a cosine wave signal Scos, that is, a combination of detection signals. The determination unit 35 determines that the rotation shaft 20a of the motor 20 rotates by a unit rotation angle (90 degrees) each time the angle area in which the rotational position of the rotation shaft 20a of the motor 20 is located changes to an adjacent angle area. The first determination area A1 is deviated by a predetermined amount from the second determination area A2. The predetermined amount is set in consideration of allowable deviation of the count value C and the quadrant information Q due to delay of transmission of various signals (information) and deviation between processes using various signals. The angle computing device 30 is designed such that the count value C computed by the counter circuit 101 and the quadrant information Q computed by the quadrant determining unit 105 are allowed to be the count value and the quadrant information at an angle which is deviated by approximately 45 degrees or less from the relative angle d computed by the relative angle computing unit 33, due to delay of transmission of various signals and deviation between processes using various signals. Therefore, in the fourth embodiment, the first determination area A1 is set to be deviated by 45 degrees in the clockwise direction from the second determination area A2. The four angle areas of the first determination area A1 are specifically as follows.

A first angle area is a quadrant when the relative angle d of the motor 20 is in a range of 315 to 45 degrees. In this case, the sine wave signal Ssin is equal to or less than a negative threshold value -Ths and the cosine wave signal Scos is equal to or greater than a positive threshold value Thc, and the sine wave signal Ssin is less than a positive threshold value Ths and the cosine wave signal Scos is greater than the positive threshold value Thc. When the relative angle d of the motor 20 is in the range of 315 to 45 degrees, the rotational position of the rotation shaft 20a of the motor 20 is in the first angle area.

The positive threshold value Ths is a voltage value of the sine wave signal Ssin which is to be detected when the relative angle d is 45 degrees, and the negative threshold value Ths is a voltage value of the sine wave signal Ssin which is to be detected when the relative angle d is -45 degrees. The positive threshold value Thc is a voltage value of the cosine wave signal Scos which is to be detected when the relative angle d is 45 degrees, and the negative threshold value Thc is a voltage value of the cosine wave signal Scos which is to be detected when the relative angle d is 135 degrees. These threshold values are acquired experimentally or theoretically.

A second angle area is a quadrant when the relative angle d of the motor 20 is in a range of 45 to 135 degrees. In this case, the sine wave signal Ssin is equal to or greater than the positive threshold value Ths and the cosine wave signal Scos is equal to or less than the positive threshold value Thc, and the sine wave signal Ssin is greater than the positive threshold value Ths, and the cosine wave signal Scos is greater than the negative threshold value -Thc. When the relative angle d of the motor 20 is in the range of 45 to 135 degrees, the rotational position of the rotation shaft 20a of the motor 20 is in the second angle area.

A third angle area is a quadrant when the relative angle d of the motor 20 is in a range of 135 to 225 degrees. In this case, the sine wave signal Ssin is equal to or less than the positive threshold value Ths and the cosine wave signal Scos is equal to or less than the negative threshold value -The, and the sine wave signal Ssin is greater than the negative threshold value -Ths and the cosine wave signal Scos is less than the negative threshold value -Thc. When the relative angle d of the motor 20 is in the range of 135 to 225 degrees, the rotational position of the rotation shaft 20a of the motor 20 is in the third angle area.

A fourth angle area is a quadrant when the relative angle d of the motor 20 is in a range of 225 to 315 degrees. In this case, the sine wave signal Ssin is equal to or less than the negative threshold value Ths and the cosine wave signal Scos is equal to or greater than the negative threshold value -Thc, and the sine wave signal Ssin is greater than the negative threshold value -Ths and the cosine wave signal Scos is less than the positive threshold value Thc. When the relative angle d of the motor 20 is in the range of 225 to 315 degrees, the rotational position of the rotation shaft 20a of the motor 20 is in the fourth angle area.

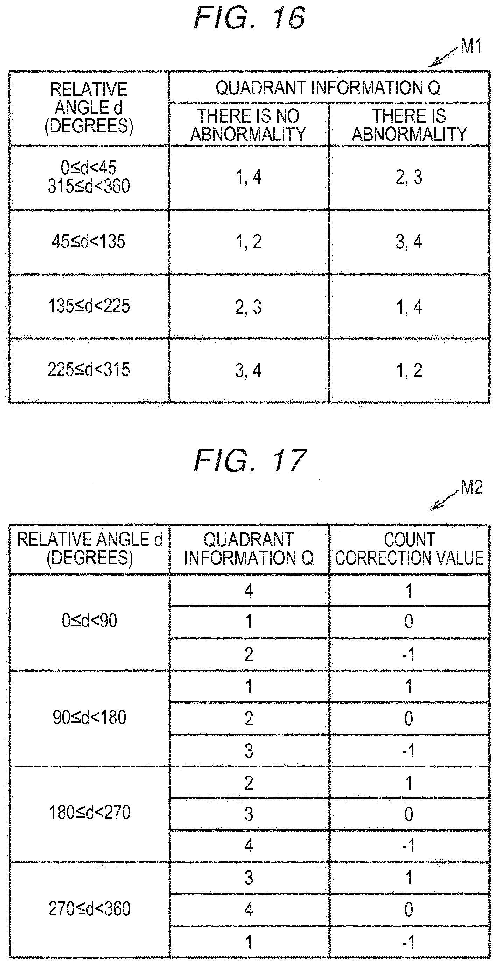

As illustrated in FIG. 13, the determination unit 35 of the microcomputer 31 stores a first map M1 illustrated in FIG. 16 and a second map M2 illustrated in FIG. 17. The second map M2 includes the same angle areas as in the second determination area A2. That is, the determination unit 35 stores the second map M2 and thus also stores the second determination area A2 which is included in the second map M2. The quadrant information Q has a close relationship with the count value C, and thus, the count value C has an abnormality (i.e., the count value C is abnormal) when the quadrant information Q has an abnormality (i.e., when the quadrant information Q is abnormal). Accordingly, the determination unit 35 determines an abnormality of the count value C (i.e., determines whether the count value C is abnormal) based on the quadrant information Q using the first map M1. When it is determined that the count value C does not have an abnormality (i.e., when it is determined that the count value C is not abnormal), the determination unit 35 changes the count value C acquired from the counter circuit 101 of the rotation monitoring unit 32 based on the relative angle d (the detection signals) using the second map M2.

FIG. 16 illustrates the first map M1. The first map M1 indicates a relationship between an angle area in which the rotational position of the rotation shaft 20a of the motor 20 is located in the first determination area A1 based on the relative angle d (the detection signal) and a quadrant in which the rotational position of the rotation shaft 20a of the motor 20 is located in the second determination area A2 based on the quadrant information Q. The determination unit 35 stores a combination of angle areas and quadrants having no abnormality and a combination of angle areas and quadrants having an abnormality. The relationship between angle areas and quadrants which is indicated by the first map M1 is specifically as follows.

When the relative angle d of the motor 20 ranges from 315 to 45 degrees (0 degrees ≤ d < 45 degrees, 315 degrees ≤ d < 360 degrees), that is, when the rotational position of the rotation shaft 20a of the motor 20 is in the first angle area, the quadrant having no abnormality (i.e., the quadrant that is not abnormal) includes the first quadrant and the fourth quadrant and the quadrant having an abnormality (i.e., the quadrant that is abnormal) includes the second quadrant and the third quadrant. The quadrant having no abnormality is a quadrant corresponding to the quadrant information Q when quadrant information Q having no abnormality (i.e., quadrant information Q that is not abnormal) is generated by the quadrant determining unit 105. The quadrant having an abnormality is a quadrant other than the quadrant corresponding to the quadrant information Q when quadrant information Q having no abnormality is computed by the quadrant determining unit 105 and is a quadrant in which the rotational position of the rotation shaft 20a of the motor 20 cannot be located. The count value C and the quadrant information Q are allowed to include a deviation of less than 45 degrees as a predetermined deviation from the relative angle d, but when the count value C and the quadrant information Q include a deviation of greater than 45 degrees from the relative angle d, the rotational position of the rotation shaft 20a of the motor 20 is located in a quadrant having an abnormality.

When the relative angle d of the motor 20 ranges from 45 to 135 degrees (45 degrees ≤ d < 135 degrees), that is, when the rotational position of the rotation shaft 20a of the motor 20 is in the second angle area, the quadrant having no abnormality includes the first quadrant and the second quadrant and the quadrant having an abnormality includes the third quadrant and the fourth quadrant.

When the relative angle d of the motor 20 ranges from 135 to 225 degrees (135 degrees ≤ d < 225 degrees), that is, when the rotational position of the rotation shaft 20a of the motor 20 is in the third angle area, the quadrant having no abnormality includes the second quadrant and the third quadrant and the quadrant having an abnormality includes the first quadrant and the fourth quadrant.

When the relative angle d of the motor 20 ranges from 225 to 315 degrees (225 degrees ≤ d < 315 degrees), that is, when the rotational position of the rotation shaft 20a of the motor 20 is in the fourth angle area, the quadrant having no abnormality includes the third quadrant and the fourth quadrant and the quadrant having an abnormality includes the first quadrant and the second quadrant.

As illustrated in FIG. 13, the microcomputer 31 includes a previous value output circuit 36 and a previous relative angle value output circuit 37. The previous value output circuit 36 stores the count value C and the quadrant information Q which are input to the microcomputer 31 in at least two computation cycles. That is, the previous value output circuit 36 stores a previous count value (i.e., an immediately preceding count value) Cn-1 which is the count value C in the previous computation cycle (in the immediately preceding computation cycle) in addition to a current count value Cn which is the count value C in the current computation cycle. The previous value output circuit 36 outputs the previous count value Cn-1 which is the previous value to the determination unit 35 each time the count value C in the current computation cycle is input. The previous value output circuit 36 also stores a previous quadrant information value (i.e., an immediately preceding quadrant information value) Qn-1 which is the quadrant information Q in the previous computation cycle in addition to a current quadrant information value Qn which is the quadrant information Q in the current computation cycle. The previous value output circuit 36 outputs the previous quadrant information value Qn-1 which is the previous value to the determination unit 35 each time the quadrant information Q in the current computation cycle is input.

The previous relative angle value output circuit 37 stores the relative angle d which is computed by the relative angle computing unit 33 in at least two computation cycles. That is, the previous relative angle value output circuit 37 stores a previous relative angle value (i.e., an immediately preceding relative angle value) dn-1 which is the relative angle d in the previous computation cycle (i.e., in the immediately preceding computation cycle) in addition to a current relative angle value dn which is the relative angle d in the current computation cycle. The previous relative angle value output circuit 37 outputs the previous relative angle value dn-1 which is the previous value to the determination unit 35 each time the relative angle d in the current computation cycle is input.

The determination unit 35 acquires the current count value Cn which is the count value C in the current computation cycle and which is computed by the counter 106, the current quadrant information value Qn which is the quadrant information Q in the current computation cycle and which is computed by the quadrant determining unit 105, and the counter abnormality flag Fc. The determination unit 35 acquires the current relative angle value dn which is the relative angle d in the current computation cycle and which is computed by the relative angle computing unit 33, the previous count value Cn-1 and the previous quadrant information value Qn-1 which are output from the previous value output circuit 36, and the previous relative angle value dn-1 which is output from the previous relative angle value output circuit 37.

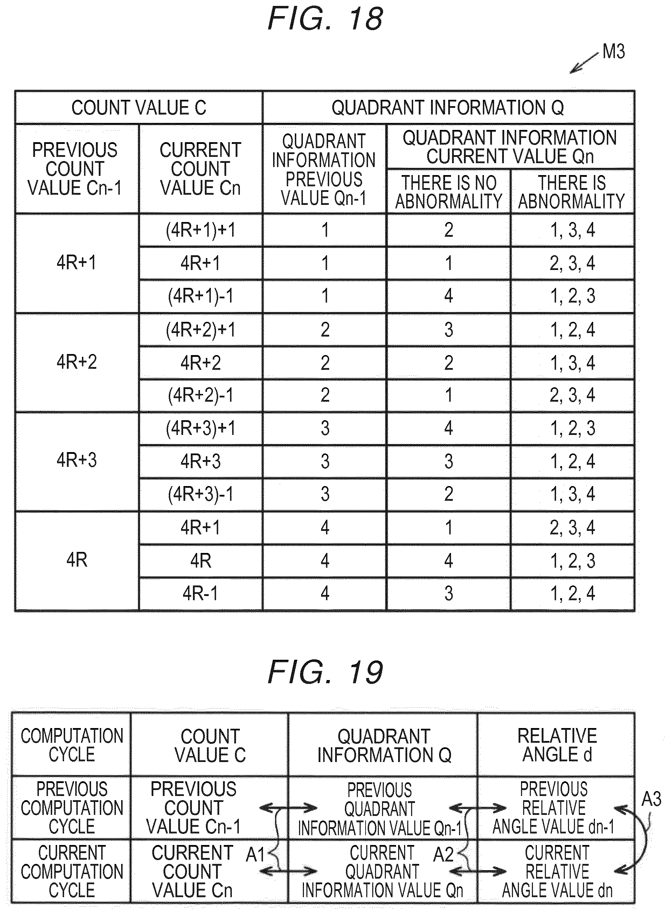

FIG. 18 illustrates a third map M3 which is stored in the determination unit 35. The third map M3 indicates a relationship between a change from the previous count value Cn-1 to the current count value Cn and a change from the previous quadrant information value Qn-1 to the current quadrant information value Qn. The determination unit 35 stores a combination of the quadrant information Q having an abnormality (i.e., the abnormal quadrant information Q) and the change from the previous count value Cn-1 to the current count value Cn. The relationship between the change of the count value C and the change of the quadrant information Q which is illustrated in the third map M3 is specifically as follows.

When the previous count value Cn-1 which is the count value C in the previous computation cycle is "4R+1" (where R is an arbitrary integer), the current count value Cn in the next cycle has one value of "(4R+1)+1," "4R+1," and "(4R+1)-1." When the current count value Cn is "(4R+1)+1" and the previous count value Cn-1 is "4R+1," the quadrant in the previous computation cycle is the first quadrant, the quadrant having no abnormality in the current computation cycle is the second quadrant, and the quadrant having an abnormality in the current operation cycle includes the first quadrant, the third quadrant, and the fourth quadrant. The quadrant having no abnormality is, for example, a quadrant when the count value C does not change and the quadrant corresponding to the quadrant information Q does not change or a quadrant when the count value C changes and the quadrant corresponding to the quadrant information Q is located at a position matching the change of the count value C. The quadrant having an abnormality is, for example, a quadrant when the count value C does not change but the quadrant corresponding to the quadrant information Q changes from that in the previous cycle or a quadrant when the count value C changes but the quadrant corresponding to the quadrant information Q does not change from that in the previous cycle. When the current count value Cn is "4R+1" and the previous count value Cn-1 is "4R+1," the quadrant in the previous computation cycle is the first quadrant, the quadrant having no abnormality in the current computation cycle is the first quadrant, and the quadrant having an abnormality in the current computation cycle includes the second quadrant, the third quadrant, and the fourth quadrant. When the current count value Cn is "(4R+1)-1" and the previous count value Cn-1 is "4R+1," the quadrant in the previous computation cycle is the first quadrant, the quadrant having no abnormality in the current computation cycle is the fourth quadrant, and the quadrant having an abnormality in the current computation cycle includes the first quadrant, the second quadrant, and the third quadrant.

When the previous count value Cn-1 which is the count value C in the previous computation cycle is "4R+2," the current count value Cn in the next cycle has one value of "(4R+2)+1," "4R+2," and "(4R+2)-1." When the current count value Cn is "(4R+2)+1" and the previous count value Cn-1 is "4R+2," the quadrant in the previous computation cycle is the second quadrant, the quadrant having no abnormality in the current computation cycle is the third quadrant, and the quadrant having an abnormality in the current computation cycle includes the first quadrant, the second quadrant, and the fourth quadrant. When the current count value Cn is "4R+2" and the previous count value Cn-1 is "4R+2," the quadrant in the previous computation cycle is the second quadrant, the quadrant having no abnormality in the current computation cycle is the second quadrant, and the quadrant having an abnormality in the current computation cycle includes the first quadrant, the third quadrant, and the fourth quadrant. When the current count value Cn is "(4R+2)-1" and the previous count value Cn-1 is "4R+2," the quadrant in the previous computation cycle is the second quadrant, the quadrant having no abnormality in the current computation cycle is the first quadrant, and the quadrant having an abnormality in the current computation cycle includes the second quadrant, the third quadrant, and the fourth quadrant.

When the previous count value Cn-1 which is the count value C in the previous computation cycle is "4R+3," the current count value Cn in the next cycle has one value of "(4R+3)+1," "4R+3," and "(4R+3)-1." When the current count value Cn is "(4R+3)+1" and the previous count value Cn-1 is "4R+3," the quadrant in the previous computation cycle is the third quadrant, the quadrant having no abnormality in the current computation cycle is the fourth quadrant, and the quadrant having an abnormality in the current computation cycle includes the first quadrant, the second quadrant, and the third quadrant. When the current count value Cn is "4R+3" and the previous count value Cn-1 is "4R+3," the quadrant in the previous computation cycle is the third quadrant, the quadrant having no abnormality in the current computation cycle is the third quadrant, and the quadrant having an abnormality in the current computation cycle includes the first quadrant, the second quadrant, and the fourth quadrant. When the current count value Cn is "(4R+3)-1" and the previous count value Cn-1 is "4R+3," the quadrant in the previous computation cycle is the third quadrant, the quadrant having no abnormality in the current computation cycle is the second quadrant, and the quadrant having an abnormality in the current computation cycle includes the first quadrant, the third quadrant, and the fourth quadrant.

When the previous count value Cn-1 which is the count value C in the previous computation cycle is "4R," the current count value Cn in the next cycle has one value of "4R+1," "4R," and "4R-1." When the current count value Cn is "4R+1" and the previous count value Cn-1 is "4R," the quadrant in the previous computation cycle is the fourth quadrant, the quadrant having no abnormality in the current computation cycle is the first quadrant, and the quadrant having an abnormality in the current computation cycle includes the second quadrant, the third quadrant, and the fourth quadrant. When the current count value Cn is "4R" and the previous count value Cn-1 is "4R," the quadrant in the previous computation cycle is the fourth quadrant, the quadrant having no abnormality in the current computation cycle is the fourth quadrant, and the quadrant having an abnormality in the current computation cycle includes the first quadrant, the second quadrant, and the third quadrant. When the current count value Cn is "4R-1" and the previous count value Cn-1 is "4R," the quadrant in the previous computation cycle is the fourth quadrant, the quadrant having no abnormality in the current computation cycle is the third quadrant, and the quadrant having an abnormality in the current computation cycle includes the first quadrant, the second quadrant, and the fourth quadrant.

As illustrated in FIG. 13, the determination unit 35 determines whether the count value C and the quadrant information Q have a proper relationship based on the current count value Cn, the previous count value Cn-1, the current quadrant information value Qn, and the previous quadrant information value Qn-1 using the third map M3. When the count value C and the quadrant information Q do not have a proper relationship, it is thought that one of the count value C and the quadrant information Q has an abnormality. When the count value C and the quadrant information Q do not have a proper relationship and the counter abnormality flag Fc is not set up, the counter comparison circuit 108 determines that an abnormality has not occurred in the counter 106 and thus the likelihood that the quadrant information Q has an abnormality is higher than the likelihood that the count value C has an abnormality. Therefore, the determination unit 35 determines that the quadrant information Q has an abnormality when the counter abnormality flag Fc is not set up and the count value C and the quadrant information Q do not have a proper relationship, and determines that the quadrant information Q has no abnormality when the count value C and the quadrant information Q have a proper relationship.

Specifically, when the change from the previous count value Cn-1 to the current count value Cn does not match the change from the previous quadrant information value Qn-1 to the current quadrant information value Qn, the determination unit 35 determines that an abnormality has occurred in the quadrant information Q. On the other hand, when the change from the previous count value Cn-1 to the current count value Cn matches the change from the previous quadrant information value Qn-1 to the current quadrant information value Qn, the determination unit 35 determines that an abnormality has not occurred in the quadrant information Q. For example, when there is a difference between the current count value Cn and the previous count value Cn-1 but the current quadrant information value Qn has not changed from the previous quadrant information value Qn-1, the determination unit 35 determines that an abnormality has occurred in the quadrant information Q.

The determination unit 35 computes an amount of change from the previous relative angle value dn-1 to the current relative angle value dn based on the current relative angle value dn which is the relative angle d in the current computation cycle and which is computed by the relative angle computing unit 33 and the previous relative angle value dn-1 which is output from the previous relative angle value output circuit 37. When the amount of change from the previous relative angle value dn-1 to the current relative angle value dn is not greater than a predetermined amount of change at which the count value C is normally computed, the determination unit 35 determines that the current count value Cn is not abnormal. On the other hand, when the amount of change from the previous relative angle value dn-1 to the current relative angle value dn is greater than the predetermined amount of change, the determination unit 35 determines that the current count value Cn is abnormal. The determination unit 35 determines whether the previous count value Cn-1 is abnormal based on whether an amount of change from a before-previous relative angle value (i.e., a before-immediately preceding relative angle value, in other words, a relative angle value prior to the immediately preceding relative angle value) which is the relative angle d in a before-previous computation cycle (i.e., a before-immediately preceding computation cycle, that is, a computation cycle prior to the immediately preceding computation cycle) to the previous relative angle value dn-1 is greater than the predetermined amount of change in the previous computation cycle. Accordingly, when the amount of change from the previous relative angle value dn-1 to the current relative angle value dn is greater than the predetermined amount of change and the amount of change from the before-previous relative angle value to the previous relative angle value dn-1 is not greater than the predetermined amount of change, it can be determined that the current relative angle value dn is abnormal, and the previous relative angle value dn-1 is not abnormal.

As illustrated in FIGS. 13 and 19, the determination unit 35 performs determination on an abnormality of the quadrant information Q (an arrow A1 in FIG. 19) based on the count value C and the quadrant information Q, determination on an abnormality on the count value C (an arrow A2 in FIG. 19) based on the relative angle d and the quadrant information Q, and determination on high-speed rotation of the rotation shaft 20a of the motor 20 (an arrow A3 in FIG. 19) based on the current relative angle value dn and the previous relative angle value dn-1. The predetermined amount of change is set to 45 degrees to correspond to deviation of 45 degrees by which the count value C and the quadrant information Q are allowed to deviate from the relative angle d. The predetermined amount of change is set based on an amount of change of the relative angle d corresponding to the rotation speed of the rotation shaft 20a of the motor 20 at which the count value C and the quadrant information Q can be appropriately transmitted from the rotation monitoring unit 32 to the microcomputer 31. The predetermined amount of change is set in consideration of the rotation speed of the rotation shaft 20a of the motor 20 at which the count value C and the quadrant information Q can be appropriately transmitted from the rotation monitoring unit 32 to the microcomputer 31 when the above-mentioned three kinds of determinations are repeatedly performed in a predetermined cycle. For example, in determination on an abnormality of the count value C based on the relative angle d and the quadrant information Q, it is determined that the count value C has no abnormality (i.e., the count value C is not abnormal) in a situation where the rotation shaft 20a of the motor 20 is not rotating, but it may be determined that the count value C has an abnormality in a situation where the rotation shaft 20a of the motor 20 is rotating. Therefore, the predetermined amount of change is set from the viewpoint of determining whether there is a situation where the count value C is continuously determined to have no abnormality in all the computation cycles in consideration of the rotation speed of the rotation shaft 20a of the motor 20 even when the count value C is temporarily determined to have no abnormality in determination on an abnormality of the count value C based on the relative angle d and the quadrant information Q. The predetermined amount of change is experimentally acquired based on such a viewpoint.

When it is determined, in the three kinds of determination on an abnormality, that an abnormality has not occurred in the count value C and the quadrant information Q, the determination unit 35 employs the previous count value Cn-1 as a regular count value C and changes the count value C using the second map M2 illustrated in FIG. 17.

When the count value C needs to be changed, the quadrant information Q also needs to be changed. Therefore, as for the quadrant information Q, similarly to the count value C, the determination unit 35 changes the quadrant information Q using the second map M2.

FIG. 17 illustrates the second map M2. The second map M2 indicates a relationship among the relative angle d of the motor 20 which is computed based on the detection signals, the quadrant in which the rotational position of the rotation shaft 20a of the motor 20 is located based on the quadrant information Q, and a count correction value which is a correction value for the count value C. The relationship among the relative angle d, the quadrant, and the count correction value, which is indicated by the second map M2, is specifically as follows.

When the relative angle d of the motor 20 is in the first quadrant in the second determination area A2 (0 degrees ≤ d < 90 degrees), the quadrant in which the rotational position of the rotation shaft 20a of the motor 20 is located based on the quadrant information Q is one of three quadrants of the first quadrant, the second quadrant, and the fourth quadrant if the quadrant information Q has no abnormality. When the relative angle d ranges from 0 to 90 degrees and the quadrant information Q indicates that the rotational position of the rotation shaft 20a of the motor 20 is located in the fourth quadrant, a count correction value which is a correction value for increasing or decreasing the count value C is "1." In this case, a quadrant information correction value which is a correction value for increasing or decreasing the quadrant information Q is a value for changing the quadrant in which the rotational position of the rotation shaft 20a of the motor 20 is located based on the quadrant information Q in the counterclockwise direction. When the relative angle d ranges from 0 to 90 degrees and the quadrant information Q indicates that the rotational position of the rotation shaft 20a of the motor 20 is located in the first quadrant, the count correction value is "0." In this case, the quadrant information correction value is a value for not changing the quadrant in which the rotational position of the rotation shaft 20a of the motor 20 is located based on the quadrant information Q. When the relative angle d ranges from 0 to 90 degrees and the quadrant information Q indicates that the rotational position of the rotation shaft 20a of the motor 20 is located in the second quadrant, the count correction value is "-1." In this case, the quadrant information correction value is a value for changing the quadrant in which the rotational position of the rotation shaft 20a of the motor 20 is located based on the quadrant information Q in the clockwise direction.

When the relative angle d of the motor 20 is in the second quadrant in the second determination area A2 (90 degrees ≤ d < 180 degrees), the quadrant in which the rotational position of the rotation shaft 20a of the motor 20 is located based on the quadrant information Q is one of three quadrants of the first quadrant, the second quadrant, and the third quadrant if the quadrant information Q has no abnormality. When the relative angle d ranges from 90 to 180 degrees and the quadrant information Q indicates that the rotational position of the rotation shaft 20a of the motor 20 is located in the first quadrant, the count correction value is "1." In this case, the quadrant information correction value is a value for changing the quadrant in which the rotational position of the rotation shaft 20a of the motor 20 is located based on the quadrant information Q in the counterclockwise direction. When the relative angle d ranges from 90 to 180 degrees and the quadrant information Q indicates that the rotational position of the rotation shaft 20a of the motor 20 is located in the second quadrant, the count correction value is "0." In this case, the quadrant information correction value is a value for not changing the quadrant in which the rotational position of the rotation shaft 20a of the motor 20 is located based on the quadrant information Q. When the relative angle d ranges from 90 to 180 degrees and the quadrant information Q indicates that the rotational position of the rotation shaft 20a of the motor 20 is located in the third quadrant, the count correction value is "-1." In this case, the quadrant information correction value is a value for changing the quadrant in which the rotational position of the rotation shaft 20a of the motor 20 is located based on the quadrant information Q in the clockwise direction.

When the relative angle d of the motor 20 is in the third quadrant in the second determination area A2 (180 degrees ≤ d < 270 degrees), the quadrant in which the rotational position of the rotation shaft 20a of the motor 20 is located based on the quadrant information Q is one of three quadrants of the second quadrant, the third quadrant, and the fourth quadrant if the quadrant information Q has no abnormality. When the relative angle d ranges from 180 to 270 degrees and the quadrant information Q indicates that the rotational position of the rotation shaft 20a of the motor 20 is located in the second quadrant, the count correction value is "1." In this case, the quadrant information correction value is a value for changing the quadrant in which the rotational position of the rotation shaft 20a of the motor 20 is located based on the quadrant information Q in the counterclockwise direction. When the relative angle d ranges from 180 to 270 degrees and the quadrant information Q indicates that the rotational position of the rotation shaft 20a of the motor 20 is located in the third quadrant, the count correction value is "0." In this case, the quadrant information correction value is a value for not changing the quadrant in which the rotational position of the rotation shaft 20a of the motor 20 is located based on the quadrant information Q. When the relative angle d ranges from 180 to 270 degrees and the quadrant information Q indicates that the rotational position of the rotation shaft 20a of the motor 20 is located in the fourth quadrant, the count correction value is "-1." In this case, the quadrant information correction value is a value for changing the quadrant in which the rotational position of the rotation shaft 20a of the motor 20 is located based on the quadrant information Q in the clockwise direction.

When the relative angle d of the motor 20 is in the fourth quadrant in the second determination area A2 (270 degrees ≤ d < 360 degrees), the quadrant in which the rotational position of the rotation shaft 20a of the motor 20 is located based on the quadrant information Q is one of three quadrants of the first quadrant, the third quadrant, and the fourth quadrant if the quadrant information Q has no abnormality. When the relative angle d ranges from 270 to 360 degrees and the quadrant information Q indicates that the rotational position of the rotation shaft 20a of the motor 20 is located in the third quadrant, the count correction value is "1." In this case, the quadrant information correction value is a value for changing the quadrant in which the rotational position of the rotation shaft 20a of the motor 20 is located based on the quadrant information Q in the counterclockwise direction. When the relative angle d ranges from 270 to 360 degrees and the quadrant information Q indicates that the rotational position of the rotation shaft 20a of the motor 20 is located in the fourth quadrant, the count correction value is "0." In this case, the quadrant information correction value is a value for not changing the quadrant in which the rotational position of the rotation shaft 20a of the motor 20 is located based on the quadrant information Q. When the relative angle d ranges from 270 to 360 degrees and the quadrant information Q indicates that the rotational position of the rotation shaft 20a of the motor 20 is located in the first quadrant, the count correction value is "-1." In this case, the quadrant information correction value is a value for changing the quadrant in which the rotational position of the rotation shaft 20a of the motor 20 is located based on the quadrant information Q in the clockwise direction.

As illustrated in FIG. 13, the determination unit 35 computes a changed count value Cc using the second map M2. When the count correction value is "1," the determination unit 35 computes the changed count value Cc by increasing the count value C and outputs the changed count value Cc to the rotation angle computing unit 34. When the count correction value is "0," the determination unit 35 outputs the count value C as the changed count value Cc to the rotation angle computing unit 34. When the count correction value is "-1," the determination unit 35 computes the changed count value Cc by decreasing the count value C and outputs the changed count value Cc to the rotation angle computing unit 34.

The rotation angle computing unit 34 acquires the relative angle d which is computed by the relative angle computing unit 33 and the changed count value Cc which is computed by the determination unit 35. The rotation angle computing unit 34 computes the rotation angle θ of multiple turns of the motor 20 by adding a value, which is obtained by multiplying the number of turns of the rotation shaft 20a of the motor 20 based on the changed count value Cc by 360 degrees, to the relative angle d.

On the other hand, when the determination unit 35 determines that an abnormality has occurred in the count value C or the quadrant information Q in any one of determination on an abnormality of the quadrant information Q based on the count value C and the quadrant information Q, determination on an abnormality of the count value C based on the relative angle d and the quadrant information Q, and determination on high-speed rotation of the rotation shaft 20a of the motor 20 based on the current relative angle value dn and the previous relative angle value dn-1, the rotation angle computing unit 34 cannot acquire an appropriate value of the count value C (the changed count value Cc) which is required for computing the rotation angle θ of multiple turns of the motor 20. Therefore, when the determination unit 35 determines that an abnormality has occurred in the count value C or the quadrant information Q, the rotation angle computing unit 34 cannot compute the rotation angle θ of multiple turns of the motor 20 and thus the microcomputer 31 performs fail-safe such as stopping assistance for the steering operation. When the determination unit 35 acquires the counter abnormality flag Fc, the rotation angle computing unit 34 cannot acquire an appropriate value of the count value C which is required for computing the rotation angle θ of multiple turns of the motor 20 and thus the microcomputer 31 performs fail-safe such as stopping assistance for the steering operation.

Operations and advantages in the fourth embodiment will be described below. (1) There may be a difference between the number of turns indicated by the count value C and the actual number of turns due to delay of transmission of various signals or deviation between processes using various signals. Accordingly, the relative angle d which is computed by the relative angle computing unit 33 of the microcomputer 31 and the count value C which is computed by the counter circuit 101 of the rotation monitoring unit 32 may not match each other.

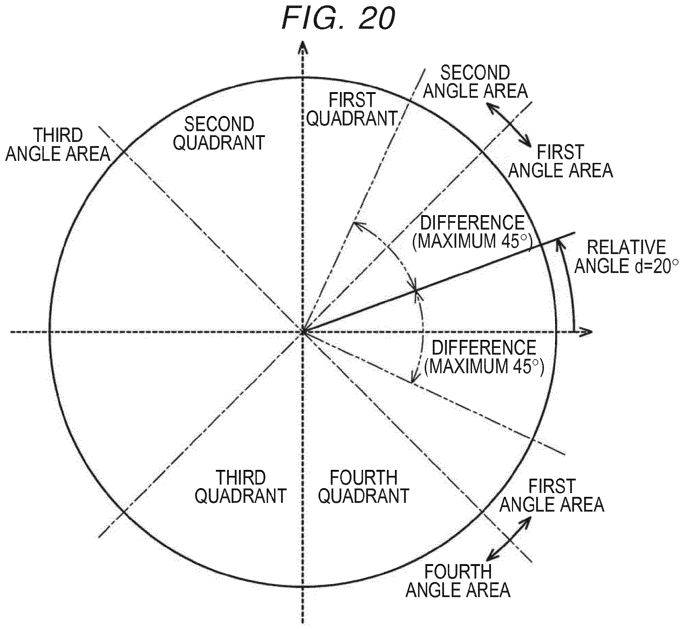

FIG. 20 illustrates angle areas in which the rotational position of the rotation shaft 20a of the motor 20 is located in the first determination area A1 and quadrants in which the rotational position of the rotation shaft 20a of the motor 20 is located in the second determination area A2 based on the quadrant information Q, for example, when the relative angle computing unit 33 computes the relative angle d as 20 degrees based on the detection signals from the rotation angle sensor 41. In this regard, even when the count value C having no abnormality is computed by the counter circuit 101, the count value C acquired by the microcomputer 31 may be a count value at an angle which is deviated by 45 degrees at the maximum (i.e., at an angle which is different by 45 degrees at the maximum) from the relative angle d which is computed by the relative angle computing unit 33. That is, the count value C which is computed by the counter circuit 101 is a value which can be assumed when the relative angle d is in the range of 335 to 65 degrees. At this time, the quadrant information Q which is acquired by the microcomputer 31 indicates that the rotational position of the rotation shaft 20a of the motor 20 is located in the first quadrant or the fourth quadrant in the second determination area A2. Accordingly, when the relative angle d which is computed by the relative angle computing unit 33 is 20 degrees and the quadrant in which the rotational position of the rotation shaft 20a of the motor 20 is located in the second determination area A2 based on the quadrant information Q is the first quadrant or the fourth quadrant, the count value C has no abnormality (i.e., the count value C is not abnormal). On the other hand, when the relative angle d which is computed by the relative angle computing unit 33 is 20 degrees and the quadrant in which the rotational position of the rotation shaft 20a of the motor 20 is located in the second determination area A2 based on the quadrant information Q is the second quadrant or the third quadrant, the count value C has an abnormality (i.e., the count value C is abnormal). In this way, a relationship between the count value C having an abnormality and the count value C having no abnormality can be determined for the relative angle d which is computed the relative angle computing unit 33 based on the detection signals from the rotation angle sensor 41.

In the fourth embodiment, the determination unit 35 of the microcomputer 31 determines an abnormality of the count value C (i.e., determines whether the count value C is abnormal) using the first determination area A1 which is deviated by 45 degrees as a predetermined amount from the second determination area A2 which is used to compute the count value C. When the relative angle d computed by the relative angle computing unit 33 is 20 degrees, that is, when the relative angle d is in the range of the first angle area (315 to 45 degrees), the determination unit 35 can determine that the count value C has no abnormality when the quadrant in which the rotational position of the rotation shaft 20a of the motor 20 is located in the second determination area A2 based on the quadrant information Q is the first quadrant or the fourth quadrant and that the count value C has an abnormality when the quadrant in which the rotational position is located is the second quadrant or the third quadrant. This is because, when the count value C does not have an abnormality, the quadrant information Q when the relative angle d is in the range of the first angle area indicates that the relative angle d is in the range of 270 to 90 degrees (the first quadrant or the fourth quadrant) in consideration of the deviation of 45 degrees at the maximum included in the count value C.

Accordingly, the first map M1 which is used to determine whether the count value C has an abnormality can be generated based on combinations of the first to fourth quadrants in which the rotational position of the rotation shaft 20a of the motor 20 is located based on the quadrant information Q and the first to fourth angle areas in which the rotational position of the rotation shaft 20a of the motor 20 is located based on the relative angle d. In this way, the determination unit 35 can store the first map M1 indicating the relationship of the first determination area A1 which is deviated by 45 degrees as the predetermined amount from the second determination area A2 for computing the count value C and determine an abnormality of the count value C using the first map M1. Accordingly, the microcomputer 31 can prevent occurrence of a situation where the rotation angle θ of multiple turns of the motor 20 is computed using the count value C having an abnormality.
(2) Even when the count value C has no abnormality, the count value C includes deviation of 45 degrees at the maximum and thus the relative angle d which is computed by the relative angle computing unit 33 of the microcomputer 31 and the count value C (the quadrant information Q) which is computed by the counter circuit 101 of the rotation monitoring unit 32 may not match each other. For example, as illustrated in FIG. 20, when the relative angle d computed by the relative angle computing unit 33 is 20 degrees and the quadrant information Q indicates that the rotational position of the rotation shaft 20a of the motor 20 in the second determination area A2 is located in the third quadrant, the relative angle d computed by the relative angle computing unit 33 of the microcomputer 31 does not match the quadrant information Q computed by the quadrant determining unit 105 and the count value C computed using the quadrant information Q. Therefore, in the fourth embodiment, when it is determined that the count value C has no abnormality, the determination unit 35 changes the count value C using the second map M2. For example, in FIG. 20, the determination unit 35 sets the count correction value to "1" based on the relative angle d and the quadrant information Q using the second map M2, sets the changed count value Cc to "+4" by increasing the count value C, and outputs the changed count value Cc to the rotation angle computing unit 34. Accordingly, the relative angle d computed by the relative angle computing unit 33 of the microcomputer 31 can be matched with the changed count value Cc computed by the determination unit 35.
(3) Since the determination unit 35 changes the count value C based on the detection signals, the angle area in which the rotational position of the rotation shaft 20a of the motor 20 is located in the second determination area A2 based on the changed count value Cc can be matched with the angle area in which the rotational position of the rotation shaft 20a of the motor 20 is located in the second determination area A2 based on the relative angle d which is computed using the detection signals. Accordingly, the changed count value Cc can be matched with the relative angle d.
(4) The number of angle areas in the first determination area A1 is the same as the number of quadrants in the second determination area A2 and the first determination area A1 is deviated by 45 degrees from the second determination area A2. Accordingly, the angle areas in the first determination area A1 are configured such that each angle area in the first determination area A1 corresponds to a certain angle area and an angle area adjacent to (neighboring to) the certain angle area in the second determination area A2. For example, the first angle area in the first determination area A1 corresponds to a half angle area of the first quadrant and a half angle area of the fourth quadrant in the second determination area A2. Accordingly, when the rotational position of the rotation shaft 20a of the motor 20 is located in a certain angle area in the first determination area A1 based on the relative angle d (the detection signal) and the count value C does not have an abnormality, the rotational position of the rotation shaft 20a of the motor 20 is located in one of two angle areas in the second determination area A2 corresponding to the certain angle area in the first determination area A1. In this way, the first determination area A1 and the second determination area A2 can be appropriately set by setting the numbers of angle areas in the first determination area A1 and the number of angle areas in the second determination area A2 to the same number and equalizing the correspondence relationship between the angle areas based on the deviation between the angle areas in setting the first determination area A1 and the second determination area A2.
(5) When the first determination area A1 is configured to be deviated by greater or less than a half (45 degrees) of one angle area in the second determination area A2 from the second determination area A2, two quadrants in the second determination area A2 unevenly (unequally) correspond to one angle area in the first determination area A1. For example, when the first determination area A1 is configured to be deviated by 60 degrees in the clockwise direction from the second determination area A2, an angle area of 30 degrees in the first quadrant and an angle area of 60 degrees in the second quadrant in the second determination area A2 correspond to the first angle area in the first determination area A1. In this case, the process of determining an abnormality of the count value C may be complicated or accuracy for determining an abnormality of the count value C may differ depending on the rotation direction of the rotation shaft 20a of the motor 20. In this regard, in the fourth embodiment, since the first determination area A1 is configured to be deviated by a half of an angle area (45 degrees) in the second determination area A2 from the second determination area A2, two quadrants in the second determination area A2 equally correspond to one angle area in the first determination area A1. Accordingly, the process of determining an abnormality of the count value C can be simply configured. It is possible to prevent occurrence of a situation where accuracy for determining an abnormality of the count value C differs depending on the rotation direction of the rotation shaft 20a of the motor 20.
(6) Since the count value C and the quadrant information Q are allowed to deviate by 45 degrees at the maximum from the relative angle d, the determination unit 35 may determine whether the count value C deviates by greater than 45 degrees from the relative angle d. That is, the determination accuracy of the process of determining an abnormality of the count value C may correspond to the computation accuracy for the count value C. Therefore, the determination unit 35 stores the first determination area A1 which is configured to be deviated by 45 degrees from the second determination area A2 in consideration of the deviation between the count value C and the quadrant information Q and determines an abnormality of the count value C (i.e., determines whether the count value C is abnormal) using the first determination area A1. Accordingly, the process of determining an abnormality of the count value C can be performed with an appropriate computation load corresponding to the computation accuracy for the count value C.
(7) The rotation shaft 20a of the motor 20 may rotate at a high speed due to a large reverse input based on running over a curb stone or the like. In this case, the count value C may not be appropriately transmitted from the rotation monitoring unit 32 to the microcomputer 31. Therefore, in this embodiment, the determination unit 35 of the microcomputer 31 does not employ the current count value Cn or the previous count value Cn-1 as a regular count value C by determining that the current count value Cn has an abnormality (i.e., the current count value Cn is abnormal) when the amount of change of the relative angle d is greater than the predetermined amount of change. On the other hand, the determination unit 35 employs the previous count value Cn-1 as a regular count value C by determining that the current count value Cn and the previous count value Cn-1 have no abnormality (i.e., the current count value Cn and the previous count value Cn-1 are not abnormal) when the amount of change of the relative angle d is not greater than the predetermined amount of change. The reason why the previous count value Cn-1 is employed as a regular count value C is that the previous count value Cn-1 is determined to have no abnormality in the current computation cycle and is also determined to have no abnormality in the previous computation cycle. Accordingly, it is possible to further enhance accuracy of count value C which is used to compute the rotation angle θ of multiple turns of the motor 20.
(8) When the previous count value Cn-1 changes to the current count value Cn, the quadrant information Q should change from the previous quadrant information value Qn-1 to the current quadrant information value Qn in accordance with the change of the count value C. For example, when the previous count value Cn-1 "4R+1" changes to the current count value Cn "(4R+1)+1," the previous quadrant information value Qn-1 indicating the first quadrant should change to the current quadrant information value Qn indicating the second quadrant. However, when the previous quadrant information value does not change to the current quadrant information value Qn indicating the second quadrant, it is thought that an abnormality has occurred in one of the count value C and the quadrant information Q. Even when the count value C and the quadrant information Q do not have a proper relationship in this way, since the counter comparison circuit 108 of the rotation monitoring unit 32 determines that an abnormality has not occurred in the counter 106, the likelihood that the count value C has an abnormality is higher than the likelihood that the quadrant information Q has an abnormality. Therefore, in this embodiment, the determination unit 35 can determine that the quadrant information Q has no abnormality when the quadrant information Q changes in the predetermined relationship with the change of the count value C, and determine that the quadrant information Q has an abnormality when the quadrant information Q does not change in the predetermined relationship with the change of the count value C. When it is determined that the previous quadrant information value Qn-1 does not have an abnormality in the previous computation cycle and the quadrant information Q does not change in the predetermined relationship with the change of the count value C, the determination unit 35 can determine that the current quadrant information value Qn has an abnormality.
(9) The counter comparison circuit 108 determines an abnormality of the counter 106 (i.e., determines whether there is an abnormality in the counter 106) based on the result of comparison between the current count value Cn and the previous count value Cn-1 in consideration of the left turn flag Fl or the right turn flag Fr. Accordingly, it is possible to prevent occurrence of a situation where a count value C having an abnormality is generated by the counter 106.

Hereinafter, an angle computing device according to a fifth embodiment which is provided in an EPS will be described. Differences from the fourth embodiment will be mainly described below.

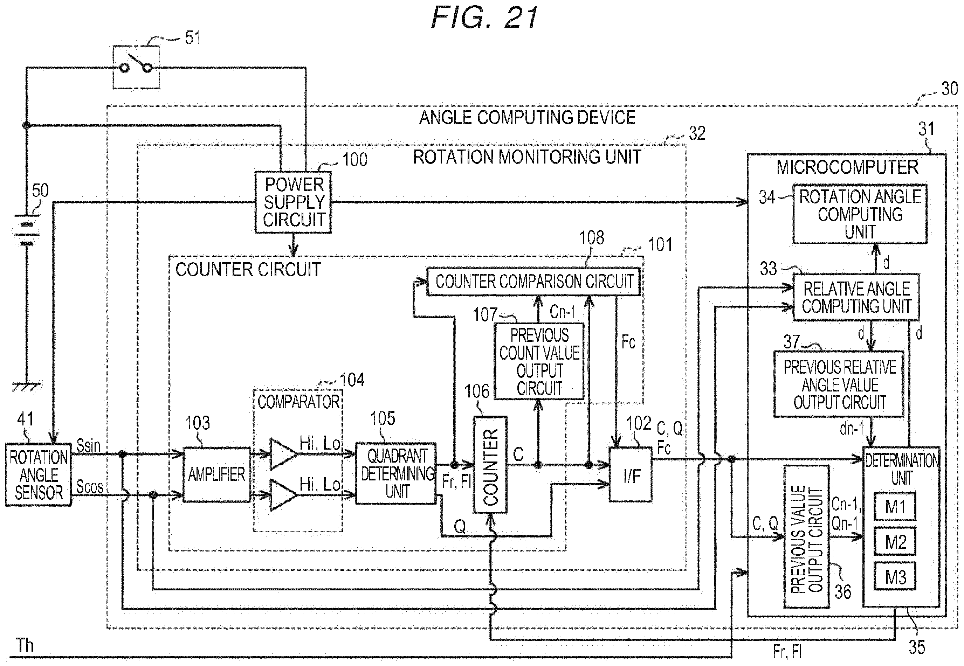

As illustrated in FIG. 21, a determination unit 35 acquires a relative angle d which is acquired by a relative angle computing unit 33, quadrant information Q which is computed by a quadrant determining unit 105, and a count value C which is computed by a counter circuit 101. When it is determined that the count value C has no abnormality using the first map M1, the determination unit 35 changes the count value C stored in the counter 106 of the counter circuit 101 based on the relative angle d (the detection signal) using the second map M2. The determination unit 35 sets up the left turn flag Fl when the count correction value is "1" and sets up the right turn flag Fr when the count correction value is "-1." The counter 106 increases the count value each time the left turn flag Fl is acquired from the quadrant determining unit 105 and the determination unit 35 and decreases the count value each time the right turn flag Fr is acquired from the quadrant determining unit 105 and the determination unit 35.

The rotation angle computing unit 34 of the microcomputer 31 acquires the relative angle d which is computed by the relative angle computing unit 33 and a changed count value Cc which is computed by the determination unit 35. The rotation angle computing unit 34 computes a rotation angle θ of multiple turns of the motor 20 by adding a value, which is obtained by multiplying the number of turns of the rotation shaft 20a of the motor 20 based on the changed count value Cc by 360 degrees, to the relative angle d.

Operations and advantages in the fifth embodiment will be described below. (10) Since the count value C stored in the counter 106 of the counter circuit 101 is changed, the relative angle d which is computed by the relative angle computing unit 33 of the microcomputer 31 and the count value C which is stored in the counter 106 can be matched with each other. Further, it is possible to appropriately perform the process (for example, computation of the rotation angle θ of multiple turns of the motor 20) using the count value C acquired from the counter 106.

The embodiment may be modified as follows. The following other embodiments may be combined with each other as long as they are not technically contradictory to each other. In the embodiment, the first determination area A1 includes four angle areas, but may include three angle areas or may include five or more angle areas. The second determination area A2 includes four quadrants, but may include three quadrants or may include five or more quadrants. That is, the first determination area A1 can be configured to include three or more angle areas. The second determination area A2 can be configured to include three or more quadrants.

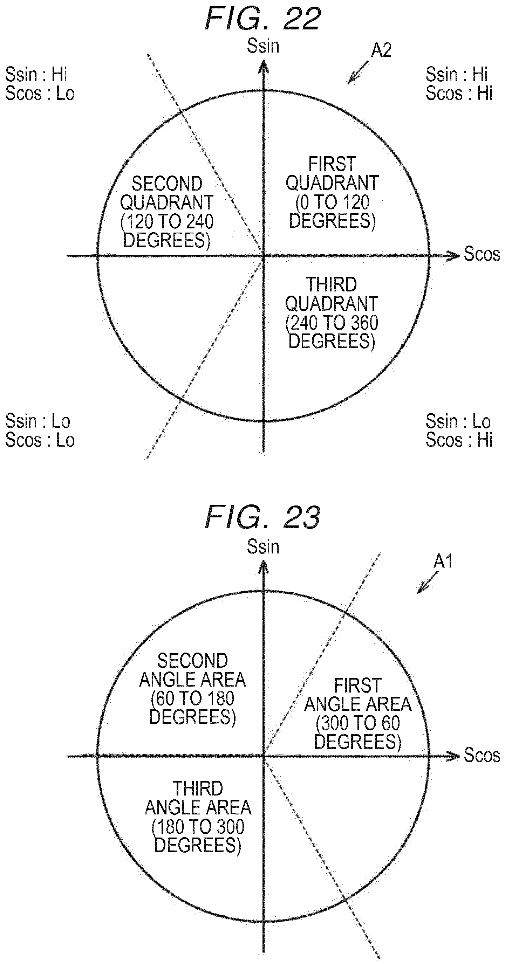

For example, as illustrated in FIGS. 22 and 23, the first determination area A1 may be configured to include three angle areas and the second determination area A2 may be configured to include three quadrants. In the second determination area A2, one turn (360 degrees) of the rotation shaft 20a of the motor 20 is divided into three quadrants at intervals of 120 degrees based on a combination of a sine wave signal Ssin and a cosine wave signal Scos, that is, a combination of detection signals. The first quadrant is a quadrant in which the relative angle d of the motor 20 is in a range of 0 to 120 degrees. The second quadrant is a quadrant in which the relative angle d of the motor 20 is in a range of 120 to 240 degrees. The third quadrant is a quadrant in which the relative angle d of the motor 20 is in a range of 240 to 360 degrees.

In the first determination area A1, one turn (360 degrees) of the rotation shaft 20a of the motor 20 is divided into three angle areas at intervals of 120 degrees based on a combination of a sine wave signal Ssin and a cosine wave signal Scos, that is, a combination of detection signals. The first determination area A1 is configured to be deviated by a predetermined amount of 60 degrees from the second determination area A2. The predetermined amount is set to a half of an angle area (60 degrees) in the second determination area A2. The angle computing device 30 is designed such that the count value C and the quadrant information Q are allowed to be the count value and the quadrant information at an angle which is deviated by approximately less than 60 degrees from the relative angle d which is computed by the relative angle computing unit 33, due to delay of transmission of various signals and deviation between processes using various signals. The first angle area is a quadrant in which the relative angle d of the motor 20 is in a range of 300 to 60 degrees. The second angle area is a quadrant in which the relative angle d of the motor 20 is in a range of 60 to 180 degrees. The third angle area is a quadrant in which the relative angle d of the motor 20 is in a range of 180 to 300 degrees.

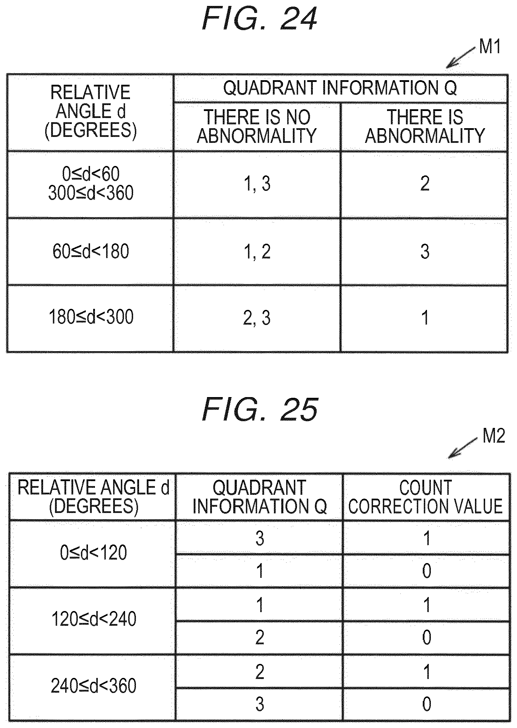

The determination unit 35 stores a first map M1 illustrated in FIG. 24 and a second map M2 illustrated in FIG. 25. The determination unit 35 determines an abnormality of the count value C (i.e., determines whether the count value C is abnormal) using the first map M1, and changes the count value C using the second map M2.

FIG. 24 illustrates the first map M1 when the first determination area A1 and the second determination area A2 include three angle areas. When the relative angle d of the motor 20 is in a range of 300 to 60 degrees (0 degrees ≤ d < 60 degrees, 300 degrees ≤ d < 360 degrees), that is, when the rotational position of the rotation shaft 20a of the motor 20 is in the first angle area, the quadrant having no abnormality includes the first quadrant and the third quadrant and the quadrant having an abnormality is the second quadrant. When the relative angle d of the motor 20 is in a range of 60 to 120 degrees (60 degrees ≤ d < 120 degrees), that is, when the rotational position of the rotation shaft 20a of the motor 20 is in the second angle area, the quadrant having no abnormality includes the first quadrant and the second quadrant and the quadrant having an abnormality is the third quadrant. When the relative angle d of the motor 20 is in a range of 120 to 240 degrees (120 degrees ≤ d < 240 degrees), that is, when the rotational position of the rotation shaft 20a of the motor 20 is in the third angle area, the quadrant having no abnormality includes the second quadrant and the third quadrant and the quadrant having an abnormality is the first quadrant.

FIG. 25 illustrates the second map M2 when the first determination area A1 and the second determination area A2 include three angle areas. When the relative angle d of the motor 20 is in a range of the first quadrant in the second determination area A2 (0 degrees ≤ d < 120 degrees), the count correction value is "1" when the quadrant information Q indicates that the rotational position of the rotation shaft 20a of the motor 20 is located in the third quadrant, and the count correction value is "0" when the quadrant information Q indicates that the rotational position of the rotation shaft 20a of the motor 20 is located in the first quadrant. When the relative angle d of the motor 20 is in a range of the second quadrant in the second determination area A2 (120 degrees ≤ d < 240 degrees), the count correction value is "1" when the quadrant information Q indicates that the rotational position of the rotation shaft 20a of the motor 20 is located in the first quadrant, and the count correction value is "0" when the quadrant information Q indicates that the rotational position of the rotation shaft 20a of the motor 20 is located in the second quadrant. When the relative angle d of the motor 20 is in a range of the third quadrant in the second determination area A2 (240 degrees ≤ d < 360 degrees), the count correction value is "1" when the quadrant information Q indicates that the rotational position of the rotation shaft 20a of the motor 20 is located in the second quadrant, and the count correction value is "0" when the quadrant information Q indicates that the rotational position of the rotation shaft 20a of the motor 20 is located in the third quadrant. The determination unit 35 changes the count value C using these count correction values.

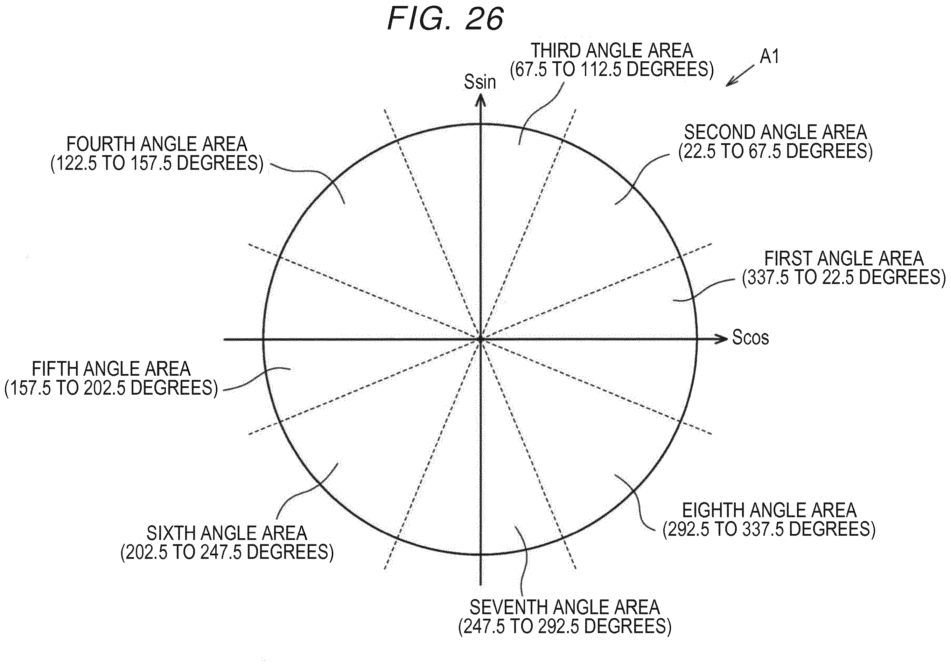

In the embodiment, the number of angle areas in the first determination area A1 may be different from the number of quadrants in the second determination area A2. For example, the second determination area A2 may be configured to include four quadrants as illustrated in FIG. 14 and the first determination area A1 may be configured to include eight angle areas as illustrated in FIG. 26.

FIG. 26 illustrates the first determination area A1 including eight angle areas. In the first determination area A1, one turn (360 degrees) of the rotation shaft 20a of the motor 20 is divided into eight angle areas at intervals of 45 degrees based on a combination of a sine wave signal Ssin and a cosine wave signal Scos, that is, the relative angle d. The first determination area A1 is configured to be deviated by a predetermined amount of 22.5 degrees from the second determination area A2. The predetermined amount is set to a half of an angle area (22.5 degrees) in the second determination area A2. In this case, the angle computing device 30 is designed such that the count value C and the quadrant information Q are allowed to be the count value and the quadrant information at an angle which is deviated by approximately less than 22.5 degrees from the relative angle d which is computed by the relative angle computing unit 33 due to delay of transmission of various signals and deviation between processes using various signals. The first angle area is an angle area in which the relative angle d of the motor 20 is in a range of 337.5 to 22.5 degrees. The second angle area is an angle area in which the relative angle d of the motor 20 is in a range of 22.5 to 67.5 degrees. The third angle area is an angle area in which the relative angle d of the motor 20 is in a range of 67.5 to 112.5 degrees. Similarly to the first to third angle areas, the fourth to eighth angle areas are configured as angle areas of 45 degrees.

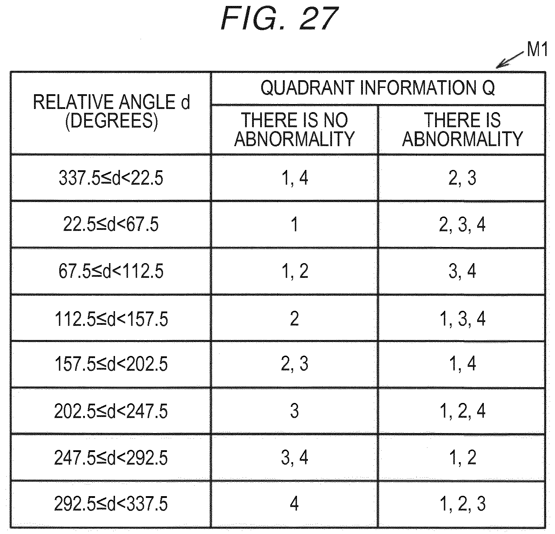

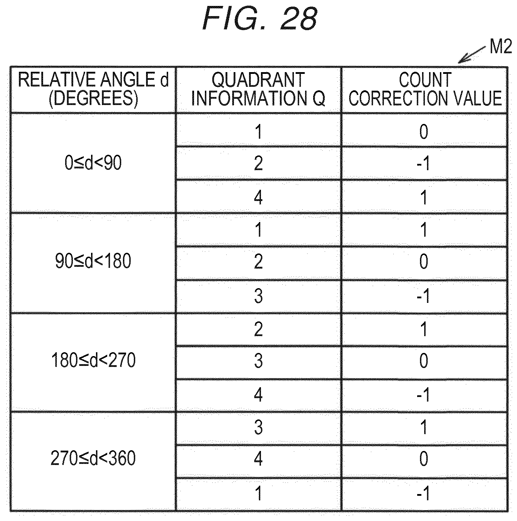

The determination unit 35 stores a first map M1 illustrated in FIG. 27 and a second map M2 illustrated in FIG. 28. The determination unit 35 determines an abnormality of the count value C (i.e., determines whether the count value C is abnormal) using the first map M1 and changes the count value C using the second map M2.

FIG. 27 illustrates the first map M1 when the first determination area A1 includes eight angle areas and the second determination area A2 includes four quadrants. When the relative angle d of the motor 20 is in a range of 337.5 to 22.5 degrees (0 degrees ≤ d < 22.5 degrees, 337.5 degrees ≤ d < 360 degrees), that is, when the rotational position of the rotation shaft 20a of the motor 20 is in the first angle area, the quadrant having no abnormality includes the first quadrant and the fourth quadrant and the quadrant having an abnormality includes the second quadrant and the third quadrant. When the relative angle d of the motor 20 is in a range of 22.5 to 67.5 degrees (22.5 degrees ≤ d < 67.5 degrees), that is, when the rotational position of the rotation shaft 20a of the motor 20 is in the second angle area, the quadrant having no abnormality is the first quadrant and the quadrant having an abnormality includes the second to fourth quadrants. When the relative angle d of the motor 20 is in a range of 67.5 to 112.5 degrees (67.5 degrees ≤ d < 112.5 degrees), that is, when the rotational position of the rotation shaft 20a of the motor 20 is in the third angle area, the quadrant having no abnormality includes the first quadrant and the second quadrant and the quadrant having an abnormality includes the third quadrant and the fourth quadrant. When the rotational position of the rotation shaft 20a of the motor 20 is in the ranges of the fourth to eighth angle areas, the quadrant having no abnormality and the quadrant having an abnormality are determined, similarly to the first to third angle areas.

FIG. 28 illustrates the second map M2 when the first determination area A1 includes eight angle areas and the second determination area A2 includes four quadrants. When the relative angle d of the motor 20 is in a range of the first quadrant in the second determination area A2 (0 degrees ≤ d < 90 degrees), the count correction value is "1" when the quadrant information Q indicates that the rotational position of the rotation shaft 20a of the motor 20 is located in the fourth quadrant, the count correction value is "0" when the quadrant information Q indicates that the rotational position of the rotation shaft 20a of the motor 20 is located in the first quadrant, and the count correction value is "-1" when the quadrant information indicates that the rotational position of the rotation shaft 20a of the motor 20 is located in the second quadrant. The relationship between the quadrant information Q and the count correction value is determined also when the relative angle d of the motor 20 is in the ranges of the second to fourth quadrants in the second determination area A2. The determination unit 35 changes the count value C using these count correction values.

In the embodiment, the counter circuit 101 computes the count value C in a cycle in which rotation of the rotation shaft 20a of the motor 20 by a unit rotation angle (90 degrees) is not missed, that is, in a cycle in which the change of the quadrant in which the rotational position of the rotation shaft 20a of the motor 20 is located in the second determination area A2 from a certain quadrant to an adjacent quadrant is not missed, but the invention is not limited thereto. For example, when the first determination area A1 includes eight angle areas and the second determination area A2 includes eight angle areas, the counter circuit 101 may compute the count value C in a cycle in which the change of the quadrant in which the rotational position of the rotation shaft 20a of the motor 20 is located from a certain quadrant to a quadrant next to a quadrant adjacent to the certain quadrant is not missed. In this case, the counter 106 may add or subtract "2" to or from the count value C depending on the change of the quadrant in the second determination area A2. The computation cycle for the count value C can be appropriately changed. The determination unit 35 may change the count value C such that the angle area in which the rotational position of the rotation shaft 20a of the motor 20 is located in the second determination area A2 based on the count value C matches the angle area in which the rotational position of the rotation shaft 20a of the motor 20 is located in the second determination area A2 based on the relative angle d, or may change the count value C such that the angle area in which the rotational position of the rotation shaft 20a of the motor 20 is located in the second determination area A2 based on the count value C is close to the angle area in which the rotational position of the rotation shaft 20a of the motor 20 is located in the second determination area A2 based on the relative angle d.

In the embodiment, the determination unit 35 acquires the relative angle d which is computed by the relative angle computing unit 33, but the determination unit 35 may acquire a detection signal from the rotation angle sensor 41 and determine an angle area in which the rotational position of the rotation shaft 20a of the motor 20 is located in the first determination area A1 based on the detection signal.

In the embodiment, the determination unit 35 changes the count value C using the second map M2 when the count value C has no abnormality, but may not change the count value C. Since fail-safe is performed when the determination unit 35 determines that the count value C has an abnormality, it is possible to prevent occurrence of a situation where the rotation angle θ of multiple turns of the motor 20 is computed using the count value C having an abnormality, and to prevent occurrence of a situation where various processes are performed using the rotation angle θ.

In the embodiment, the direction in which the first determination area A1 deviates from the second determination area A2 is set to the clockwise direction, but may be set to the counterclockwise direction. The predetermined amount by which the first determination area A1 is deviated from the second determination area A2 is set in consideration of delay of transmission of various signals and deviation between processes using various signals, but the invention is not limited thereto. For example, the predetermined amount may be set from the viewpoint of securing determination accuracy for determination on an abnormality of the count value C or may be set from the viewpoint of easily designing the angle areas in the first determination area A1.

In the embodiment, when the determination unit 35 determines that an abnormality has not occurred in the count value C and the quadrant information Q in all of determination on an abnormality of the quadrant information Q based on the count value C and the quadrant information Q, determination on an abnormality of the count value C based on the relative angle d and the quadrant information Q, and determination on high-speed rotation of the rotation shaft 20a of the motor 20 based on the current relative angle value dn and the previous relative angle value dn-1, the determination unit 35 employs the previous count value Cn-1 as a regular count value C, but the invention is not limited thereto. That is, when it is determined that an abnormality has not occurred in the count value C and the quadrant information Q in all of the three kinds of determinations, the determination unit 35 may employ the current count value Cn as a regular count value C.

In the embodiment, the determination unit 35 performs determination on an abnormality of the quadrant information Q based on the count value C and the quadrant information Q, determination on an abnormality of the count value C based on the relative angle d and the quadrant information Q, and determination on high-speed rotation of the rotation shaft 20a of the motor 20 based on the current relative angle value dn and the previous relative angle value dn-1 in each computation cycle, but the invention is not limited thereto. For example, the determination unit 35 may perform determination on an abnormality of the quadrant information Q in only one specific computation cycle of 10 computation cycles. In this case, when the change from the previous count value Cn-1 to the current count value Cn does not match the change from the previous quadrant information value Qn-1 to the current quadrant information value Qn, the determination unit 35 determines that at least one of the current quadrant information value Qn and the previous quadrant information value Qn-1 has an abnormality.

In the embodiment, the predetermined amount of change is set to correspond to the deviation of 45 degrees by which the count value C and the quadrant information Q are allowed to be deviated from the relative angle d, but the invention is not limited thereto. For example, the predetermined amount of change may be set to an angle less than 45 degrees for the purpose of more strictly restricting the rotation speed of the rotation shaft 20a of the motor 20 or may be set to an angle greater than 45 degrees from the viewpoint of determining whether the rotation speed of the rotation shaft 20a of the motor 20 clearly indicates an abnormality value. That is, the predetermined amount of change may be set from any viewpoint as long as an abnormality of the change of the relative angle d can be determined (i.e., as long as it can be determined whether the change of the relative angle d is abnormal).

In the embodiment, the determination unit 35 performs determination on high-speed rotation of the rotation shaft 20a of the motor 20 based on the current relative angle value dn and the previous relative angle value (i.e., the immediately preceding relative angle value) dn-1, but the invention is not limited thereto. For example, the determination unit 35 may perform determination on high-speed rotation of the rotation shaft 20a of the motor 20 based on the relative angle d in the computation cycle prior to the previous relative angle value dn-1 in addition to the current relative angle value dn and the previous relative angle value dn-1.

In the embodiment, the determination unit 35 determines an abnormality of the quadrant information Q (i.e., determines whether the quadrant information Q is abnormal) based on whether the change from the previous count value Cn-1 to the current count value Cn matches the change from the previous quadrant information value Qn-1 to the current quadrant information value Qn, but the invention is not limited thereto. For example, the determination unit 35 may determine an abnormality of the quadrant information Q using the count value C in the computation cycle prior to the previous count value (i.e., the immediately preceding count value) Cn-1 in addition to the current count value Cn and the previous count value Cn-1 and using the quadrant information Q in the computation cycle prior to the previous quadrant information value (i.e., the immediately preceding quadrant information value) Qn-1 in addition to the current quadrant information value Qn and the previous quadrant information value Qn-1.

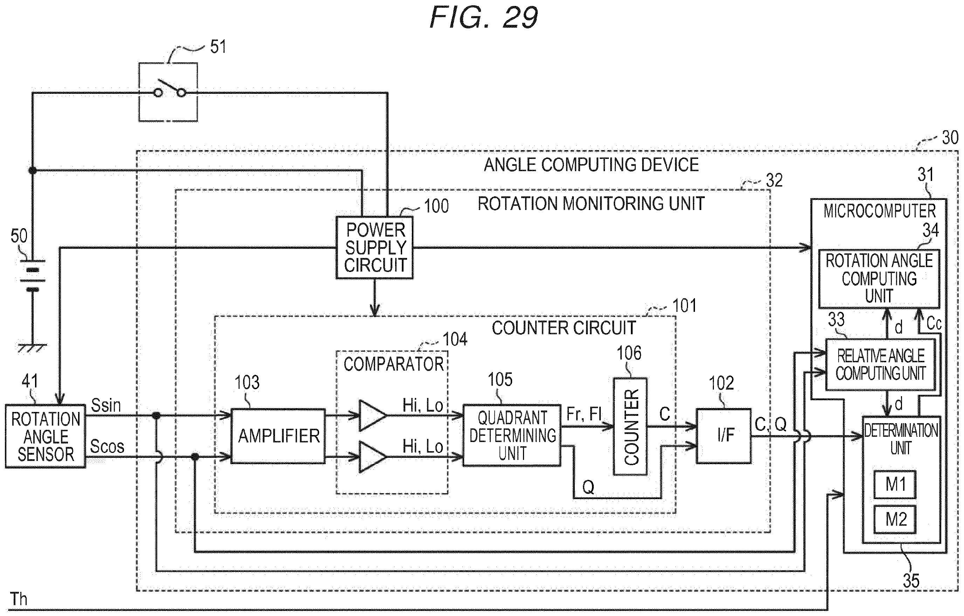

In the embodiment, the determination unit 35 performs determination on an abnormality of the quadrant information Q based on the count value C and the quadrant information Q, determination on an abnormality of the count value C based on the relative angle d and the quadrant information Q, and determination on high-speed rotation of the rotation shaft 20a of the motor 20 based on the current relative angle value dn and the previous relative angle value dn-1, but the invention is not limited thereto. The determination unit 35 may perform at least determination on an abnormality of the count value C based on the relative angle d and the quadrant information Q. When the determination unit 35 performs only determination on an abnormality of the count value C based on the relative angle d and the quadrant information Q, the angle computing device 30 has a configuration in which the previous count value output circuit 107, the counter comparison circuit 108, the previous value output circuit 36, and the previous relative angle value output circuit 37 may be omitted as illustrated in FIG. 29.

In the embodiment, the rotation monitoring unit 32 is an ASIC that performs a predetermined operation in response to a specific input, but the invention is not limited thereto. For example, the rotation monitoring unit 32 may be embodied by a microcomputer such as a micro processing unit. The rotation monitoring unit 32 may read a program stored in a storage unit thereof and perform an operation based on the program. In this case, since the count value C is computed with a computation load less than the computation load for computing the rotation angle θ of multiple turns (i.e., the load for computing the rotation angle θ of multiple turns), the configuration of the rotation monitoring unit 32 can be made simpler than the configuration of the microcomputer 31. The rotation monitoring unit 32 may be embodied by a microcomputer with low power consumption which is dedicated to a specific function such as computation of the rotation angle θ of multiple turns. In this case, since the rotation monitoring unit 32 is dedicated to a specific function, the configuration of the rotation monitoring unit 32 can be made simpler than the configuration of the microcomputer 31.

The rotation angle sensor 41 may be, for example, a sensor using a Hall element or may be a sensor using a resolver. The rotation angle sensor 41 may detect, for example, a rotation angle of the steering shaft 11. The rotation angle of the steering shaft 11 can be converted into the rotation angle θ of multiple turns of the motor 20 in consideration of, for example, the reduction ratio of the reduction mechanism 21 interposed between the motor 20 and the steering shaft 11.

The rotation angle sensor 41 is provided in the motor 20, but may be provided in the steering shaft 11 which is the rotation shaft of the steering wheel 10. The rotation monitoring unit 32 intermittently computes the count value C when the ignition switch 51 is in the ON state, but may not compute the count value C when the ignition switch 51 is in the ON state. In this case, when the ignition switch 51 is switched from the ON state to the OFF state, for example, the microcomputer 31 stores the current rotation angle θ and the rotation monitoring unit 32 intermittently computes and stores the count value C after starting its operation. When the ignition switch 51 is switched from the OFF state to the ON state, the microcomputer 31 reads the count value C computed by the rotation monitoring unit 32 in the period in which the ignition switch 51 is in the OFF state and the stored rotation angle θ, and computes the rotation angle θ of the motor 20.

The determination unit 35 receives the quadrant information Q which is computed by the quadrant determining unit 105 and determines an abnormality of the count value C (i.e., determines whether the count value C is abnormal) and changes the count value C using the quadrant information Q, but the invention is not limited thereto. For example, when the rotation monitoring unit 32 continuously computes the count value C in the period in which the ignition switch 51 is in the ON state, the determination unit 35 may generate quadrant information Q from the count value acquired from the counter 106 and may determine an abnormality of the count value C (i.e., may determine whether the count value C is abnormal) and may change the count value C using the quadrant information Q.

When it is determined that the count value C has no abnormality, the determination unit 35 changes the quadrant information Q in addition to changing the count value C. However, at least the count value C may be changed and the quadrant information Q may not be changed.

The previous value output circuit 36 may store the changed count value Cc in the current computation cycle which is changed based on the count correction value and the changed quadrant information Q in the current computation cycle which is changed based on the quadrant information correction value in the determination unit 35. That is, in the embodiment, the changed values of the count value C and the quadrant information Q which are changed in consideration of communication delay or the like are stored as the previous count value Cn-1 and the previous quadrant information value Qn-1 in the previous value output circuit 36. Each time the changed count value Cc in the current computation cycle and the changed quadrant information Q in the current computation cycle are input, the previous value output circuit 36 outputs the changed count value Cc in the previous computation cycle and the changed quadrant information Q in the previous computation cycle to the determination unit 35. Accordingly, the determination unit 35 can determine an abnormality of the count value C and the quadrant information Q using information which is corrected in the previous computation cycle.

The first map M1 may indicate a relationship between the angle area in which the rotational position of the rotation shaft 20a of the motor 20 is located in the first determination area A1 based on the relative angle d and the quadrant in which the rotational position of the rotation shaft 20a of the motor 20 is located in the second determination area A2 based on the quadrant information Q and the count value C. The second map M2 may indicate a relationship among the relative angle d of the motor 20, the quadrant in which the rotational position of the rotation shaft 20a of the motor 20 is located based on the quadrant information Q and the count value C, and the count correction value which is a correction value for the count value C.

The quadrant determining unit 105 may set up the left turn flag Fl or the right turn flag Fr based on the change of the combination of a signal of a Hi level and a signal of a Lo level which are generated by the comparator 104 and may generate the quadrant information Q in parallel with generation of the left turn flag Fl or the right turn flag Fr. That is, the counter circuit 101 may perform computation of the count value C and computation of the quadrant information Q in parallel.

The microcomputer 31 may receive the detection signal from the rotation angle sensor 41 via the rotation monitoring unit 32 (the counter circuit 101 and the communication interface 102). In this case, the rotation angle sensor 41 is supplied with electric power similarly to the microcomputer 31 when the ignition switch 51 is in the ON state.

The EPS in the embodiments may be embodied as an EPS in which the rotation shaft 20a of the motor 20 is parallel to the axis of the rack shaft 12 or may be applied to an EPS in which the rotation shaft 20a and the rack shaft 12 are coaxial. The invention is not limited to the EPS and may be applied to a steer-by-wire steering system.

A vehicle in which the EPS according to each embodiment is mounted may be a so-called vehicle with an internal combustion engine employing an engine as a drive source or may be a so-called electric vehicle employing a motor as a drive source. In the case of an electric vehicle, the ignition switch is a switch that starts the motor as a drive source of the vehicle.

## Claims

1. An angle computing device, **characterized by** comprising:
a first computing unit (31) configured to compute a rotation angle of a motor based on a detection signal from a detection unit that detects the rotation angle of the motor; and
a second computing unit (32) configured to compute turn number information indicating the number of turns of the motor as information used to compute the rotation angle based on the detection signal from the detection unit,
wherein, when a start switch of a vehicle is off, the first computing unit (31) stops and the second computing unit (32) computes the turn number information, and
wherein, when the start switch is on, the first computing unit (31) computes the rotation angle using the turn number information that is computed by the second computing unit (32) while the start switch is off, **characterized in that**
wherein, in a case where the start switch is off, when rotation of the motor is detected, the second computing unit (32) intermittently computes the turn number information in a cycle (Toff2) that is shorter than a cycle (Toff1) in which the turn number information is computed when the rotation of the motor is not detected.

2. The angle computing device according to claim 1, wherein:
the second computing unit (32) is an application specific integrated circuit that outputs a predetermined output in response to a specific input; and
the first computing unit (31) is a microcomputer that reads a program stored in a storage unit and performs a computation based on the program.

3. The angle computing device according to claim 1, wherein the second computing unit (32) is configured to detect the rotation of the motor when a difference between a voltage value of a current detection signal detected by the detection unit and a voltage value of an immediately preceding detection signal detected by the detection unit is equal to or greater than a threshold value.

4. The angle computing device according to any one of claims 1 to 3, wherein the second computing unit (32) is configured to intermittently compute the turn number information when the start switch is off, and to intermittently compute the turn number information in a cycle (Toff1) that is longer than a cycle (Ton) in which the turn number information is computed when the start switch is on.

## Patentansprüche

1. Winkelberechnungsvorrichtung, **dadurch gekennzeichnet, dass** sie
eine erste Berechnungseinheit (31), die so konfiguriert ist, dass sie einen Drehwinkel eines Motors basierend auf einem Erfassungssignal von einer Erfassungseinheit, die den Drehwinkel des Motors erfasst, berechnet; und
eine zweite Berechnungseinheit (32) aufweist, die so konfiguriert ist, dass sie Umdrehungszahlinformationen, die die Anzahl der Umdrehungen des Motors angeben, als Informationen berechnet, die zum Berechnen des Drehwinkels basierend auf dem Erfassungssignal von der Erfassungseinheit verwendet werden,
wobei, wenn ein Startschalter eines Fahrzeugs ausgeschaltet ist, die erste Berechnungseinheit (31) anhält und die zweite Berechnungseinheit (32) die Umdrehungszahlinformation berechnet, und
wobei, wenn der Startschalter eingeschaltet ist, die erste Berechnungseinheit (31) den Drehwinkel unter Verwendung der Umdrehungszahlinformationen berechnet, die von der zweiten Berechnungseinheit (32) berechnet wird, während der Startschalter ausgeschaltet ist, **dadurch gekennzeichnet, dass**
wobei in einem Fall, in dem der Startschalter ausgeschaltet ist, wenn eine Drehung des Motors erfasst wird, die zweite Berechnungseinheit (32) intermittierend die Umdrehungszahlinformationen in einem Zyklus (Toff2) berechnet, der kürzer ist als ein Zyklus (Toff1), in dem die Umdrehungszahlinformationen berechnet werden, wenn die Drehung des Motors nicht erfasst wird.

2. Winkelberechnungsvorrichtung nach Anspruch 1, wobei
die zweite Berechnungseinheit (32) eine anwendungsspezifische integrierte Schaltung ist, die eine vorbestimmte Ausgabe in Antwort auf eine spezifische Eingabe ausgibt; und
die erste Berechnungseinheit (31) ein Mikrocomputer ist, der ein in einer Speichereinheit gespeichertes Programm liest und eine auf dem Programm basierende Berechnung durchführt.

3. Winkelberechnungsvorrichtung nach Anspruch 1, wobei die zweite Berechnungseinheit (32) so konfiguriert ist, dass sie die Drehung des Motors erfasst, wenn eine Differenz zwischen einem Spannungswert eines von der Erfassungseinheit erfassten Stromerfassungssignals und einem Spannungswert eines unmittelbar vorhergehenden, von der Erfassungseinheit erfassten Erfassungssignals gleich einem Schwellenwert oder größer als dieser ist.

4. Winkelberechnungsvorrichtung nach einem der Ansprüche 1 bis 3, wobei die zweite Berechnungseinheit (32) so konfiguriert ist, dass sie die Umdrehungszahlinformationen intermittierend berechnet, wenn der Startschalter ausgeschaltet ist, und dass sie die Umdrehungszahlinformationen intermittierend in einem Zyklus (Toff1) berechnet, der länger ist als ein Zyklus (Ton), in dem die Umdrehungszahlinformationen berechnet werden, wenn der Startschalter eingeschaltet ist.

## Revendications

1. Dispositif de calcul d'angle, **caractérisé en ce qu'**il comprend :
une première unité de calcul (31) configurée pour calculer un angle de rotation d'un moteur sur la base d'un signal de détection provenant d'une unité de détection qui détecte l'angle de rotation du moteur ; et
une deuxième unité de calcul (32) configurée pour calculer des informations de nombre de tours indiquant le nombre de tours du moteur comme informations utilisées pour calculer l'angle de rotation sur la base du signal de détection provenant de l'unité de détection,
dans lequel, lorsqu'un commutateur de démarrage d'un véhicule est désactivé, la première unité de calcul (31) s'arrête et la deuxième unité de calcul (32) calcule les informations de nombre de tours, et
dans lequel, lorsque le commutateur de démarrage est activé, la première unité de calcul (31) calcule l'angle de rotation en utilisant les informations de nombre de tours qui sont calculées par la deuxième unité de calcul (32) tandis que le commutateur de démarrage est désactivé, **caractérisé en ce que**
dans lequel, dans un cas où le commutateur de démarrage est désactivé, lorsqu'une rotation du moteur est détectée, la deuxième unité de calcul (32) calcule par intermittence les informations de nombre de tours dans un cycle (Toff2) qui est plus court qu'un cycle (Toff1) dans lequel les informations de nombre de tours sont calculées lorsque la rotation du moteur n'est pas détectée.

2. Dispositif de calcul d'angle selon la revendication 1, dans lequel :
la deuxième unité de calcul (32) est un circuit intégré spécifique à une application qui délivre une sortie prédéterminée en réponse à une entrée spécifique ; et
la première unité de calcul (31) est un micro-ordinateur qui lit un programme stocké dans une unité de stockage et réalise un calcul sur la base du programme.

3. Dispositif de calcul d'angle selon la revendication 1, dans lequel la deuxième unité de calcul (32) est configurée pour détecter la rotation du moteur lorsqu'une différence entre une valeur de tension d'un signal de détection de courant détectée par l'unité de détection et une valeur de tension d'un signal de détection immédiatement précédent détectée par l'unité de détection est égale ou supérieure à une valeur de seuil.

4. Dispositif de calcul d'angle selon l'une quelconque des revendications 1 à 3, dans lequel la deuxième unité de calcul (32) est configurée pour calculer par intermittence les informations de nombre de tours lorsque le commutateur de démarrage est désactivé, et pour calculer par intermittence les informations de nombre de tours dans un cycle (Toff1) qui est plus long qu'un cycle (Ton) dans lequel les informations de nombre de tours sont calculées lorsque le commutateur de démarrage est activé.
